Europäisches Patentamt

European Patent Office

Office européen des brevets

(19)

(11) **EP 1 271 366 A1**

(12) **EUROPEAN PATENT APPLICATION**
published in accordance with Art. 158(3) EPC

(43) Date of publication:
　**02.01.2003 Bulletin 2003/01**

(51) Int Cl.⁷: **G06F 17/60**

(21) Application number: **00953459.5**

(86) International application number:
　**PCT/JP00/05500**

(22) Date of filing: **17.08.2000**

(87) International publication number:
　**WO 01/013294 (22.02.2001 Gazette 2001/08)**

(84) Designated Contracting States:
　**AT BE CH DE FR GB LI**

(30) Priority: **18.08.1999　JP　23201999**
　　　　　　**30.09.1999　JP　27906699**
　　　　　　**31.03.2000　JP　2000097501**
　　　　　　**11.08.2000　JP　2000243761**

(71) Applicant: **Kojima, Yusuke**
　**Takarazuka-shi, Hyogo 665-0817 (JP)**

(72) Inventor: **Kojima, Yusuke**
　**Takarazuka-shi, Hyogo 665-0817 (JP)**

(74) Representative: **Robinson, Ian Michael et al**
　**Appleyard Lees,**
　**15 Clare Road**
　**Halifax HX1 2HY (GB)**

(54) **ENERGY-SAVING ASSISTING METHOD AND SYSTEM FOR HOUSEHOLD**

(57)　A method and a system are provided which support reducing domestic energy consumption and contribute to widespread use of expensive energy conservation support devices and home energy generators. The system comprises a device installation supporting portion (NK1) for obtaining and displaying information about a model to be installed and installation timing in accordance with a device list concerning an energy conservation support device having energy conservation effect of reducing energy consumption, an energy conservation effect managing portion (NK2) for determining and displaying energy conservation effect record in accordance with a measured value of the energy consumption at home after installing the energy conservation support device, an energy conservation control portion (NK3) for executing energy conservation control for increasing energy conservation effect when the energy conservation effect record is less than a predetermined value, and a payment process portion (NK4) for executing a process or issuing an instruction for depositing a payment amount of amortization payment for a facility cost of the installed energy conservation support device in a predetermined account. Thus, a solar cell can be used widely at home with zero initial investment.

FIG.4

1

KN1 — DEVICE INSTALLATION SUPPORT FUNCTION

KN2 — ENERGY CONSERVATION EFFECT MANAGEMENT FUNCTION

KN3 — ENERGY CONSERVATION CONTROL FUNCTION

KN4 — PAYMENT PROCESS FUNCTION

EP 1 271 366 A1

**Description**

FIELD OF THE INVENTION

The present invention relates to a method and a system for supporting domestic energy conservation, i.e., for reducing consumption of energy such as electricity, gas and/or a water supply consumed at home.

DESCRIPTION OF THE PRIOR ART

An energy consumption of an electric appliance such as a refrigerator or an air conditioner has been decreasing year after year thanks to a strong concern of consumers and technology developments by devoted manufacturers. However, total energy consumption in an average home is still increasing due to the widespread use of new home appliances such as a home computer or a digital audiovisual device, or a change in a life style.

The reduction of fossil energy and the promotion of alternative energy sources have been controversial for a long time from a viewpoint of preventing not only exhaustion of the fossil energy but also the global warming. However, the effort to realize them is still insufficient. The ratio of the domestic energy consumption to the total energy consumption is not as large as industrial and transportational energy consumption, but the effort to reduce the domestic energy consumption is not sufficient compared with the effort to reduce the industrial and transportational energy consumption.

Conventionally, the standard of thermal insulation in houses is raised and the energy conservation standard of home appliances has been established in the national level and measures to support them have been installed. In addition, the energy conservation technology in home appliances has been progressed largely. Although these energy conservation effect can be obtained when a new house is built or a new home appliance is purchased, it cannot be obtained in most families who live in the conventional houses and use conventional home appliances. Only some consumers concerned about the energy conservation have been making effort. In the "Long term energy demand outlook" that is the official project in Japan, the industrial and transportational energy consumption is expected to shift to decrease in 2010, while the domestic energy consumption is expected to continue increasing even if it is taken into account that a home energy generator such as a home solar-electric power generator will become commonplace.

Furthermore, various energy conservation devices have been developed and are installed in some houses for reducing consumption of electric power and/ or gas. They include, for example, a double-glazed window having high thermal insulation effect and an under-floor heater having a high efficiency. Other energy conservation devices are also proposed including a water-saving bathtub step disclosed in Japanese unexamined patent publication No. 10-192180 or a device for utilizing hot water in a bathtub after taking bath disclosed in Japanese unexamined patent publication No. 10-227465.

However, these energy conservation devices are not used widely or not commercialized yet because they are expensive for installing. In addition, even if the energy conservation device is installed in a house, the energy conservation effect thanks to the device is hardly grasped.

As one of the alternative energy sources for the commercial power depending much on the fossil energy, wide use of a home energy generator such as a solar-electric power generator is promoted. In order to reduce initial cost that each family have to bear, the government-subsidized system is put into operation. However, since this type of home energy generator is so expensive that a typical family cannot afford it even if the government-subsidized system is taken into account.

As explained above, conventionally a general family has not been making an effort to manage the domestic energy consumption correctly and to reduce the consumption, and a system to support such an effort is next to nothing. Without limiting to the energy conservation effort in the conventional national level or the energy conservation effort of the manufacturers, a system is desired for a general consumer to make effort of the energy conservation in cooperation with the government and the manufacturers. Many energy conservation devices are proposed and some of them are commercialized, but the energy conservation effect after installing the device is not checked concretely. In addition, the effort for promoting wide use of the expensive energy conservation device or the home energy generator as well as the effort to reduce the cost of them is not sufficient.

Furthermore, compared with a facility of a factory or other places, energy consumption of a general family varies largely due to factors such as a family structure or lifestyles of family members, so it is difficult to set an appropriate consumption target. In addition, the weather variation causes the variation of air conditioning energy that constitutes a large ratio of the total variation of the energy consumption. Moreover, since a typical family consumes plural energies including electric power and gas, it is necessary to grab and manage the energy consumption thereof totally.

In general, it is difficult to keep continuous effort for matters such as environmental issues, which is uncertain in the future or in which the contribution of an individual is so small. In order to keep the continuous effort, it is necessary that the result of the individual effort can be seen, and the economical effect should be considered. It is a large task how a general family is equipped with a solar energy utilizing devices that has sufficient utility technically but is not used widely because of the high cost and low cost effectiveness.

## SUMMARY OF THE INVENTION

An object of the present invention is to provide a method and a system for supporting domestic energy conservation, which support reducing domestic energy consumption and contribute widespread use of an expensive energy conservation support device and a home energy generator.

Especially, one of objects of the present invention is to promote widespread use of a solar energy using device that cannot be used widely at present because it is expensive.

In an embodiment of the energy conservation supporting method according to the present invention, the method comprises the steps of memorizing an energy conservation table including items of energy conservation means effective at reducing the energy consumption and their effects in advance by using a home computer, entering energy consumption of each month during one or more years in the past, estimating energy consumption by usage in each month in accordance with the variation of the energy consumption in each month, selecting a plurality of effective energy conservation means from the energy conservation table in accordance with the energy consumption by usage so as to display the selected energy conservation means, setting a target value of the energy consumption obtained by subtracting energy conservation prediction quantity by the selected energy conservation means from the energy consumption in the past, detecting an energy consumption measured value using means for entering a measured value of the integrating meter for the energy consumption automatically, and comparing the target value with the measured value for evaluation.

Since the energy consumption by usage such as for lighting and power or for air conditioning can be estimated from the variation of the energy consumption of each month in the past, the state of the energy consumption in each family can be grabbed concretely. Then, plural effective energy conservation means are selected from the energy conservation means (the energy conservation devices and effort items) cumulated as a database and are displayed, so that an appropriate energy consumption target value can be set in which energy conservation prediction quantity (energy conservation effect) due to the selected energy conservation means is taken in account.

As the above-mentioned energy conservation means are preferably classified into means for performing energy conservation by installing an energy conservation device effective at reducing energy consumption and means for performing energy conservation by effort of family members without installing an energy conservation device so as to be included in the energy conservation table.

Preferably, a target value is determined from the target value of the present month, a measured value is detected every day, and comparison of the target value with the measured value is performed every day. For example, the consumption target value of a day can be calculated from the energy consumption target value of the present month by prorated daily basis calculation. However, if the consumption target value of a day is calculated only by the prorated daily basis calculation, there is a case where validity of the target value is lost, e.g., when the target value changes rapidly at the boundary of months or due to weather condition. In this case, it is preferable to correct the target value.

Especially, since weather change has a large influence, weather forecast may be obtained regularly everyday, and if it differs from average atmospheric temperature by a predetermined value, the variation may be corrected.

In daily comparison and evaluation, it is preferable to display a cumulative value obtained by cumulating the difference between the daily target value and the daily measured value from the first day of the present month. Preferably, the method further comprises the step of displaying an action guide including means for performing the energy conservation by effort of the family members from the energy conservation table so as to encourage effort of the energy conservation when the cumulative value is negative and the absolute value thereof exceeds a first threshold value.

More preferably, the method comprising the step of executing forced energy conservation of predetermined equipment when the cumulative value is negative and the absolute value thereof exceeds a second threshold value that is larger than the first threshold value. Namely, in the above-mentioned step of displaying the action guide, the action guide including the means for executing the energy conservation is merely displayed on the display device for urging effort of energy conservation, while human being performs the means. In contrast, in the step for executing forced energy conservation, the computer decides the necessity and selects energy conservation means, and forces the execution. For example, the computer may cut off power supply to a television set or an air conditioner or change set temperature of the air conditioner if possible. This is a measure that puts a higher priority on energy conservation than on comfort.

The above-mentioned step for executing the forced energy conservation such as stopping power supply to equipment can be performed only during a predetermined time slot, e.g., during a bedtime. Thus, deterioration of comfort can be relieved.

An apparatus for supporting domestic energy conservation performing the above-mentioned method according to the present invention comprises a storage device for storing energy conservation table including items of energy conservation means effective at reducing the energy consumption and their effects in advance, an input device for entering energy consumption of each month during one or more years in the past, a consumption-by-usage estimating portion for estimating energy consumption by usage of each month in accordance with the variation of the energy consumption in each month, an energy conservation means selecting portion for selecting a plurality of effective energy conservation means from the energy conservation table in accordance with the energy consumption by usage, and a target value setting portion for setting a consumption target value by subtracting the energy conservation prediction quantity of the selected energy conservation means from the energy consumption by usage.

The apparatus further comprises a day target value setting portion for setting a consumption target value of a day from the energy consumption target value by usage of the present month, a consumption detecting device for detecting a day energy consumption measured value, and a comparing portion for comparing the target value with the measured value. The consumption detecting device preferably includes an energy consumption detector for detecting total consumption of electric power, gas and water supply by energy type, and an energy consumption detector by equipment for detecting individual energy consumption of equipment that consumes much energy particularly.

In addition, it is also preferable the apparatus further comprises a communication device for obtaining weather information regularly via a network, and a target value correcting portion for correcting the target value in accordance with the weather information.

In addition, the forced energy conservation performing device preferably includes a timer and executes the forced energy conservation such as stopping electric power supply only in a predetermined time slot.

In an embodiment of a recording medium that records domestic energy conservation supporting software according to the present invention, the recording medium records a program comprising the steps of (a) memorizing an energy conservation table including items of energy conservation means effective at reducing the energy consumption and their effects in advance, (b) entering energy consumption of each month during one or more years in the past, (c) estimating energy consumption by usage in each month in accordance with the variation of the energy consumption in each month, (d) selecting a plurality of effective energy conservation means from the energy conservation table in accordance with the energy consumption by usage so as to display the selected energy conservation means, (e) setting a target value of the energy consumption obtained by subtracting energy conservation prediction quantity by the selected energy conservation means from the energy consumption by usage, (f) calculating a day consumption target value from an energy consumption target value by usage of the present month and setting the result, obtaining weather forecast regularly every day if necessary, correcting a variation if differing from an average atmospheric temperature by a predetermined value, (g) detecting a day energy consumption measured value; and, (h) comparing the target value with the measured value for evaluation.

According to another embodiment of the energy conservation supporting method of the present invention, the method comprises the steps of converting a consumption target value of each energy type into a lighting/heating cost that is a common unit, calculating a target lighting/heating cost corresponding to a total sum of plural energy consumption target values, converting a consumption measured value of each energy type into the lighting/heating cost, calculating a recorded lighting/heating cost corresponding to a total sum of plural energy consumption measured values, and comparing the target lighting/heating cost with the recorded lighting/heating cost for evaluation.

According to this configuration, consumption of plural energy types such as electric power or gas can be evaluated as a whole by the converted amount, so the variation of the energy consumption can be grabbed easily as a balance in a family budget. Furthermore, in a family where both electric power and gas are used for air conditioning for example, energy consumption can be managed as a whole avoiding inconvenience of managing the energy consumption individually.

In still another embodiment, the method further comprises the steps of using an integrating meter reader for reading a displayed value of an integrating meter of energy for grabbing energy consumption of a specific energy consuming equipment, operating the energy consuming equipment while other equipment consuming the energy is maintained in a constant operating/non-operating state, and reading the displayed value of the integrating meter with the integrating meter reader at a predetermined time interval so as to store the read value in a storage device.

According to this configuration, even in the case where a family lives in a newly built house or moves to another house, the target lighting/heating cost can be set as appropriately as possible. Namely, only an electric air conditioner in one room is operated under a predetermined condition among plural rooms, for example. Then, the displayed value of the electric power integrating meter is read every ten minutes after starting the operation in the test mode. In this way, general electric power consumption of the air conditioner under a predetermined condition can be grabbed. This test mode is performed for large energy consuming equipment, and the target cost lighting/heating cost may be set in accordance with the result.

According to another embodiment of the energy conservation supporting method of the present invention, an energy conservation supporting method using a computer for reducing consumption of energy such as electric power, gas and/or water supply used at home is provided. The method comprises the steps of calculating reduced portion of expenses obtained by energy conservation effect of the energy conservation support device when installing an energy conservation support device having energy conservation effect of reducing energy consumption in a house, calculating a payment amount of amortization payment for facility cost when the energy conservation support device is installed, comparing the reduced portion of the expenses with the payment amount, and displaying the comparison result for supporting the decision of whether the energy conservation support device should be installed or not.

Preferably, the method further comprises the steps of memorizing an energy conservation table or a device list including plural energy conservation support device items, their energy conservation effects and facility costs in advance, entering energy consumption of each month during one or more years in the past, estimating energy consumption by usage in each month in accordance with variation of the energy consumption in each month, and selecting an effective energy conservation support device from the energy conservation table in accordance with the energy consumption by usage so as to install the device.

According to another embodiment of the present invention, the method comprises a first step for determining an energy conservation support device that can be expected a predetermined target value as an energy conservation effect and for installing the determined energy conservation support device, and a second step for determining a second target value of energy conservation effect due to both the energy conservation support device installed in the first step and the additional energy conservation support device to be installed, and for installing the additional energy conservation support device at the time point when amortization period of facility cost for the energy conservation support device to be installed becomes a predetermined period or less by reduction of the expenses obtained by the energy conservation effect or at the time point determined by support of another time point selection supporting means.

Moreover, it is preferable that the method further comprises a third step for determining a third target value of energy conservation effect due to all the energy conservation support devices installed in the first step and the second step and a still additional energy conservation support device to be installed, and for installing the still additional energy conservation support device at the time point when amortization period of facility cost for the energy conservation support device to be installed becomes a predetermined period or less by reduction of the expenses obtained by the energy conservation effect or at the time point determined by support of another time point selection supporting means.

The payment for a facility cost of the energy conservation support device can be started by amortization payment from each installation timing. Thus, the initial investment can be zero, and the energy conservation support device can be installed easily.

The method may further include the steps of dividing the energy conservation effect into a portion allocated to the payment for the facility cost and a portion allocated to payback to a family budget, and depositing online the portion allocated to the payment for the facility cost in a predetermined account.

In this case, the payment amount of the amortization payment for the facility cost corresponds to the reduced portion of expenses due to the energy conservation effect. In addition, if there is energy conservation effect exceeding the target value due to energy conservation effort of family members, the remained portion after allocating to the payment for the facility cost is paid back to the family budget. In this way, more energy conservation effort can be expected.

The above-mentioned predetermined period may be five to seven years. This is a period that may be considered economical for family when taking life of the energy conservation support device in account.

Preferably, the method further comprises the steps of obtaining weather information regularly via a network, and correcting the target value in accordance with the weather information.

It is possible to predict generation quantity of energy generated by the energy conservation support device using solar energy in accordance with duration of sunshine and atmospheric temperature included in the weather information. Thus, heat storage quantity of a water heater using midnight electric power can be adjusted.

More preferably, the method further comprises the step of transmitting data of energy consumption at home concerning the measured value and the target value or the target achievement ratio externally every month.

For example, a center receives and manages data from each family intensively, so that the center can grab the state of energy conservation effect in a region or in the entire country.

According to an the embodiment of the present invention, a system comprises a device installation supporting portion for obtaining and displaying information about a model to be installed and installation timing in accordance with a device list concerning an energy conservation support device having energy conservation effect of reducing energy consumption, an energy conservation effect managing portion for calculating and displaying energy conservation effect record in accordance with a measured value of energy consumption at home after installing the energy conservation support device, an energy conservation control portion for executing energy conservation control so as to increase energy conservation effect when the energy conservation effect record is lower than a predetermined value, and a payment process portion for executing a process or issuing an instruction for depositing a payment amount of amortization payment for a facility cost of the installed energy conservation support device in a predetermined account.

In the present invention, the energy conservation support device includes an energy conservation device and a home energy generator. The energy conservation device is equipment having energy conservation effect of reducing energy consumption at home though it does not generate energy by itself. The home energy generator is equipment or a device that generates energy in a form that can be used at home and generates energy conservation effect at home as a result. The home energy generator includes a solar energy using device such as a solar cell (a solar power generator) and a solar water heater, an aerogenerator, a fuel cell and a micro turbine.

In the first step, the energy conservation device is mainly installed. The energy conservation device is relatively inexpensive and has high economic efficiency of the facility compared with a home energy generator such as a solar energy using device. Furthermore, it is preferable to select also the energy conservation effort items of the energy conservation table as many as possible with consensus of family members.

In the second step, a medium scale home energy generator such as a solar water heater is mainly installed. In the third step, a large scale home energy generator such as a solar cell is mainly installed. By delaying the installation of the large scale home energy generator in the later step, it is expected that a price thereof will be lowered due to widespread use.

The fuel cell or the micro turbine is preferably used in the case of living environment where the solar energy using device cannot be installed, for example.

The energy conservation effect is effect that can be obtained when energy consumption at home is reduced as a whole. The effect of the energy conservation effort is added to the energy conservation effect, of course. The energy conservation device does not generate energy, but energy consumption can be reduced by using it. The home energy generator generates energy, so the consumption is reduced by the quantity corresponding to the generated energy.

The energy conservation effect is evaluated as reduced quantity of expenses such as for electric power, for gas or for water supply.

BRIEF DESCRIPTION OF THE DRAWINGS

Fig. 1 shows an example of a house using a supporting system according to an embodiment of the present invention.

Fig. 2 is a block diagram showing an example of a supporting system.

Fig. 3 is a flowchart of the entire process of the energy conservation support using the supporting system.

Fig. 4 is a block diagram showing main functions of the supporting system.

Fig. 5 is a flowchart showing an example of the process of the device installation support function.

Fig. 6 is a flowchart showing an example of the process of the energy conservation effect management function.

Fig. 7 is a flowchart showing an example of the process of the energy conservation control function.

Fig. 8 is a flowchart showing an example of the process of the payment process function.

Figs. 9A and 9B are diagrams for explaining a method for determining installation timing.

Figs. 10A-10C show an energy conservation effect and amortization payment amount in each step.

Fig. 11 shows an energy conservation effect and amortization payment amount in each step of another example.

Fig. 12 shows steps of installing energy conservation support devices.

Fig. 13 is a general flowchart showing a process in the first step by energy conservation supporting software.

Fig. 14 is a general flowchart showing a process in the first step by energy conservation supporting software.

Fig. 15 is a graph showing electric power consumption in each of the past months that is entered.

Fig. 16 is a graph showing gas consumption in each of the past months that is entered.

Fig. 17 is a table showing the relationship between the variation of water temperature and a coefficient k that is used for proportional calculation of gas consumption for bath, for utility water and for kitchen in each month.

Fig. 18 is a table showing an example of the energy conservation device.

Fig. 19 is a table showing an example of items of energy conservation efforts.

Fig. 20 shows an example of a display in a graph about a target value in each day of the present month and a measured value, as well as a cumulative value of the difference between the target value and the measured value.

Fig. 21 is a table showing another example of the energy conservation device.

Fig. 22 is a table showing another example of items of energy conservation efforts.

Fig. 23 shows an example of a table of a solar water heater.

Fig. 24 shows an example of a table of a solar cell.

Fig. 25 shows an example of a table of electric power quantity generated by a solar cell in each month and correction values thereof.

Fig. 26 shows installation cost and power generation cost of a solar cell.

Fig. 27 shows use forms of energies by usage.

Fig. 28 is a general flowchart showing an example of a process executed by energy conservation supporting software.

Fig. 29 is a detail flowchart showing a process of setting target lighting/heating cost for each month and then setting target lighting/heating cost for each day.

Fig. 30 is a graph showing an example of the correlation between an expected atmospheric temperature and energy consumption.

Fig. 31 is a graph showing an example of variation of the energy consumption per unit time in each time slot of a day.

Fig. 32 is a graph showing an example of variation of a cumulative consumption of the energy in the time scale.

Fig. 33 is a flowchart showing a process in a test mode.

DESCRIPTION OF THE PREFERRED EMBODIMENTS

[General Explanation]

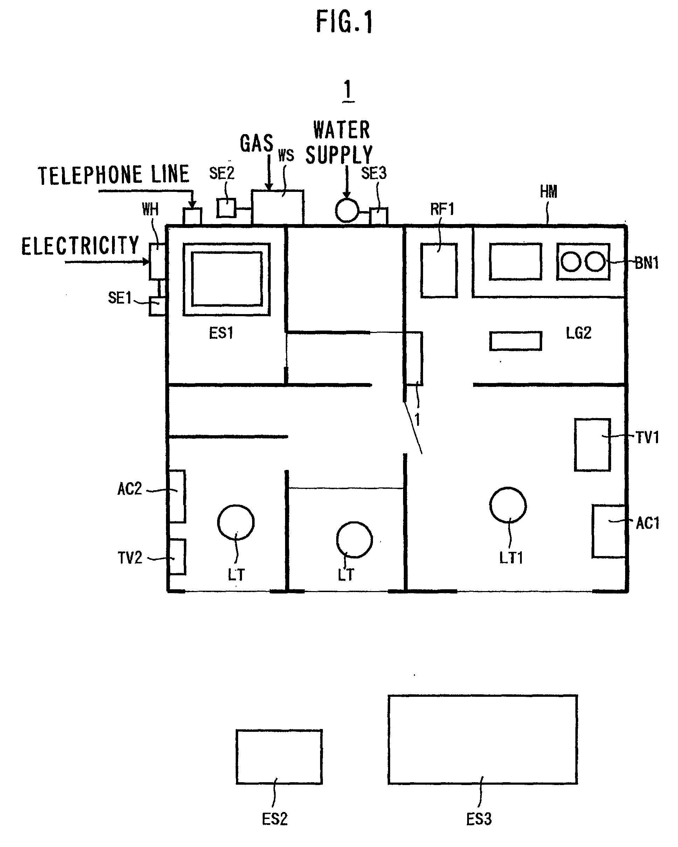

In Fig. 1, a house HM is supplied with electric power, gas and water. Consumption of each utility is measured by integrating meter installed by the utility supplier, i.e., an integrating wattmeter, an integrating gas meter and an integrating water meter.

Detectors SE1-SE3 read the consumption electrically or optically and transmits the measured value (the measured data) by a wired or a wireless transmission system to a supporting system 1 that will be explained later. The detectors SE1-SE3 can be made by combining an optical reader, an optical character reader (OCR) and others as shown in Japanese unexamined patent publication NO. 7-105306.

The house HM is equipped with electric appliances including an air conditioner AC, a television set TV, a refrigerator RF and lighting fixtures LT, gas appliances including a gas water heater WS and a gas cooker BN, and water taps (not shown). Such an electric appliance or equipment may be referred to as "energy consuming equipment". The energy consuming equipment consumes energy such as electric power, gas, or water supply.

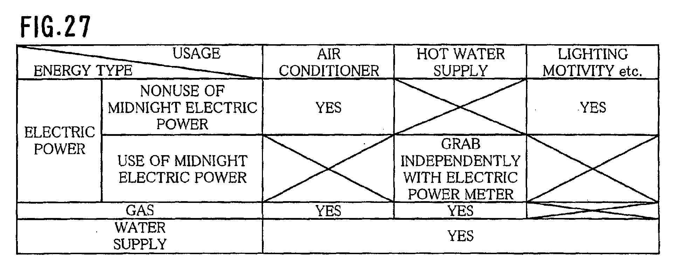

The water supply is also included in "energy" because much energy is consumed for maintaining the water supply facilities and sewerage facilities and each family bears the cost as utility fee in the same way as the electric power or the gas. Use forms of the energies by usage are shown in Fig. 27.

A bath in the house HM is provided with a bathtub step ES1 installed in the first step as being described later. A roof of the house HM is equipped with a solar water heater ES2 installed in the second step and a solar cell ES3 installed in the third step.

In addition, the house HM has an incoming telephone line, which is used for connection with various networks, servers or communication equipment.

[Explanation of Supporting System 1]

The supporting system 1 is a computer for supporting reduction of energy that is consumed in the house HM.

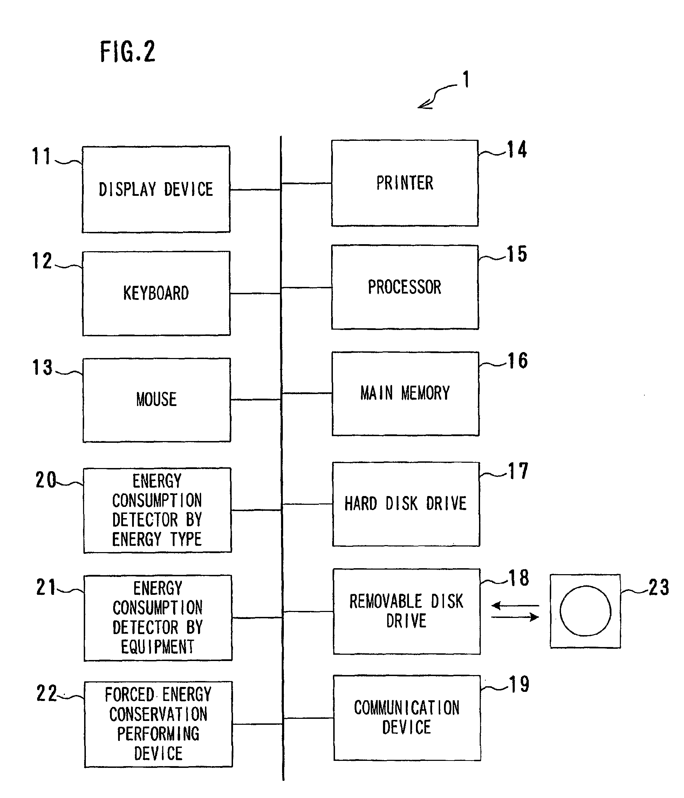

As shown in Fig. 2, the supporting system 1 comprises a display device 11, a keyboard 12, a mouse 13, a printer 14, a processor 15, a main memory 16, a hard disk drive 17, a removable disk drive 18, a communication device 19, an energy consumption detector by energy type 20, an energy consumption detector by equipment 21, a forced energy conservation performing device 22 and other various interfaces.

The display device 11 can be a liquid crystal display (LCD) or a cathode ray tube (CRT) and is used for various displays including displays for inputting energy consumption data and various setting and displays of an energy conservation action guide and an energy conservation effect. The keyboard 12 and the mouse 13 are used for inputting data and for various setting. The printer 14 is used for printing graphs showing target values of energy consumption and transition of measured values that are displayed on the display device 11.

The processor 15 processes the input data in synchronization with energy conservation supporting software (a program) that will be explained later and outputs the result to the display device 11 or the printer 14. Thus, various functions KN1-KN4 are realized as being explained later.

The main memory 16 is a semiconductor memory that is used for loading a program executed by the processor 15 and for memorizing the input data. The supporting system 1 in this embodiment has the hard disk drive 17 and the removable disk drive 18 as auxiliary storage devices. The hard disk drive 17 is used for storing the program and the data. The removable disk drive 18, which is used mainly for initial load of the program and backup of data, can be an optical disk drive or a magneto optical disk drive.

The communication device 19 is used for acquiring various information via the Internet or other networks. For example, the latest information about specifications and prices of available energy conservation support devices and the latest weather information can be acquired via the Internet or other networks. The communication device 19 is also used for online banking for depositing or paying amortization for the energy conservation devices.

The energy consumption detector by energy type 20 detects energy consumption by energy type in accordance with data received from the detectors SE1-SE3.

The energy consumption detector by equipment 21 detects consumption of electric power, gas or water supply of each of large apparatuses such as a refrigerator, a television set, an air conditioner or a water heater, which consumes relatively much energy. For electric power for example, a non-contact type current detector can be used for detecting current, so that the power consumption can be estimated by multiplying the detected current, the voltage and the power factor. Some types of the non-contact type current detectors, e.g., an electromagnetic type and a Hall device type are commercialized. For gas or water supply, a flowmeter can be inserted in a supplying branch conduit so that the consumption can be detected. The above-mentioned non-contact type current detector or the flowmeter is provided for each of the large appliances so as to constitute the energy consumption detector by equipment 21.

The forced energy conservation performing device 22 is inserted in the power supplying line of a television set or an air conditioner for example for stopping the power supply forcedly. It can be used in a combination with a time switch so as to enable or disable the power supply during a predetermined time slot. Furthermore, if temperature or air volume of the air conditioner can be set by control of the processor 15, means for performing the setting are included in the forced energy conservation performing device 22. If temperature or air volume of the air conditioner can be set by using an ultraviolet remote controller, an adapter device may be made as the energy conservation performing device 22 by combining the function similar to the ultraviolet remote controller with the function of communication with the processor 15.

The above-mentioned supporting system 1 can be constituted by using a usual computer system (especially, a personal computer system) and specialized energy conservation supporting software (a program), and if necessary the special devices including the energy consumption detectors by energy type 20, the energy consumption detectors by equipment 21 and the forced energy conservation performing devices 22. In addition, a specially made thin computer that can be hung on a wall may be used for constituting the supporting system 1.

The energy conservation supporting software is provided in a form recorded in a storage medium 23 such as a CD-ROM, so as to be installed in the hard disk drive 17 via the removable disk drive 18. However, other forms can be used. For example, the software to be executed can be downloaded from another computer connected via the communication device 19 or from a server on a network. Alternatively, the software can be integrated in a microcomputer chip.

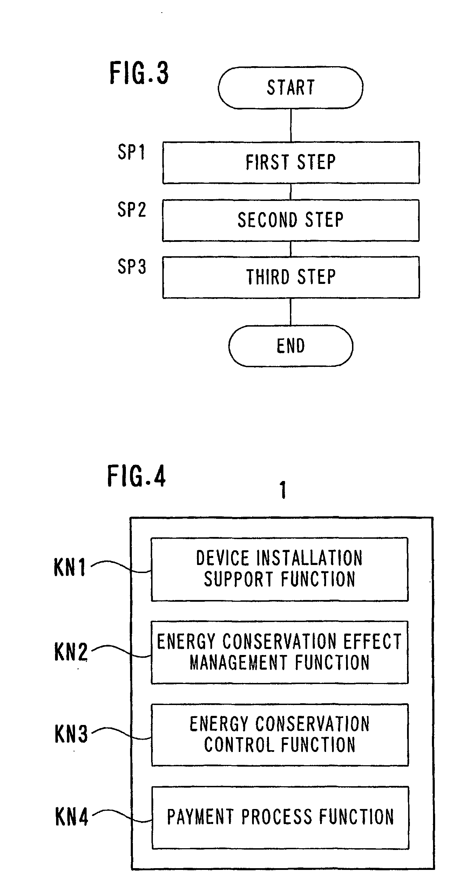

As shown in Fig. 3, the supporting system 1 is used for performing the first step SP1, the second step SP2, and the third step SP3.

In these steps SP, an energy conservation support device is installed, i.e., a type is selected and installed, energy conservation effect of the installed energy conservation support device is managed, energy conservation control for improving the energy conservation effect is performed if necessary, and amortization payment of the device is performed online. These functions of the supporting system 1 are shown in Fig. 4.

Moreover, the type of the energy conservation support device in a step SP is different from that in another step SP.

Namely, the energy conservation support devices include the energy conservation device and the home energy generator. The energy conservation device is used for obtaining energy conservation effect. The home energy generator is used for generating energy in a form that can be used at home, resulting in energy conservation effect. The home energy generator can be a solar energy using device such as a solar cell or a solar water heater, an aerogenerator, a fuel cell and a micro turbine.

In the first step SP1, an energy conservation device is a main target of installation, because the energy conservation device is relatively inexpensive, has a high economic efficiency, and is easy to install. In the second step SP2, a middle scale home energy generator such as a solar water heater is a main target of installation. In the third step SP3, a large scale home energy generator such as a solar cell is a main target of installation. A fuel cell or a micro turbine is installed in the case of a house environment where the solar energy using device cannot be installed.

As shown in Fig. 4, the supporting system 1 has a device installation support function KN1, an energy conservation effect management function KN2, an energy conservation control function KN3, a payment process function KN4 and other functions.

In the first step SP1, energy consumption in the past one year or a few years is entered first. For example, an energy payment record is entered, a conversion table of the energy fee is memorized in advance, an average measured value of the energy consumption in each month is determined, and the energy consumption by usage is estimated from variation of the energy consumption in each season, as being explained later. In accordance with this estimation, an energy conservation support device can be selected.

The device installation support function KN1 is a function for supporting the user to decide of which type and on which timing to install an energy conservation support device. The device installation support function KN1 shows choices of the energy conservation support device to be selected and predicted values of energy conservation effect due to the choices.

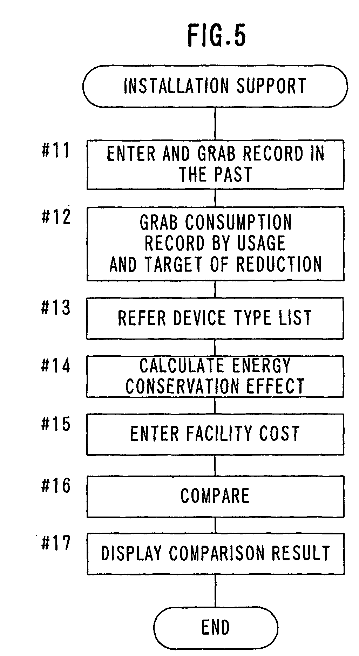

As shown in Fig. 5, a measured value in the past is entered first (in the case of the first step), or the record in the past is grabbed (in the case of the second and the third steps) (#11). Consumption records by usage are grabbed (in the case of the first step), or the target of reduction is grabbed (in the second and the third steps) (#12).

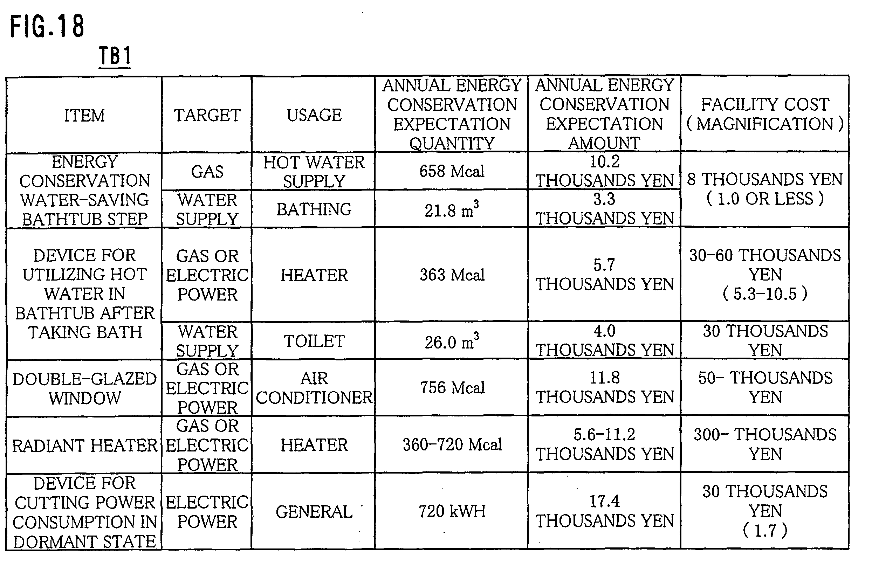

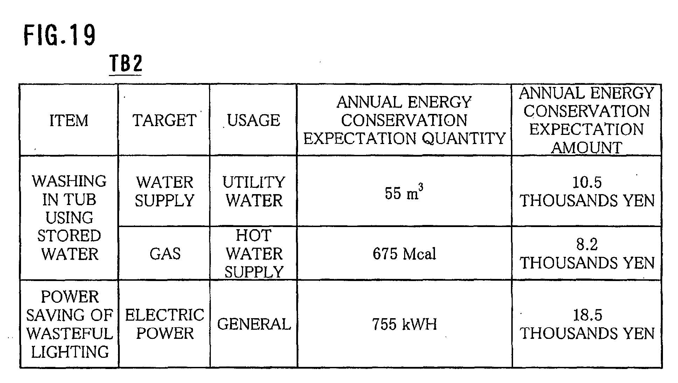

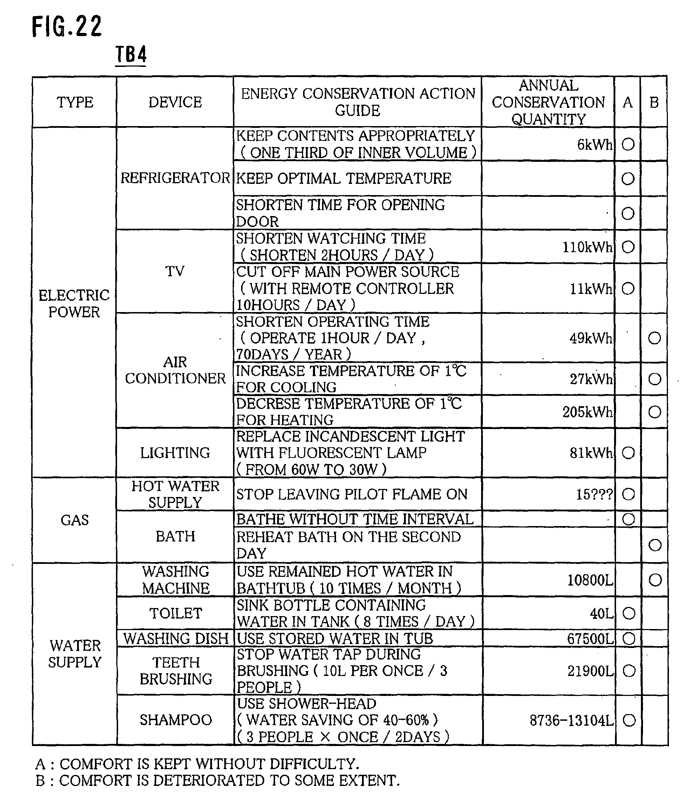

The specifications of various energy conservation support devices are referred (#13). On this occasion, tables TB1, TB3, TB5 and TB6 shown in Figs. 18, 21, 23 and 24 are referred to. In addition, tables TB2 and TB4 about items of the energy conservation efforts shown in Figs. 19 and 22 are referred, so that the energy conservation efforts are added. It is desirable that a whole family joins the consultation so as to add as many items as possible.

Then, the energy conservation effect when the energy conservation support device is installed is calculated including the effect of the energy conservation effort (#14). On this occasion, the energy conservation effect is calculated as a reduced portion of the expense, e.g., a reduced portion of an electric power fee due to the same.

A facility cost when the energy conservation support device is installed is entered, and the payment amount of the amortization payment is calculated (#15).

The reduced portion of the expense is compared with the facility cost (#16). On this occasion, type selection logic for selecting a type and timing selection logic for determining installation timing are used. The comparison result is displayed as the predicted value for supporting the decision whether the energy conservation support device should be installed or not (#17).

As the predicted value for example, energy reduced quantity due to the predicted energy conservation effect, reduced quantity of the expenses in a year (energy conservation expectation amount) due to the energy conservation effect, the facility cost of the energy conservation support device or the amortization payment amount thereof and a ratio of the facility cost to the energy conservation expectation amount (magnification) T are shown.

The magnification T of the facility cost to the energy conservation expectation amount indicates how many years it takes for the facility cost of the energy conservation support device pay for itself by the energy conservation effect.

In addition, it is indicated what percentage of the energy consumption have to be reduced so that the energy conservation effect can finance the amortization payment amount of the facility cost of the energy conservation support device as the predicted value.

Moreover, it is indicated from when the energy conservation effect can finance the amortization payment amount of the facility cost of the energy conservation support device and the installed energy conservation support device, i.e., when the energy conservation support device can be installed.

Moreover, it is indicated how much amount can be reduced to the housekeeping when energy conservation effect exceeding the target value is generated as the energy conservation support device is installed.

In this way, a type of the energy conservation support device to be a candidate of installation and the installation timing are displayed. The user decides whether the energy conservation support device should be installed or not, decides the type of the energy conservation support device to be installed, and decides the installation timing.

When calculating the predicted value of the energy conservation effect, the energy conservation effect being expected due to the installation of the energy conservation support device is subtracted from the measured value of the energy consumption by usage in one year or a few years in the past, so that the consumption target value by usage is obtained. Each usage is added for each energy type, so that the consumption target value (consumption target value) of each energy type is obtained.

This consumption measured value and the consumption target value are also converted into an amount by adding an average price rate of the monthly usage range and are memorized as price data, too.

The consumption target value by usage is obtained from the consumption measured value by usage here. However, instead of the consumption measured value by usage, the consumption measured value by energy type can be used for calculating the consumption target value.

Next, the energy conservation effect management function KN2 is a function in which after the energy conservation support device is installed, the consumption measured value of the energy consumption in a month or a day in the house HM is compared with the consumption target value, and it is shown how much effect is really obtained from the predicted energy conservation effect.

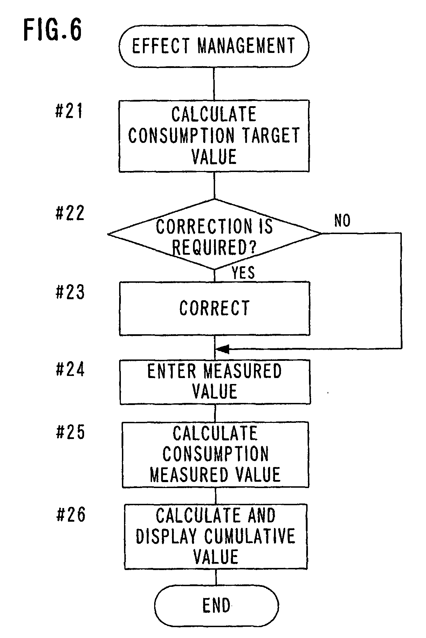

As shown in Fig. 6, the consumption target value is calculated (#21). If correction of the consumption target value is necessary, the correction is performed (#22 and 23). A measured value of consumption by energy type and a measured value of energy quantity generated by the home energy generator are entered (#24). In accordance with the entered measured value, the consumption measured value is calculated (#25). In order to show the record of the energy conservation effect, the consumption measured value is subtracted from the consumption target value so as to obtain the energy conservation measured value, for example, which is cumulated by month so as to obtain a cumulative value, and the cumulative value is displayed in a form such as a graph (#25).

If the cumulative value is positive, the energy conservation target is achieved. If the cumulative value is negative, the target is not achieved. Although energy can be a unit of the cumulative value, it is better to convert it into amount for easy understanding. The energy conservation includes saving water.

As the consumption target value, the consumption target value is used that is generated by the device installation support function KN1. However, in the energy conservation effect management function KN2, consumption target value is corrected in accordance with a weather condition (weather information) such as duration of sunshine for the day and the atmospheric temperature.

For example, if duration sunshine for the day is longer than a normal year, the electric power generated by the solar cell increases, and the temperature of the water heated by the solar water heater rises, so that the consumption target value can be lowered. If the atmospheric temperature is higher than a normal year, the temperature of the water heated by the solar water heater increases, and the room temperature is also apt to rise, so that the consumption target value can be lowered in the winter months and is raised in the summer months.

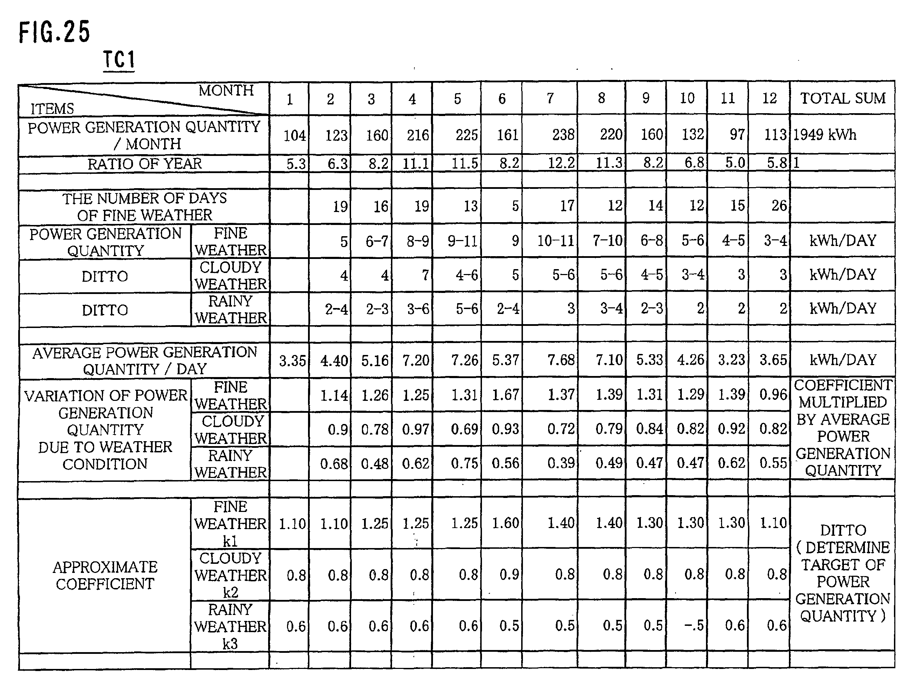

Furthermore, the power generation quantity of the solar cell is corrected in accordance with the weather condition after obtaining the average power generation quantity for the corresponding day from a table TC1 shown in Fig. 25, for example. When the power generation quantity corrected by duration of sunshine is determined, the consumption target value is corrected by increasing or decreasing the consumption target value by the portion corresponding to the power generation quantity.

As a concrete control, for example, in accordance with duration of sunshine and the atmospheric temperature, quantity of the hot water cumulated by the water heater utilizing an economy electric power at night in the previous day is adjusted.

By the energy conservation effect management function KN2, the above-mentioned correction and adjustment are performed.

The weather information is obtained periodically via the Internet or other networks. For example, in the web page related to Japan Meteorological Agency or in a specialised web page of an agent for this system, an average atmospheric temperature of recent three hours for each region is released at a certain time every day. The average atmospheric temperature is indicated by the deviation from the atmospheric temperature of a normal year. The data can be automatically downloaded.

The energy conservation control function KN3 performs an energy conservation control for raising the energy conservation effect in accordance with the extent that the record of the energy conservation effect is not as sufficient as expected.

Concerning an energy conservation control for example, an action that the user should take for raising the energy conservation effect when the above-mentioned cumulative value is negative and exceeds a first threshold value, i.e., when the energy conservation effect is insufficient, is shown as an energy conservation action guide (#31 and 32). If the cumulative value exceeds a second threshold value that is higher than the first threshold value, i.e., if the energy conservation effect is very insufficient to the target, an energy conservation forced execution for stopping the energy consuming equipment is performed (#33 and 34).

The payment process function KN4 is a function for transmitting a payment amount of the amortization payment for the facility cost of the installed energy conservation support device to a predetermined account online, or issuing the instruction for the transmission. It is also a function in which if the energy conservation effect exceeds the amortization payment amount, the excess amount is transmitted to an account designated by the user online or the instruction for the transmission is issued so that the excess amount is paid back to the family budget.

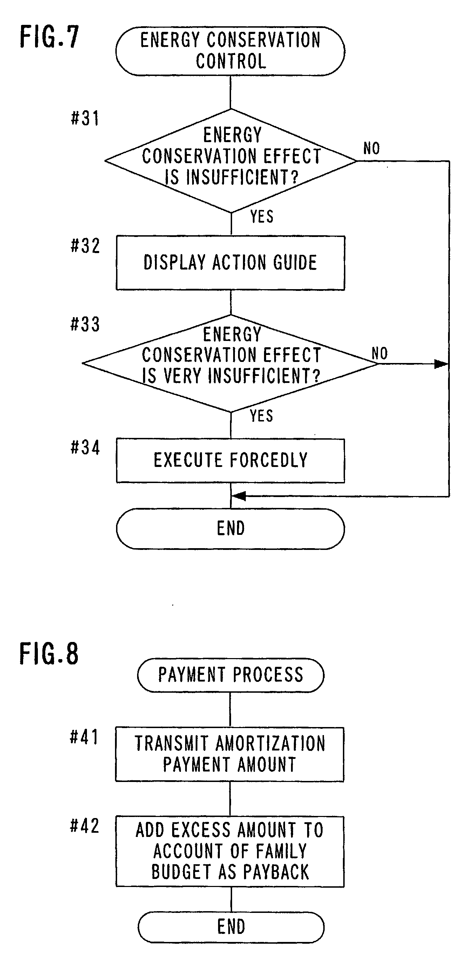

As shown in Fig. 8, the amortization payment amount of the facility cost of the energy conservation support device is transmitted on a predetermined due date, or the instruction for the transmission is issued (#41). If there is an excess amount due to the energy conservation effect, it is added to the account as a payback to the family budget, or the instruction for the payment is issued (#42).

It is also possible to use the payment process function KN4 of the supporting system 1 for paying the utility fee such as an electric power fee of each month or for instructing the payment. The account that is necessary for receiving or sending money can be opened by the name of the user or a person related to the user. Instead of receiving or sending the money directly, it is possible to issue an instruction for the reception or the transmission as mentioned above, or to give an approval for drawing the money.

[Installation Timing of the Energy Conservation Support Device]

Next, the installation timing of the energy conservation support device will be explained.

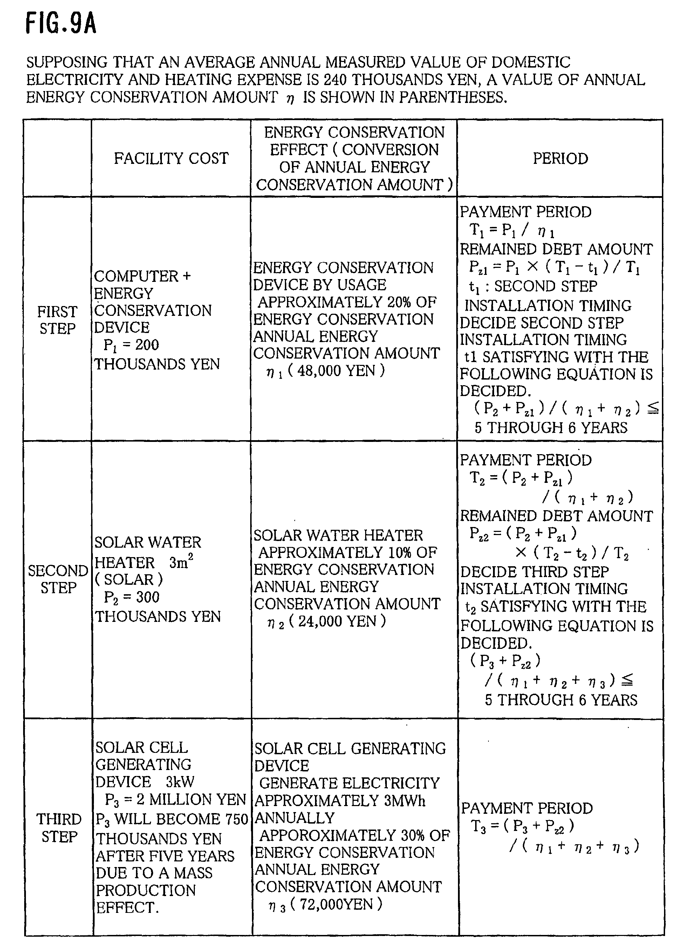

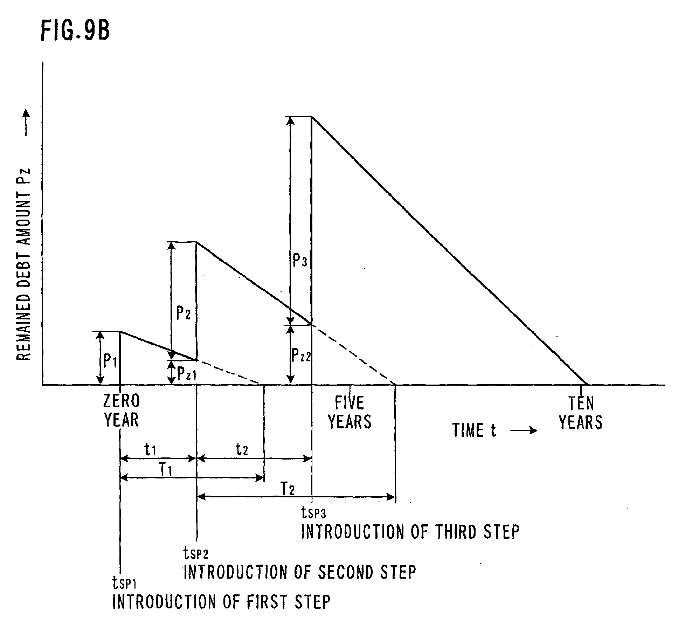

In Figs. 9A and 9B, the horizontal axis of a graph denotes the time (year and month) t, and the vertical axis denotes a remained debt amount Pz of the facility cost. The remained debt amount Pz is also referred to as an "investment amount", since the amount corresponding to it is invested as a facility cost.

First Step SP1

It is supposed that the installation timing tSP1 in the first step SP1 is zero year (t = 0).

First, in the first step SP1, the supporting system 1 is operated so as to display energy conservation support devices to be targets and predicted values of the energy conservation support devices. The user decides which energy conservation support device to be installed referring to the display. The decided energy conservation support device is actually installed.

A facility cost (a purchase price) of the energy conservation support device to be installed is denoted by P1. However, in the first step SP1, the supporting system 1 is installed along with the energy conservation support device, so the total amount of them is the facility cost. Here, the facility cost P1 is supposed to be 200 thousands yen.

It is supposed that the energy conservation effect due to the energy conservation support device to be installed is 20%. Namely, it is expected that 20% of the energy consumption will be reduced. Supposing that an average annual measured value of the domestic electricity and heating expense is 240 thousands yen, the reduced quantity (the energy conservation expectation amount) $\eta 1$ of the annual electricity and heating expense due to the energy conservation effect is ¥240,000 x 0.2 = ¥48,000.

The payment period T1 can be calculated by the following equation.

$$T1 = P1/\eta 1.$$

Here, it is approximately 4.2 years.

After that, the time t1 passes, and the remained debt amount Pz1 can be derived from the following equation.

$$Pz1 = P1 \text{ x } (T1 - t1)/T1.$$

Second Step SP2

Next, in the second step SP2, referring to a device list for the second step SP2, it is decided which energy conservation support device should be installed, in the same way as in the first step SP1.

A facility cost of the energy conservation support device to be installed is denoted by P2. Here, the facility cost P2 is supposed to be 300 thousands yen.

It is supposed that the energy conservation effect due to the energy conservation support device to be installed is 10%. The energy conservation expectation amount $\eta 2$ due to the energy conservation effect is ¥240,000 x 0.1 = ¥24,000.

The payment period T2 for all the installed energy conservation support devices can be derived from the following equation.

$$T2 = (P2 + Pz1)/(\eta 1 + \eta 2).$$

The installation timing tSP2 is set so that the payment period T2 is within a predetermined period, i. e., within five through six years, or within five through seven years.

Namely, supposing that the total amount of the remained debt amount Pz1 of the facility cost of the energy conservation support device installed in the first step SP1 and the facility cost P2 of the energy conservation support device to be installed in the second step SP2 will be paid in amortization payment by the total amount of the energy conservation expectation amounts $\eta 1$ and $\eta 2$ of both the energy conservation support devices, the time t1 is determined so that the period for completion of the payment (an amortization period) is within five through seven years. In the period tSP2, the energy conservation support device of the second step SP2 is installed.

After that, the remained debt amount Pz2 when the time t2 passed is derived from the following equation.

$$Pz2 = (P2 + Pz1) \text{ x } (T2 - t2)/T2$$

Third Step SP3

Next, in the third step SP3, similarly to the second step SP2, it is decided which energy conservation support device should be installed.

The facility cost of the energy conservation support device to be installed is denoted by P3. Here, it is supposed that the facility cost P3 is ¥2,000,000 in the first step SP1 and will become ¥750,000 after five years due to a mass production effect.

It is supposed that the energy conservation effect due to the energy conservation support device to be installed is 30%. The energy conservation expectation amount $\eta 3$ due to the energy conservation effect is ¥240,000 x 0.3 = ¥72,000.

The payment period T3 of all the installed energy conservation support device is derived from the following equation.

$$T3 = (P3 + Pz2)/(\eta 1 + \eta 2 + \eta 3)$$

The installation timing tSP3 is set so that the payment period T3 is within a predetermined period, i. e., within five through six years, or within five through seven years.

Namely, supposing that the total amount of the remained debt amount Pz2 of the facility cost of the energy conservation support device installed in the first step SP1 and the second step SP2 and the facility cost P3 of the energy conservation support device to be installed in the third step SP3 will be paid in amortization payment by the total amount of the energy conservation expectation amounts $\eta 1$, $\eta 2$ and $\eta 3$ of all the energy conservation support devices, the time t2 is determined so that the period for completion of the payment (an amortization period) is within five through seven years. In the period tSP3, the energy conservation support device of the third step SP3 is installed.

In this way, in each step the installation timings tSP2 and tSP3 of the energy conservation support device are determined, so that each of the energy conservation support device can be paid completely in amortization payment by the energy conservation effect of the installed energy conservation support device without any initial investment.

Concerning the energy conservation support device installed in the first step SP1, the amortization payment of the facility cost is completed after the introduction of the second step SP2. After that, the energy conservation effect can be obtained with zero facility cost. Accordingly, the amortization payment period is shortened, which contribute early introduction of the third step SP3.

In addition, a large scale home energy generator such as a solar cell is expected to become less expensive due to further widespread use. Therefore, by installing them in the third step SP3, less expensive installation can be possible, so that the installation of the energy conservation support device in house becomes easier.

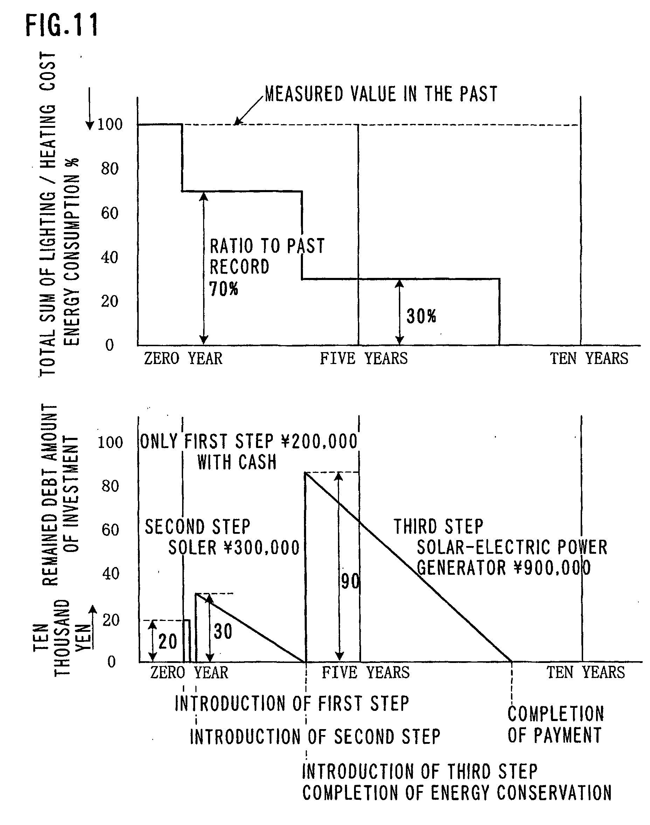

Although there are usually two or three years as an interval between the actual installation timings tSP1, tSP2 and tSP3 of the energy conservation support devices, the interval can be shortened or elongated appropriately. In addition, it is possible to pay the facility cost P1 in the first step SP1 in a lump sum payment rather than the amortization payment, for example. In this case, it is also possible to introduce the first step SP1 and the second step SP2 simultaneously (see Fig. 11).

Energy Conservation Effort

Although the energy conservation effect finances the facility cost in the above explanation about the installation timing, it is expected that the energy conservation effect exceeds the target value due to the energy conservation effort in the family. In this case, the balance except the portion corresponding to the payment of the facility cost is paid back to the family budget.

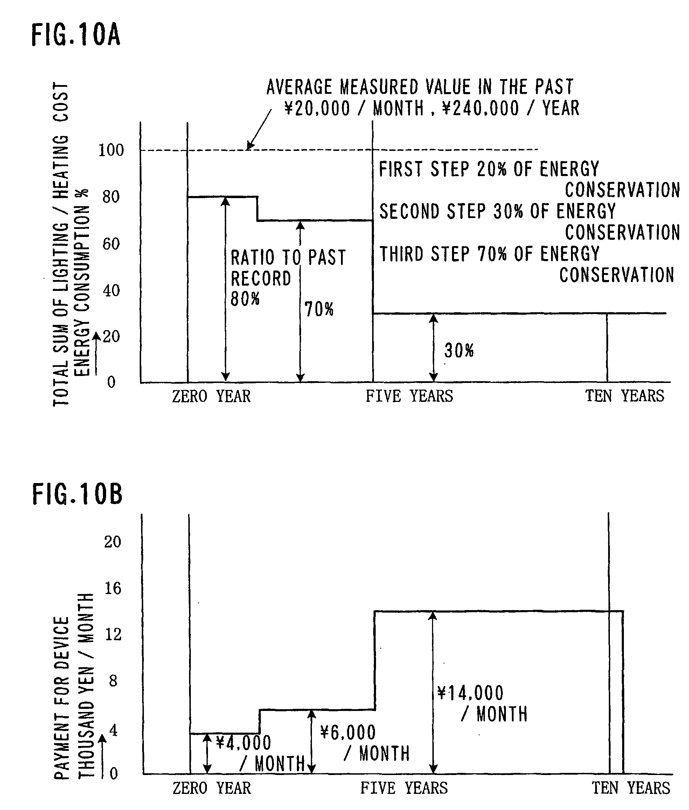

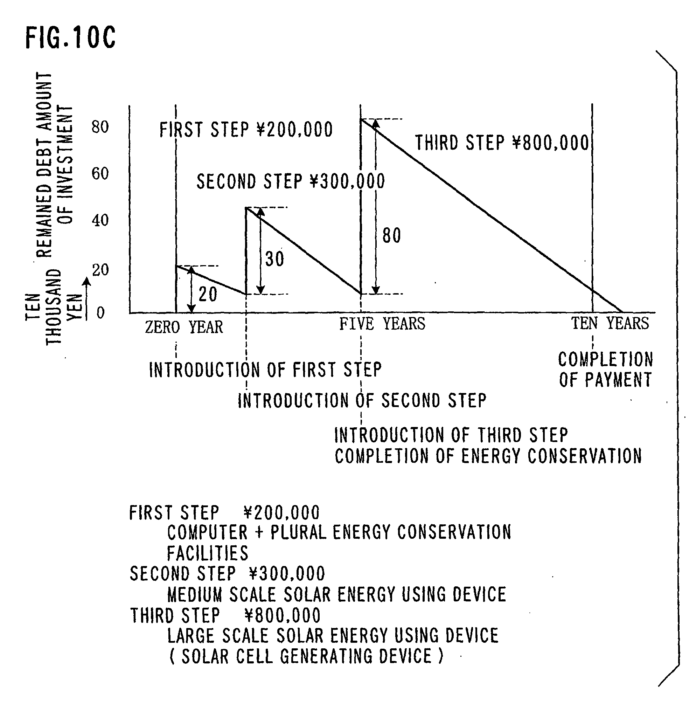

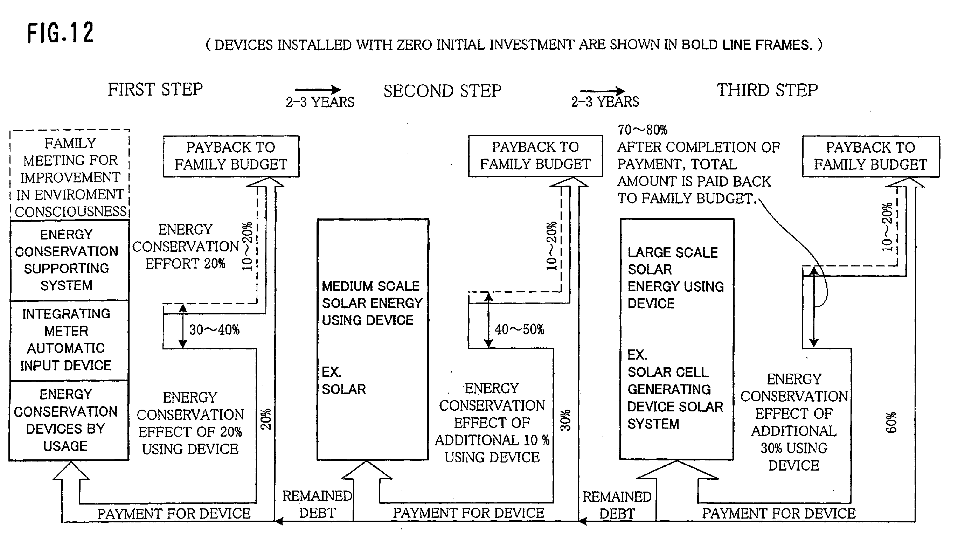

Namely, as shown in Fig. 12, 10-20% of the energy conservation effect is expected due to the energy conservation effort in the first step SP1. The economical effect obtained by the energy conservation effect is paid back to the family budget. Similarly, in the second and the third steps too, 10-20% energy conservation effect is expected due to the energy conservation effort.

According to the report of the foundation company "Energy Conservation Center", the average measured value of the energy conservation effort is 20% on the basis of monitoring 900 people.

[Concrete Example]

Next, a concrete example of the process and the operation of the supporting system 1 will be explained.

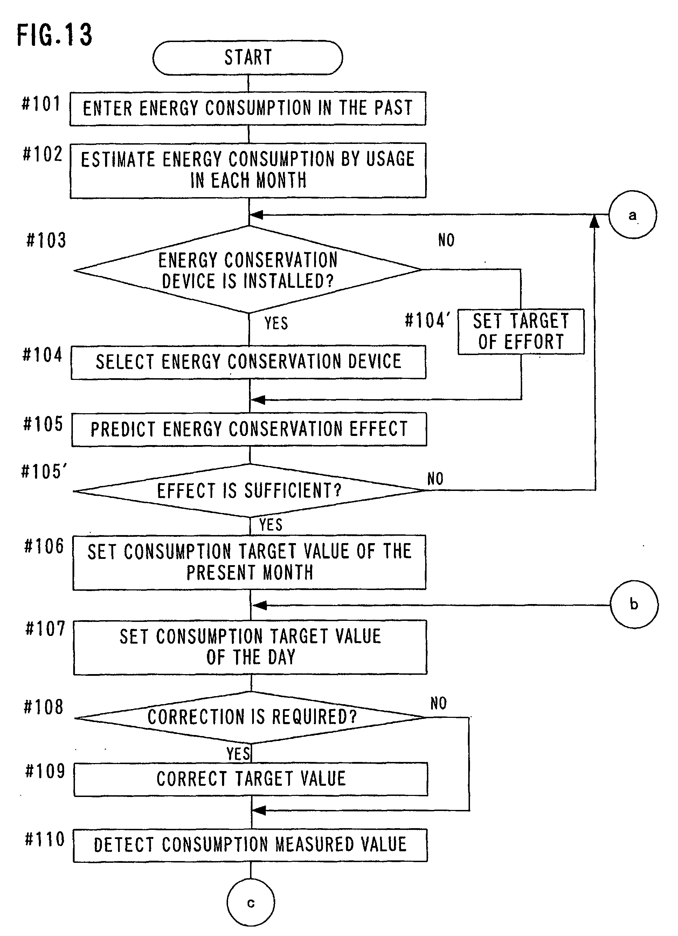

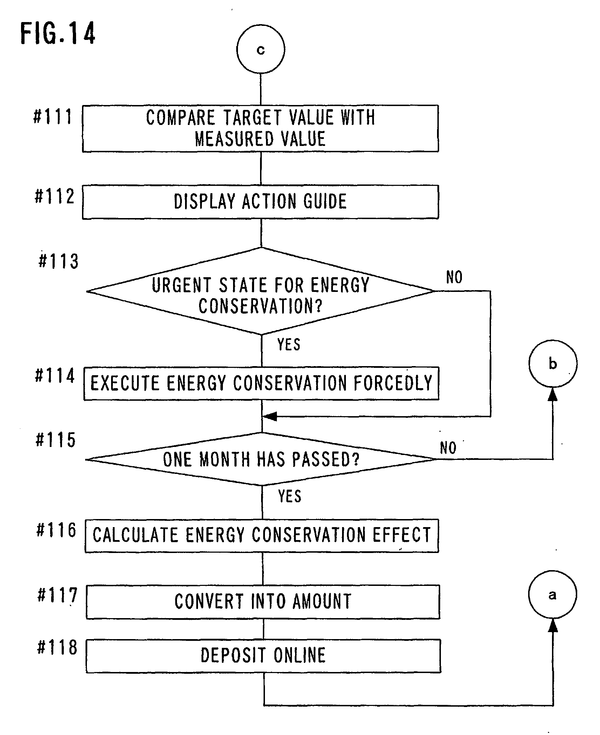

Figs. 13 and 14 show a general flowchart of a process performed by the energy conservation supporting software in the first step SP1. First, after explaining the general process in accordance with this general flowchart, a detail explanation of each process will be added.

In Step #101 of Fig. 13, energy consumption in one or more years in the past is entered. It is desirable to input consumption over three years or so not only the previous year, so that the average of the energy consumption in the same months of the past years is calculated as the energy consumption of the month. If the past energy consumption is recorded in family budget books or receipts of utility payment from the account, the consumption can be calculated from a predetermined conversion formula.

In Step #102, energy consumption by usage in each month is estimated in accordance with the variation of the energy consumption in each month. For example, in the electric power consumption of each month, the electric power consumption for lighting and power as well as the electric power consumption for air conditioning is estimated. Similar estimation is performed about gas and water supply, too. The estimation result is temporarily stored in the main memory 16 or the hard disk drive 17. More concrete method for the estimation will be explained later.

In Step #103, it is decided whether an energy conservation device is installed or not. The energy conservation device includes an energy conservation water saving bathtub step (see Japanese unexamined patent publication NO. 10-192180), a device for utilizing hot water in a bathtub after taking bath (see Japanese unexamined patent publication NO. 10-227465), a double-glazed window, a radiant heat type electric heater, a device for cutting power consumption in the dormant state, for example.

When installing an energy conservation device, an optimal energy conservation device is selected in accordance with the consumption by usage in each month (Step #104). In addition, the energy conservation effect due to the energy conservation device is predicted (Step #105), which is outputted on the display device 11 or other devices. Usually, the installation of the energy conservation device is performed considering the ratio (the magnification) of the facility cost to the energy conservation effect. If no energy conservation device is installed in Step #103, the energy conservation will be obtained only by human's efforts. In this case, the target of effort is set (Step #104'), and the energy conservation effect is predicted in accordance with the target (Step #105).

If it is decided the energy conservation effect is insufficient as a result of the prediction of the energy conservation effect (No in Step #105'), the process goes back to Step #103 so as to install an additional energy conservation device or to set the target of effort. It is desirable to install the energy conservation device or to set the target of effort so that the energy conservation effect (prediction) that is more than 10%, preferably 20% of the energy consumption in the past can be obtained. In addition, it is desirable that the desired energy conservation effect (prediction) can be obtained by installing the energy conservation device, and the energy conservation effect is increased as much as possible by setting the target of effort.

If it is decided that the energy conservation effect (prediction) is sufficient, the installation of the device is decided, and the device is purchased for actual installation. Then, the process goes to the next Step #106.

In Step #106, the energy consumption target value of the present month is set. The target value is set for each energy type such as electric power or gas, more preferably, for each usage such as for lighting, for power or for air conditioning. Using the display device 11, the keyboard 12 and the mouse 13, the target value is set in an interactive form. In accordance with the prediction of the energy conservation effect performed in Step #105, the processor 15 calculates the recommended target value.

In the next Step #107 the consumption target value by usage in the day is set. Namely, the consumption target value of the day is set by calculating on the prorated daily basis from the consumption target value by usage in the present month set in the previous step.

In the next Step #108 it is decided whether the target value of the day should be corrected or not. If the correction is necessary, the correction is performed in Step #109. This correction includes the correction for suppressing the difference between the last day of the last month and the first day of the present month generated by the simple prorated daily basis calculation, the correction considering a variation of the weather condition and others. It may also includes the correction for complementing the difference between the prevent energy conservation value halfway and the energy conservation target of the present month by the energy conservation effort as much as possible.

In Step #110, the energy consumption measured value is detected. In accordance with the information detected by the energy consumption detector by energy type 20, a total consumption of each energy type in the day is detected. In addition, in accordance with the information detected by the energy consumption detector by equipment 21, energy consumption of large equipment is detected. Thus, energy consumption by usage can be estimated. However, if the evaluation of the energy consumption by usage is difficult, at least a total consumption of each energy type is detected.

In Step #111 of Fig. 14, the target value is compared with the measured value. The target value of the day is compared with the measured value, and the halfway result of the present month is evaluated in comparison. In accordance with the comparison result, the action guide for the energy conservation is displayed on the display device 11 (Step #112). Examples of the action guide will be explained later. Moreover, if it is decided to be an urgent state for the energy conservation in Step #113, an energy conservation forced execution process is executed in Step #114. This means forced shutoff of the power supply or change of the operational condition performed by the forced energy conservation performing device 22.

The above-mentioned process from Step #107 through Step #114 is performed by a unit of day. However, it is desirable that the process from Step #110 though Step #114 is performed by a unit of time slot, an hour or in real time.

When a month (the present month) passes (Yes in Step #115), the energy conservation effect is calculated in Step #116. Namely, the energy consumption measured value of the present month is compared with the energy consumption in the past corresponding month that was entered in Step #101, and the difference is considered to be the energy conservation effect.

Then, in Step #117, the energy conservation effect of the present month is converted into an amount, which is deposited online in a predetermined account. This online deposit is performed by using the communication device 19. The deposited amount becomes a fund or an amortization payment for an energy conservation device or a home energy generator.

After that, the process goes back to Step #103 of Fig. 13, and a new installation or additional installation process of an energy conservation device is performed. Then, in Step #106 the energy consumption target value of another month is set, so that the above-mentioned process is repeated. However, the process from Step #103 through Step #105 concerning the installation of the energy conservation device can be performed every few month or every season if necessary.

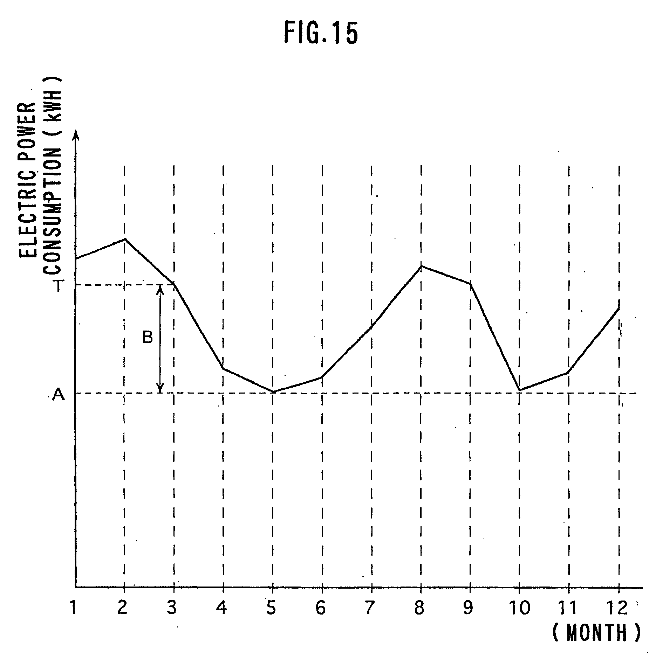

Fig. 15 is an example of a graph showing the electric power consumption in each month during a period of one or more years in the past that was entered in the process of Step #101 explained above. Referring this figure, the explanation will be added about the process in Step #102 for estimating the electric power consumption by usage in each month in accordance with the variation of the electric power consumption in each month.

Fig. 15 shows the variation of the electric power consumption in a typical family in which an electric air conditioner is used for air conditioning. This graph is obtained by entering the electric power consumption by month during the period of more than one year in the past. Usually, the electric power consumption of months during the period of two years or more is entered, and an average value of each month is calculated for improving the accuracy. In addition, if the period of absence due to a travel or others is known, it is desirable to correct the electric power consumption of each month by prorating the same considering the number of the absent days.

It is known that when the electric power consumption is divided into the portion for air conditioning and other portion for lighting and power, the variation of the electric power consumption of each month is generated mainly due to the power consumption for air conditioning. Concerning a refrigerator that consumes much power, more power is consumed in summer than in winter. In contrast, since the winter season has longer nights than the summer season has, power for lighting is consumed more in the winter season. The variation of the power consumed by the refrigerator and the variation of the power consumed for lighting are substantially canceled by each other.

Therefore, in Fig. 15, the least electric power consumption A in May and October when there is no power consumption for air conditioning is estimated to be the constant electric power consumption for lighting and power, and the remained variation portion is estimated to be the electric power consumption for air conditioning. As shown in Fig. 15 for example, supposing all the electric power consumption in March is denoted by T, the electric power consumption B for air conditioning is the difference between the total electric power consumption T and the electric power consumption A for lighting and power (B = T - A).

In this way, the electric power consumption by usage in each month is estimated. The variation of the electric power consumption shown in Fig. 15 is an example and is actually different for each family. For example, in the case of a family where electric power is used for cooling but is not used for heating, the total electric power consumption T in winter season must be substantially equal to the electric power consumption A for lighting and power. Although the variation of the electric power consumption in each month varies differently corresponding to the power consumption state of each family, it is not so difficult to estimate rough electric power consumption by usage from the variation of the power consumption in each month as long as the reason of the variation is known.

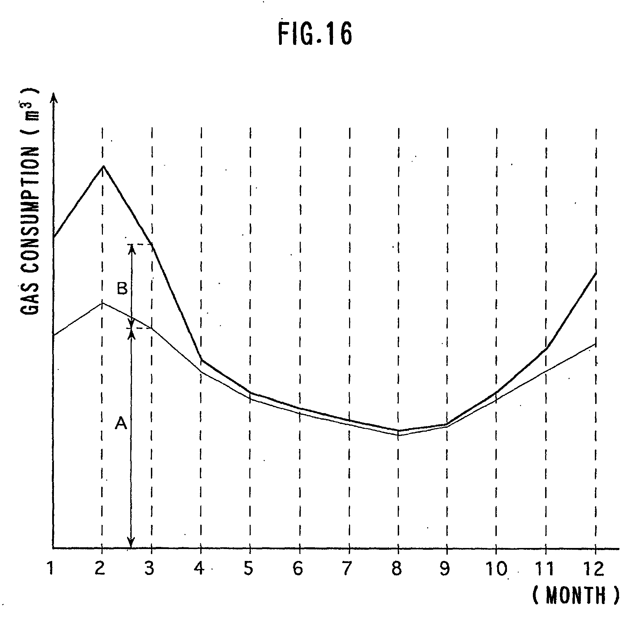

Fig. 16 is an example of the graph showing gas consumption in each month during a period of one or more years in the past that was entered in the process of Step #101 explained above. In the case of gas, it is a little complicated compared with the case of electric power. Gas is used mainly as an energy source of a water heater, and water temperature varies along with seasons. Therefore, gas quantity consumed by the water heater varies along with seasons even if quantity of the hot water supply is constant. In addition, hot water is also used for utility water (e.g., for washing dishes or washing hands and face) as usual recently, so the variation of the gas consumption along with seasons may be enhanced by the use of the utility water.

Fig. 16 shows an example of a family where gas is used for heating in winter season. When dividing the gas consumption into a portion for heating and the other portion for bath, utility water and kitchen, the variation of the gas consumption in each month includes both the variation due to the gas consumption for heating and the variation due to the gas consumption for bath, utility water and kitchen. Therefore, the variation of the gas consumption for bath, utility water and kitchen is estimated in accordance with the variation of the water temperature. Namely, since the heat quantity, i.e., the gas consumption necessary for obtaining a hot water having a certain temperature varies substantially depending on the water temperature at the start of heating, the variation of the gas consumption for bath, utility water and kitchen from the water temperature that varies corresponding to the season is estimated by proportional calculation.

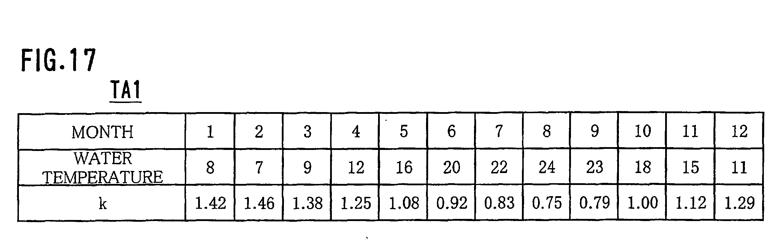

Fig. 17 is a table showing the relationship between the variation of water temperature in each month and coefficient k that is used for proportional calculation of the gas consumption for bath, utility water and kitchen. In this table TA1, the coefficient k has a value proportional to heat quantity (energy quantity) necessary for obtaining hot water at the temperature of 42 °C, and k is 1 (one) when the water temperature is 18°C (in October). Therefore, when the water temperature in each month is t (°C), the coefficient k in each month is derived from the following equation.

$$k = 1 + ((42 - t) - (42 - 18))/(42 - 18) = 1 + (18 - t)/24$$

Here, since the hot water is used most for bath, the temperature of the hot water is considered to be 42 °C for calculating the coefficient k. Concerning the heat quantity necessary for hot water supply for utility water and kitchen, the temperature of the hot water for utility water is substantially the same as the bath water, and the heat quantity for hot water for kitchen is much less than the heat quantity for bath. Therefore, the error is small even if the coefficient k having the same value as the hot water for bath is used for the correction. In addition, the coefficient k is calculated on the basis of October's water temperature of 18°C, because gas for heating is not consumed in October and it is considered to be substantially an average temperature in the year. For the same reason, water temperature in May can be the basis of the calculation.

The coefficient k of each month derived in the way explained above is multiplied on the gas consumption in October so as to obtain the gas consumption for bath, utility water and kitchen in each month, which are plotted on the graph shown in Fig. 17 to obtain the graph shown in the thin curve. Therefore, the gas consumption for bath and kitchen shown in the thin curve is subtracted from the total gas consumption shown in the thick curve to make the gas consumption for utility water. Namely, the gas consumption for bath and kitchen is A, the gas consumption for heating and utility water is B, and the total consumption is A + B in March, for example.

Since the consumption of utility water can be measured relatively easily from the volume of the washtub (5 liter or 10 liter) or others, the gas consumption for heating can be estimated by grabbing the consumption of utility water in one time or a day. After the installation of the computer, the rough consumption of the utility water can be measured easily by reading and measuring the water consumption by the computer while only the utility water is used with stopping other usage during a certain period. In a family where gas is not used for heating, B is the gas consumption for utility water.

In the same way for gas as explained about the estimating process of the electric power consumption by usage, the variation of the consumption of each month shown in Fig. 16 is an example and is actually different for each family. In any case, as long as a reason of the variation of the consumption in each month is known, general gas consumption by usage in each month can be estimated from the variation. In the same way for the consumption of water supply, the rough consumption by usage in each month can be estimated if the variation of the consumption in each month during a period of one or more years in the past and the reason of the variation are known.

Fig. 18 is a table TB1 showing an example of the energy conservation device that is considered to install in Step #103. Concerning each of the energy conservation water saving bathtub step (see Japanese unexamined patent publication NO. 10-192180), the device for utilizing hot water in a bathtub after taking bath (see Japanese unexamined patent publication NO. 10-227465), the double-glazed window, the radiant heater and the device for cutting power consumption in the dormant state, the table TB1 includes a target type of energy (electric power, gas or water supply and others), a usage (air conditioning, hot water supply and others), energy conservation expectation quantity, energy conservation expectation amount and facility cost (and a magnification). The grounds of the energy conservation expectation quantity due to the energy conservation device (an example of the calculation) will be explained below.

The bathtub step comprises a hard resin hollow-body box and a thermal insulator glued inner surface of the box. The bathtub step is filled with water, is sunk in the bathtub and is fixed to the side of wash space removably. Thus, the hot water (water and heat) corresponding to the volume of the bathtub step can be saved.

Supposing water quantity necessary for bathing a day is 275 liter, the difference between the bathing temperature and the water temperature of 18 °C is 24 °C, the correction coefficient calculated from the variation of the water supply temperature during a year is 1.1075, a saving rate considering a volume ratio of the bathtub to the step and a heat loss is 0.2, and a heat efficiency of a bath boiler is 0.8, the conserved heat quantity per day h is calculated by the following equation.

$$h = 275 \times 24 \times 0.2 \times 1.1075/0.8 = 1,827 \text{ (kcal)}$$

This value is multiplied by 30 (days per month) and 12 (months per year), so that the conserved heat quantity H in a year becomes $1,827 \times 30 \times 12 = 657,720$ (kcal).

Furthermore, supposing that the volume ratio of the bathtub to the step is 0.22, the conserved water quantity w in a day is $275 \times 0.22 = 60.5$ (liter). This value is multiplied by 30 (days per month) and 12 (months per year), so that the conserved water quantity W in a year becomes $60.5 \times 30 \times 12 = 21,780$ (liter) = 21.78 (m$^3$).

The device for utilizing hot water in a bathtub after taking bath is a device for utilizing the bathtub for storing heat for promoting the second use of the remained hot water in the bathtub as a heat source for heating rooms in winter season and further use for a flush toilet.

Supposing the remained hot water quantity is 220 liter, the effective use temperature of the remained hot water is 22°C, the effective using ratio of heat is 0.6, and heat efficiency including a conduit loss when replacing with other hot water heating facility is 0.8, the conserved heat quantity h in a day is $220 \times 22 \times 0.6/0.8 = 3,630$ (kcal). This value is multiplied by 100 (days) that is the number of days in which the remained hot water can be used, the conserved heat quantity H in a year becomes $3,630 \times 100 = 363,000$ (kca1)

In addition, supposing that 70% of the flush water of the toilet is supplied from the above-mentioned used water, and that the conserved water quantity w in a day is 70 liter, the conserved water quantity W is obtained by multiplying the value by 30 (days per month) and 12 (month per year), i.e., $W = 70 \times 30 \times 12 = 25,200$ (liter) = 25.2 (m$^3$).

Next, the energy conservation effect due to the double-glazed window or others will be estimated. The energy consumption for air conditioning in a living room depends largely on the thermal insulation structure of the living room. Especially, a normal single-glazed window has a large heat transfluent coefficient and much heat loss twice to triple the heat loss of the double-glazed window or a wall structure. Therefore, using a double-glazed window, high energy conservation effect can be obtained. It is possible to glue a thermal insulation sheet or a transparent plastic board on the single-glazed window so that thermal insulation effect close to the double-glazed window can be obtained.

If the heat transfluent coefficient is reduced from 5.5 to 3.5 by using the double-glazed window or the alternative means, heat loss is reduced by 35 kcal per square meter of the window area. If four members of a family model use a living room (having the window area of 7 m$^2$) and other three rooms (having the total window area of 9 m$^2$) nine hours a day, the conserved heat quantity h for air conditioning in a day becomes $35 \times (7 + 9) \times 9 = 5,040$(kcal). This value is multiplied by 150 (days) that is the number of days in which the air conditioners are used during a year, the conserved heat quantity H in a year becomes $5,040 \times 150 = 756,000$ (kcal).

However, in the above-mentioned estimation, the thermal insulation effect by curtains before adopting the double-glazed window is not considered. If it is taken in account, the energy conservation effect by adopting the double-glazed window becomes smaller.

The radiant heater is a low temperature radiation type heater such as an under-floor heater or an oil heater. It is said that the average room temperature can be lowered at least 2 °C without impairing comfort compared with a fan heater. In addition, the source temperature of the radiant heater is low. As a result, heat loss is reduced, which contributes to the energy conservation. It is suitable for a house having high thermal insulation and air tight, which requires a high facility cost. Although it is difficult that every house is equipped with the radiant heater, the energy conservation effect thereof becomes approximately 360,000-720,000 kcal (10-20%).

The device for cutting power consumption in the dormant state is a device for reducing the power consumption in the dormant stat of equipment such as a TV set by cutting off the main power source. The device for cutting power consumption in the dormant state is used by inserting the same in the power source line of equipment such a TV set whose power consumption in the dormant state is large. Recently, electric devices using a remote controller are increasing, and these devices consume electric power in the dormant state for sustaining the waiting state for a signal from the remote controller. This electric power in the dormant state is said to be up to 10-15% of the electric power in the operating state. By using the device for cutting power consumption in the dormant state, it is expected to conserve the electric power consumption by approximately 2 kWh per day or 720 kWh per year.

In the table TB1 shown in Fig. 18, the energy conservation expectation amount is calculated with conversion ratio ¥24.5/kMH for electric power, ¥15.6/1000 kcal for gas and ¥150/m$^3$ for water supply. Furthermore, magnification inside the parentheses in the facility cost cell is a value obtained by dividing the facility cost by an annual energy conservation expectation amount. The smaller the magnification is, the larger the effect of the installation of the energy conservation device is. The magnification is usually 5-6 times, and approximately 10 times at most, which is considered to be the condition of the installation of the energy conservation device.

The database of the energy conservation devices as shown in Fig. 18 is stored in the hard disk drive 17 of the supporting system 1 shown in Fig. 2. In addition, it is possible to download the latest information from the database on the network via the communication device 19 or to update the database stored in the hard disk drive 17. It is also possible to update the database using the removable disk drive 18 and its storage medium 23.

Other than the energy conservation device as shown in Fig. 18, there are home appliances such as a dishwasher or a 24-hour bath, which have become popular recently. The dish washer has an advantage not only in that the labor is reduced compared with hand washing but also in that water consumption or consumed heat quantity (gas) is reduced. The 24-hour bath can save water and heat by circulating water in the bathtub. Also in the future, various energy conservation devices will be developed and commercialized. It is expected that data of energy conservation expectation quantity (expectation amount) and facility cost of these energy conservation devices are cumulated in the databases on the network.

When selecting an energy conservation device to be installed in Step #104 of Fig. 13, the processor 15 refers to the energy consumption by usage in the present month or in the coming season and the database of the energy conservation device explained above, selects an effective energy conservation device and make the display device 11 display them. In addition, the energy conservation expectation quantity (expectation amount) table TB1 shown in Fig. 18 is also displayed. Usually, plural candidates of the energy conservation devices are displayed, and the user (the operator) refers the display while using the keyboard 12 or the mouse 13 for selecting the energy conservation device to be installed.

Fig. 19 is a table TB2 showing an example of means for performing the energy conservation by human's effort without installing any energy conservation device explained above. The energy conservation effort that is apt to become a habit without sacrifice of comfort includes washing dishes or face in a tub and cutting wastes of lights and other electricity.

It is known that the consumption of (cold or hot) water can be conserved much by washing in a tub using stored (cold or hot) water and by stopping washing with water flowing out of the opened tap. For example, if 150 liters of (hot) water is conserved a day, the consumption of water supply can be saved by 150 x 365 = 54,750 liters a year. In addition, if the hot water at the temperature higher than normal water by 30 °C is used 120 days a year, the consumption of gas heat quantity can be saved by 150 x 30 x 120/0.8 = 675,000 kcal per year.

Though conservation of electricity such as cutting wasteful lighting is often carried out in factories or offices, but not in average homes. It is said that approximately 755 kWh of energy conservation can be expected a year in an average home by cutting off wasteful lighting or televisions that are not used.

In the energy conservation by the human's effort, special facility cost does not required. It is possible to assign the amount corresponding to the energy conservation effect to the purchasing cost for equipment such as a computer necessary for the energy conservation system.

The prediction of the energy conservation effect in Step #105 is performed about the energy conservation device to be installed in accordance with data of the energy conservation expectation value per year, or data of energy conservation expectation value per day used for calculating the expectation value per year; so that the predicted value of the energy conservation effect in the present month is calculated. Also in the case where the energy conservation device is not installed at first but the energy conservation is performed only by the energy conservation effort, the predicted value of the energy conservation effect is calculated similarly.

In setting the target value of the present month in Step #106, the processor 15 calculates the recommended target value by subtracting the energy conservation predicted value (by usage) in the present month from the consumption (by usage) in the present month calculated in Step #102 and displays the result. The operator confirms the recommended target value or corrects the same for setting the final target value.

Next, the process in Step #109 for correcting the consumption target value of the day set in Step #107 by the prorated daily basis calculation will be explained in detail. The correction is necessary in the case as follows.

First, if the target value per day is determined by the prorated daily basis calculation from the target value per month, discontinuity may appear at the boundary between the last day of the last month and the first day of the present month, so that the target value may vary abruptly. This abrupt variation should be relieved by changing the target value gradually during the first week of the present month, for example, so as to secure the validity of the target value per day. This correction (the smoothing process) is executed by the processor 15 automatically.

Second, if a special event such as reception of a guest, absence of a family member, or a TV sports watching for long hours is planned, it is desirable to correct the target value of the day corresponding to the event. This process is executed by the processor 15 automatically in accordance with the event schedule entered in advance.

Third, if the weather, especially the atmospheric temperature changes, the energy consumption for air conditioning varies rapidly. Therefore, it is necessary to correct the target value of the day after the time and the target value of the next day in accordance with the weather information. The correction quantity corresponding to the atmospheric temperature will be explained later. The energy conservation supporting system of the present invention uses the communication device 19 for obtaining the weather information via the network. In accordance with the obtained weather information, the processor 15 corrects the target value automatically.

For example, it is necessary to consider not only the atmospheric temperature but also air quantity entering the house and the air velocity when executing the correction in accordance with the variation of the atmospheric temperature. However, when the first step is introduced, it is considered that the heat loss is simply proportional to the difference between the room temperature and the atmospheric temperature in the case of recent house using aluminum sashes, and that the energy consumption varies by 5% when the atmospheric temperature varies 1 °C. According to this consideration, the correction can be performed. If the record data are cumulated after that, it is desirable to perform the correction in accordance with the recorded data as being explained later.

Though the correction of the target value is performed by the processor 15 automatically in accordance with information entered in advance or information obtained via the network as explained above, it is also possible to correct the target value of the day manually considering other circumstances.

The detection of the energy consumption measured value in Step #110 is performed by using the energy consumption detector by energy type 20. The energy consumption detector by energy type 20 can be constituted by using various known devices. As one of the simplest method, the displayed value of each integrating meter of electric power, gas and water supply can be read. Such a reading device can be constituted by combining an optical reader and an optical character reader (OCR) as described in Japanese unexamined patent publication NO. 7-105306, for example. At a predetermined time every day, the displayed value of the integrating meter is read to know the consumption of today as the difference between the cumulated value of today and the cumulated value of yesterday. It is also possible to detect the total consumption by energy type by using the device similar to the energy consumption detector by equipment 21 as below.

The energy consumption detector by equipment 21 is necessary for grabbing not only the total consumption by energy type but also the consumption by usage. For example, concerning a large electric appliance such as a television set, a refrigerator or an air conditioner, a non-contact type current detector is attached to the power source line, and the general value of the consumption electric power can be calculated from the product of the detected current, the voltage and the power factor. Concerning gas and water supply, a flowmeter is inserted in the supplying path for detecting the consumption.

The above-mentioned integrating meter may be installed without a legal problem when the displayed value is used only for the consumer. However, the installation is not so easy when the supplier objects to it. In the future, it is expected that the social request to improvement of the global environment will be strong, and the supplier will be able to obtain a merit such as unmanned meter-reading. Therefore, it is expected that as national public works the above-mentioned integrating meter reader is installed in each house and some measures directed toward the improvement of the global environment and the information technology will be carried out.

In addition, if the consumption can be detected in non-contact as for electric power, there is not problem about safety. It is expected that inexpensive current meters or electric power meters will be available due to mass production, and that they can be attached to the equipment easily. Furthermore, concerning the equipment such as an air conditioner whose operating time can be managed relatively easily, the consumption can be estimated from the operating time.

The evaluation by comparing the target value with the measured value is preferably performed by energy type and by usage. However, if it is difficult to grab the measured value by usage due to the above-mentioned circumstances, another comparison and evaluation can be used. The comparison result is displayed on the display device 11. For each of the energy types such as electric power, gas and water supply, preferably for each of the usages of air conditioning, lighting and power, the target value of the day and the measured value are displayed. In addition, by switching the screen, the halfway result in the day of the present month is also displayed.

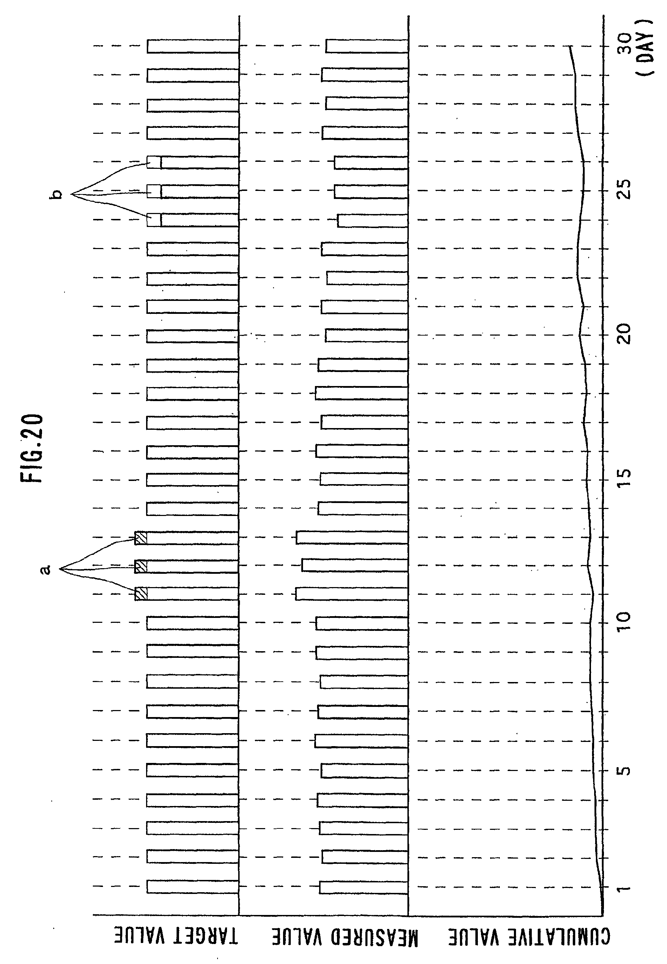

Fig. 20 is an example of the graph showing the target value and the measured value in each day of the present month and the cumulative value of the difference between the target value and the measured value. The horizontal axis of the graph is the day of the present month. The record of the target value is shown by a bar graph, while the cumulative value of the difference between the target value and the measured value is shown by a line graph. The target value, the measured value and the cumulative value in the vertical axis are all converted into amount. The additional portion a and the reduced portion b of the target value show that the target value is corrected in accordance with the above-mentioned weather information or other factors.

If the cumulative value is shifted to the plus side as illustrated, it means that the cumulative value of the measured value is below the cumulative value of the target value, and that it is preferable state where the energy conservation target is achieved. On the contrary, if the cumulative value is shifted to the minus side, it means that the cumulative value of the measured value is over the cumulative value of the target value. In this case, it is required to make the energy conservation effort plus finally in the remained days and to achieve the energy conservation target of the present month.

If the cumulative value is minus, and the absolute value exceeds the predetermined first threshold value, the action guide urging the effort of energy conservation is displayed on the display device 11 in Step #112. As the energy conservation effort items included in the action guide, there are items explained before with reference to Fig. 19 and other items such as restriction of the TV watching time, restriction of the number of taking bath and reduction of the air conditioning ability by changing the set temperature or air quantity of air conditioning. These items are also registered in the database store in the hard disk drive 17 about the conservation target, usage, energy conservation expectation quantity and others similarly to the items shown in Fig. 19, and preferably are included in the display contents of the action guide if necessary.

In addition, it is possible to perform the predicting simulation of the cumulative value when these energy conservation effort items are carried on, so as to display overlaying on the above-mentioned display of the target value, the measured value and the cumulative value. By switching the display, the display of the action guide and the display of the target value, the measured value and the cumulative value can be switched.

If the cumulative value is minus, and the absolute value thereof exceeds the second threshold value that is larger than the predetermined first threshold value, it is decided to be the energy conservation urgent state in Step #113, and the energy conservation forced execution process is performed in Step #114. Namely, the processor 15 controls cutoff of power supply to a television set or an air conditioner or stop of lighting of the water heater via the forced energy conservation performing device 22. Since these forced stop of using equipment is a measure putting higher priority on energy conservation than on comfort, it is desirable to be activated as less times as possible. Therefore, the difference between the second threshold value and the first threshold value is set to a value sufficiently large.

In addition, it is possible that the forced energy conservation performing device 22 is equipped with a timer and that the cutoff of the power supply is executed only during a specific time slot. At any time except the specific time slot, the equipment can be used without putting high priority on the energy conservation, so that the inhibition of comfort can be relieved. Furthermore, it is possible that the processor 15 controls setting of temperature and air quantity of the air conditioner via the forced energy conservation performing device 22, so that the energy consumption is reduced. The equipment such an air conditioner that can be controlled externally is not used widely yet. However, this type of home automation has been studied by many manufacturers and is already realized in a part. It is expected that a system in which a central computer controls home appliances will be spread widely in the future.

The process from Step #116 through Step #118 that is executed one month later is a process in which the conservation effect of electric power, gas and water supply obtained by performing the above-mentioned energy conservation is summarized for each month and is converted into amount, which is used for investing in additional energy conservation. Namely, the above-mentioned process for assigning the amount to a fund or an amortization payment for purchasing an energy conservation device is performed automatically. The processor 15 deposits money in a predetermined account online via the communication device 19. This process can be performed as a part of a home banking system that is already realized.

Thus, the initial investment is minimized, energy conservation devices are installed step by step, and the facility cost can be depreciated by the amount obtained by performing the energy conservation. By this method, the energy conservation can be started by a relatively inexpensive energy conservation device first, and then an expensive energy conservation device having high energy conservation effect can be installed gradually. Finally, the amount can be assigned to fund for purchasing a home energy generator such as a solar cell generating device, a solar heat utilizing device, an aerogenerator device, a fuel cell device or a methane gas generating device.

Such a home energy generator is different from the above-mentioned energy conservation device, but has the same effect of reducing the energy supply quantity (purchasing quantity) from the energy supplier, resulting in contribution to reducing consumption of fossil energy in the global scale and preventing the global warming. By using clean energy such as solar energy or wind energy, or utilizing organic wastes, a part or the entire of the energy consumed in home can be generated domestically.

In the above-explained embodiment, some variations are also explained as appropriate. However, the present invention can be embodied in other examples or variations. For example, the display of the action guide or others can be performed not in a day cycle but in every time slot or every unit time in real time manner. In addition, the installation process of the energy conservation device can be performed not in every month but in every week or every few months.

As explained above, according to the method and device for supporting domestic energy conservation of this concrete example, a computer is utilized for grabbing the energy consumption in each family by energy type such as electric power, gas or water supply, and by usage such as for air conditioning or lighting and power, predicting the energy conservation quantity by installing an appropriate energy conservation device or selecting the energy conservation effort items and evaluating by comparing the set target value with the measured value for an appropriate energy conservation.

In addition, by depositing the amount converted from the energy conservation effect online, an expensive energy conservation device having high effect or a home energy generator can be purchased easily. Thus, further energy conservation can be achieved, and the widespread use and cost reduction of the energy conservation device and the home energy generator can be promoted.

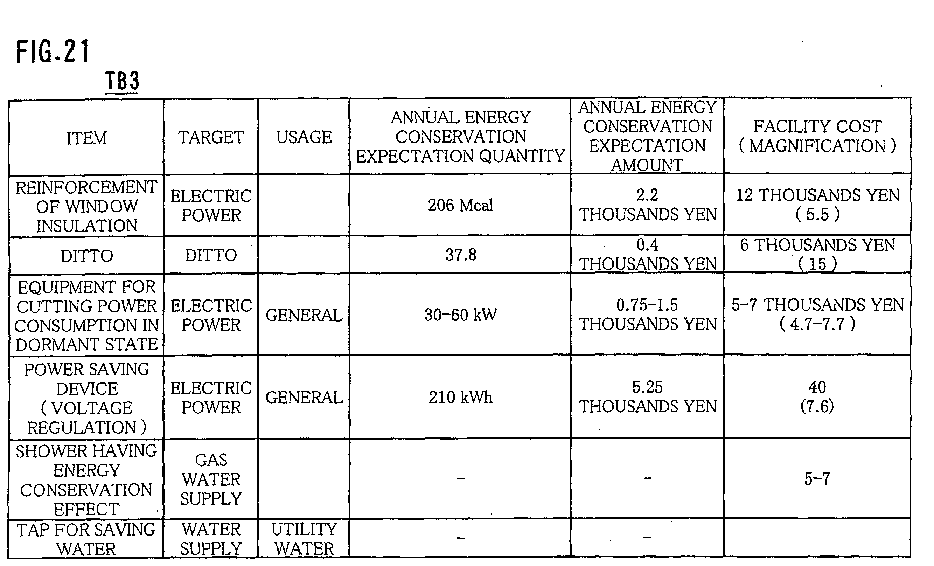

The table TB3 of the energy conservation support device shown in Fig. 21 can be added to the table TB1 shown in Fig. 18 for use. Similarly, the table TB4 of the energy conservation effort shown in Fig. 22 can be added to the table TB2 shown in Fig. 19 for use.

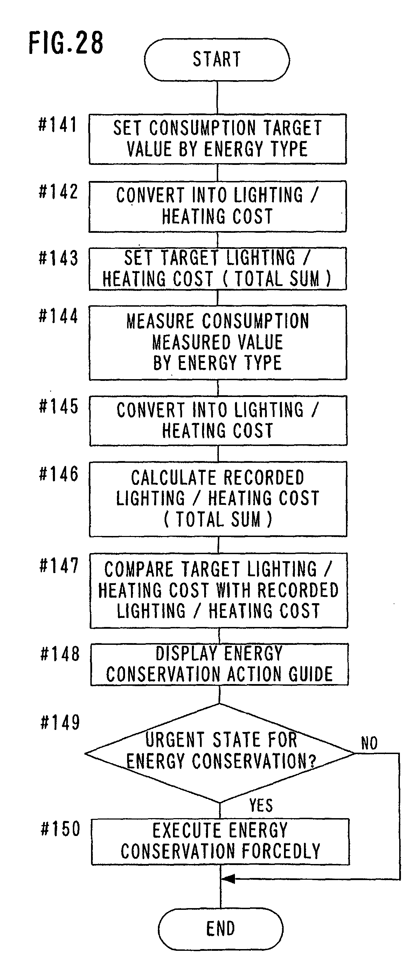

Next, a variation of the process and the operation of the supporting system 1 will be explained with reference to Figs. 28-33.

In Step #141 of the flowchart show in Fig. 28, the consumption target value by energy type such as electric power or gas is set. It is desirable to consider the record in the past for setting the consumption target value. The detail of the setting method will be explained later.

In Step #142, the consumption target value of each energy type is converted into a lighting/heating cost that is a common unit. In the case of electric power for example, according to the recent electric power tariff set by an electric power company concerning the usage-based lighting electricity A for a standard family, the minimum fee (the basic fee per contract) is ¥301 including electric power up to 15 kWh, and the fee for electric power over 15 kWh up to 120 kWh is ¥18.48 per kWh. It is set that the fee for electric power over 120 kWh up to 280 kWh is ¥24.48 per kWh, and the fee for electric power over 280 kWh is ¥6.7,9 per kWh. According to this tariff, the power consumption target value of each month is converted into the lighting/heating cost. If there is consumption of electric power whose fee is defined in another tariff such as a midnight electric power fee, the power consumption target value is converted into the lighting/heating cost in accordance with the other tariff. Also for gas and water supply, the consumption target value is converted into the lighting/heating cost in accordance with each tariff.

In Step #143, the total sum of the lighting/heating cost (converted amount of the consumption target value) calculated in the way as explained above for each energy type is calculated and set as the target lighting/heating cost. The set target lighting/heating cost is memorized in the main memory 16 or the hard disk drive 17.

In Step #144, the consumption measured value of each energy type is measured. Namely, in accordance with the detected information of the energy consumption detector by energy 20 including an integrating meter reader for reading a displayed value of the integrating meter, the cumulative value or the consumption value during a predetermined period of each energy consumption is detected as the consumption measured value.

In Step #145, the consumption measured value of each energy type is converted into the lighting/heating cost. This conversion is performed by the same process as the conversion from the consumption target value into the lighting/heating cost in Step #142.

In Step #146, the total sum of the lighting/heating cost that is converted amount of the consumption measured value of each energy type calculated in the way as explained above is calculated as a recorded lighting/heating cost.

In Step #147, the target lighting/heating cost set in Step #143 is compared with the recorded lighting/heating cost calculated in Step #146. Namely, the energy consumption of electric power, gas or others is compared for evaluation in the total sum basis.

In Step #148, the energy conservation action guide is displayed on the display device 11 corresponding to the result of the above comparison. Namely, if the recorded lighting/heating cost exceeds the target lighting/heating cost and the difference is larger than the first threshold value, the energy conservation action guide is displayed. The energy conservation action guide is a message displayed on the display device 11 for urging human's effort for energy conservation. An energy conservation action table including plural energy conservation action items effective to reduction of energy consumption and the effect of them converted into the lighting/heating cost is stored in the hard disk drive 17 in advance, and the processor 15 refers to this energy conservation action table for displaying the necessary energy conservation action guide.

Fig. 19 shows an example of the energy conservation action table. The table includes the energy conservation action items that can be routinized easily without sacrificing comfort, e.g., washing dishes or face in tub or power saving of wasteful lights.

In addition, restriction of TV watching hour, restriction of the number of taking bath, reduction of air conditioning ability by changing set temperature or air quantity of the air conditioning can be other energy conservation action items. These items can be also included in the energy conservation action table shown in Fig. 3 along with the conservation target, the usage, the energy conservation expectation amount and others.

In the comparison of Step #147 in Fig. 28, if the recorded lighting/heating cost exceeds the target lighting/heating cost and the difference exceeds the second threshold value that is larger than the first threshold value, it is decided to be the energy conservation urgent state in Step #149. In this case, the energy conservation forced execution process is performed in Step #150.

Namely, the processor 15 controls the cutoff of the power supply to the TV set or the air conditioner, lighting stop of the water heater or others via the forced energy conservation performing device 22.

The above-mentioned process from Step #141 through Step #150 is performed in a constant cycle. For example, the recorded lighting/heating cost is calculated in a day unit and is compared with the target lighting/heating cost. Then according to the comparison result, the energy conservation action guide is displayed, and the energy conservation forced execution process is performed if necessary. In order to perform more detail and quick energy conservation action or control, it is desirable to do the above-mentioned process in shorter cycle, e.g., every time slot, which will be explained later.

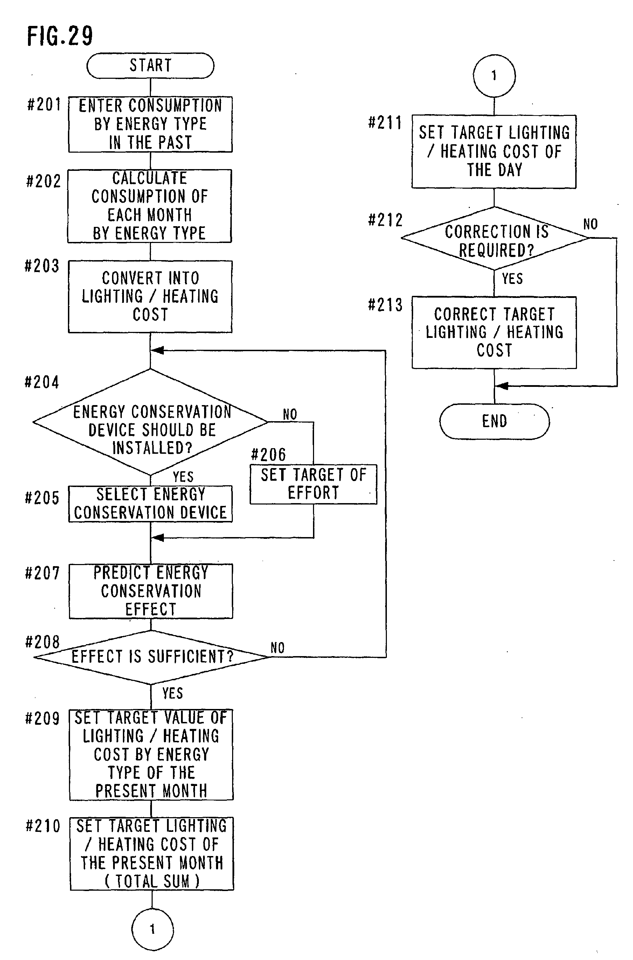

However, as being explained below, it is desirable that the conversion of the consumption target value by energy type into the lighting/heating cost (in Step #142) is performed every month, and that after setting the target lighting/heating cost of each month in the target lighting/heating cost setting process of Step #143, the target lighting/heating cost of each day is set by the prorated daily basis calculation. As mentioned above, the utility fee such as electric power or gas is usually charged as the basic fee plus as-used basis. If the conversion is performed every day, the error may be large. Fig. 29 is a flowchart showing the detail process for setting the target lighting/heating cost of each month, and further setting the target lighting/heating cost of each day in Step #141 through Step #143 in Fig. 28.

First in Step #201, the energy consumption of each month during the period of one or more years in the past is entered. If the energy consumption in the past is remained in a family budget note or as a payment record from a budget account for utility fees, the consumption can be calculated reversely using a predetermined conversion formula. It is desirable to enter the consumption of not only the previous year but during the period of three years or so.

In Step #202, the consumption by energy type is calculated for each month. For example, among the consumption of three years by energy type entered in Step #201, an average of the consumption by energy type of the same month in each year is calculated as the consumption by energy type of each month.

In Step #203, the consumption by energy type of each month is converted into the lighting/heating cost as explained above.

In Step #204, it is decided whether an energy conservation device should be installed or not.

In Step #205, the processor 15 selects the effective energy conservation device to be installed referring the database of the energy consumption in the present month or the coming season and the above-mentioned energy conservation device, so that the selected device is displayed on the display device 11. In addition, the table TB1 of the energy conservation expectation quantity (the expectation amount) shown in Fig. 18 is also displayed.

In Step #207, the energy conservation effect due to the energy conservation device selected as explained above is predicted and the result is outputted to the display device 11 or others. Although the annual energy conservation expectation amount (the lighting/heating cost) is described in the table TB1 shown in Fig. 18, the energy conservation effect (the lighting/heating cost) of the present month can be predicted by estimating the operating time in the present month. If the energy conservation device is not installed in Step #204, the energy conservation is performed only by human's effort. In this case, the target of effort is set (Step #206), and in accordance with the target, the energy conservation effect is predicted (Step #207). The above-mentioned target of effort is selected from the items of the energy conservation action shown in Fig. 19 and items in the supplemental explanation.

In Step #208, it is decided whether the energy conservation effect is sufficient or not. If it is insufficient, the process goes back to Step #204, in which the additional energy conservation device is installed or the target of effort is set. The installation of the energy conservation device or the set of the target of effort is performed so that the energy conservation effect (the lighting/heating cost) more than 10%, preferable 20% of lighting/heating cost in the past can be predicted. If the energy conservation effect (the prediction) is decided to be sufficient, the process goes to the next Step #209.

In Step #209, the target value of the lighting/heating cost by energy type of the present month is set. The value obtained by subtracting the energy conservation effect (the lighting/heating cost) predicted in Step #207 from the lighting/heating cost in accordance with the record in the past calculated in Step #203 for each energy type of electric power or gas becomes the target value (the recommended value) of the lighting/heating cost by energy type of the present month. The target value (the recommended value) of the lighting/heating cost by energy type of the present month, which is calculated by the processor 15 and is displayed on the display device 11 in this way, can be changed (reset) by using the keyboard 12 and the mouse 13.

Next in Step #210, the total sum of the lighting/heating cost by energy type of the present month is calculated and is set as the target lighting/heating cost of the present month.

Next in Step #211, the target lighting/heating cost of the day is set. Namely, the target lighting/heating cost of the day is set by the prorated daily basis calculation from the consumption target value of the present month set in Step #210.

In the next Step #212, it is decided whether the target lighting/heating cost of the day calculated by the prorated daily basis calculation should be corrected or not. If the correction is necessary, the correction is performed in Step #213. The contents of this correction are the same as the Step #109 mentioned above.

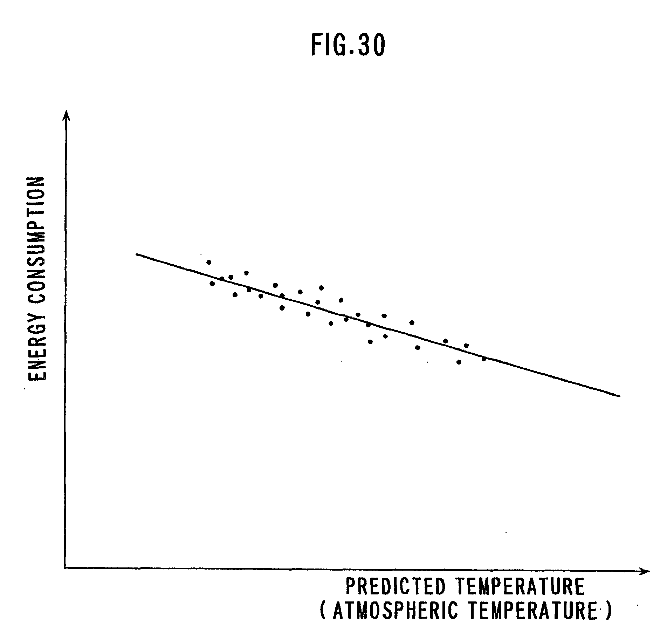

The relationship between the variation of the predicted atmospheric temperature and the appropriate correction quantity of the target lighting/heating cost is obtained by monitoring the relationship between the predicted atmospheric temperature and the energy consumption (i.e., the recorded lighting/heating cost) during a predetermined period (e.g., during a month). For example, in the case of energy for heating, the energy consumption becomes little as the atmospheric temperature rises. Therefore, the relationship as shown in Fig. 30 is obtained by the above-mentioned monitor. The line RL passing through the middle portion of the distribution of points plotted to indicate correlation by monitoring during a predetermined period indicates the relationship between the predicted atmospheric temperature and the energy consumption. In the case of the energy for cooling, the energy consumption becomes much as the atmospheric temperature rises. Therefore, on the contrary to the relationship RL having the positive gradient shown in Fig. 30, the relationship having the negative gradient is obtained.

In accordance with the relationship RL between the predicted atmospheric temperature and the energy consumption calculated as explained above, the target lighting/heating cost can be corrected in accordance with the predicted atmospheric temperature included in the weather information obtained from the network. The weather information can be obtained from the network plural times a day. Therefore, if the atmospheric temperature varies largely depending on the time slot, it is desirable to correct the target lighting/heating cost plural times a day corresponding to the variation of the atmospheric temperature.

The process from the Step #201 through Step #203 among the processes shown in the flowchart of Fig. 29 is performed only one time when the energy conservation system is installed. In addition, the process for setting the target lighting/heating cost of the present month in Step #204 through Step #210 is performed once in a month or in every season. The process for setting the target lighting/heating cost of the day after Step #211 is performed basically once a day, but the correction of the target lighting/heating cost can be once or plural times a day for each time slot if necessary as explained above.

Next, as another embodiment of the variation, a system for comparing the target value (the target lighting/heating cost) with the measured value (the recorded lighting/heating cost) in a cycle shorter than a day, e.g., every time slot for performing more detail and quick energy conservation action or control.

In this system, as a process (program) executed by the processor 15, a life pattern monitoring portion and a check point setting portion are provided.

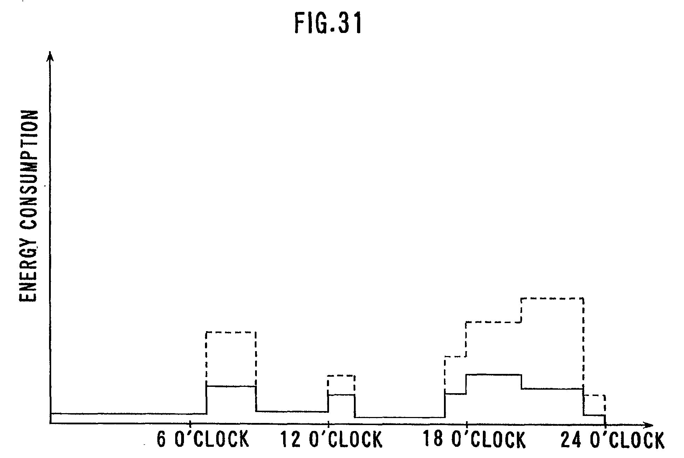

The life pattern monitoring portion monitors the variation of cumulative energy consumption along time that is different corresponding to unique life pattern of each family for a predetermined number of days. For example, it is supposed that the energy consumption per unit time in each time slot of a day in a typical family varies as shown in Fig. 31. This variation becomes substantially constant in a weekday corresponding to a family structure and a life pattern such as commuting of family members. Holidays in which the life pattern is not constant are eliminated. In addition, the energy consumption varies depending on the season. In Fig. 31, the solid line indicates the variation in spring or autumn, while the broken line indicates the variation in winter.

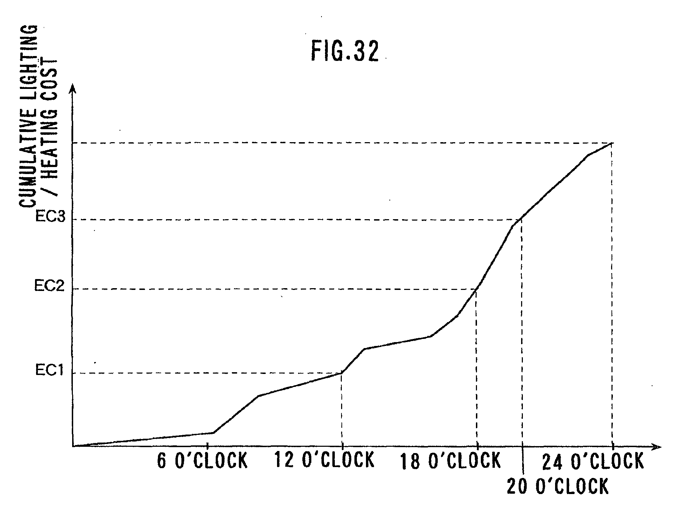

Therefore, during five weekdays for example, the variation of the cumulative energy consumption (the cumulative lighting/heating cost) along time is monitored, and the average values are plotted, so that the line graph is obtained as shown in Fig. 32.

The check point setting portion sets the time point of a day when the cumulative value of the recorded lighting/heating cost should be checked and the cumulative value of the target lighting/heating cost at the time in accordance with the above-mentioned line graph obtained from the monitor result of the life pattern monitoring portion (the variation of the cumulative consumption in a day).

For example, three time points when the total energy consumption reaches approximately 1/4, 1/2 and 3/4 of the total energy consumption (the lighting/heating cost) of a day are set as the time points when the cumulative value should be checked. In the example shown in Fig. 32, these time points are 12, 18 and 20 o'clock. The cumulative values of the target lighting/heating cost at the time points are set to EC1, EC2 and EC3 in accordance with the cumulative lighting/heating cost (the vertical axis) shown in Fig. 32.

As another example of setting, the time point when the variation of the cumulative lighting/heating cost is relatively small in a day may be selected to be set as the time point when the cumulative value should be checked. Alternatively, it is possible to check the cumulative value simply every four hours in the living hour (e.g., from 7:00 to 23:00).

As explained above, the time points in a day when the lighting/heating cost cumulative value should be checked and the target lighting/heating cost at the time points obtained from the monitor result during five weekdays are memorized in the hard disk drive 17 and used for energy conservation support process (control) in the weekdays of the next week. Namely, in accordance with the result of the previous week, the cumulative value of the lighting/heating cost in weekdays of this week is managed and evaluated by time slot. The target lighting/heating cost (the cumulative value) is compared with the recorded lighting/heating cost (the cumulative value) for evaluation by time slot, the energy conservation action guide is displayed, and the energy conservation forced execution process is performed if necessary in the same way as the above-mentioned process for each day.

Next, as another embodiment of the variation, the test mode for setting the target lighting/heating cost will be explained.

In the above-mentioned embodiment, the consumption by energy type of each month of a few years in the past is entered, the consumption by energy type of each month is calculated by the average process, and the result is converted into the lighting/heating cost, which is summed so as to set the total energy consumption target value of each month, i.e., the target lighting/heating cost.

However, in the case where the family lives in a newly built house or moves to a new house, the consumption by energy type of each month during a few years in the past cannot be entered. In this case, in order to set the target lighting/heating cost as appropriately as possible, the system of this embodiment comprises a test mode for grabbing the energy consumption of equipment that consumes much energy. By this test mode, general electric power consumption when an electric air conditioner only in one room among plural rooms is working under a predetermined condition can be grabbed.

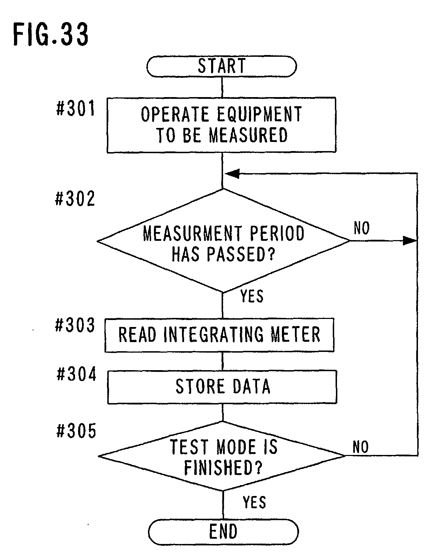

Fig. 33 is a flowchart showing the process in the above-mentioned test mode. First, the equipment to be measured is operated under a predetermined condition (Step #301). After that, during the test mode operation, other equipment that consumes the same energy (e.g., electric power) should be maintained in the constant state of working or non-working so that the energy consumption varies as little as possible. The displayed value on the integrating meter is read every predetermined measurement period (e.g., 10 minutes) after the start of the equipment's operation (Step #302 and Step #303).

The data read from the integrating meter reader are stored in the hard disk drive 17 (Step #304). The process from Step #302 through Step #304 is repeated until the test mode is finished when a predetermined test mode operating period passes or a test mode finishing instruction is entered (Yes in Step #305).

According to the above-mentioned test mode, general energy consumption (the lighting/heating cost) just after the start and in the normal operation when the equipment is operated under a predetermined condition can be known. The test mode is operated for plural apparatuses that consume much energy, so that general energy consumption when each of the apparatuses is operated under a predetermined condition can be grabbed. The result is used for setting the target lighting/heating cost more appropriately.

As explained above, according to the method and the system for supporting domestic energy conservation, the energy consumption of the plural energy types such as electric power and gas is evaluated as a total lighting/heating cost, the variation of the energy consumption can be grabbed easily as a balance of a family budget. For example, in a family consuming both the electric power and gas for air conditioning, the energy consumption can be managed as a whole without being bothered with managing the energy consumption individually.

In addition, the energy consumption cumulative value in each time slot that is different depending on a life pattern unique to each family is evaluated by using the target value set in accordance with the monitoring result in the past. Therefore, the management and the control can be performed in detail and quickly.

In addition, responding to the weather information (the predicted atmospheric temperature) obtained via a network, the target lighting/heating cost is corrected, and the corrected quantity is determined in accordance with the monitoring result in the past. Therefore, more appropriate correction is performed.

In addition, general energy consumption when specific energy consuming equipment is operated under a predetermined condition can be grabbed by using the test mode. Therefore, even in the case where the family lives in a newly built house or moves to a new house, and there are no record data of the past energy consumption, it is possible to grab the target lighting/heating cost as appropriately as possible.

[Second Step and Third Step]

Next, the second step SP2 and the third step SP3 will be explained more in detail.

The process and the operation of the supporting system 1 in the second step SP2 and in the third step SP3 will be understood sufficiently from the entire structure and function of the supporting system 1 and from the detail explanation about the installation timing and the first step SP1 of the energy conservation support device explained above.

Hereinafter, point unique to the second step SP2 and the third step SP3 will be explained though some points may be overlapped with the above explanation.

In the second step as explained above, the payment period of the amortization payment for the energy conservation support device installed in the second step is shortened.

It is supposed that the energy conservation effect of the first step is 20% of the past measured value (an average in a year), and the energy conservation effect of the second step is 10% (in a year). After finishing the payment in the first step, concerning the past payment amount of the utility fees, under the contract that the payment of the same amount should be continued until the payment is completed (if no energy conservation is performed, the same amount of payment must continue), the energy conservation effect in the first step is maintained at 20%, and the effect is added to the 10% in the second step.

Namely, the payment effect in the second step becomes total 30% of the payment record of the utility fees in the past.

Supposing that the facility cost in the second step is ¥300,000, and the payment amount of the utility fee is ¥20,000 every month as in Japanese average families (it varies largely among months) and is ¥240,000 annually, then ¥6,000 a month or ¥72,000 a year becomes the payment amount due to the energy conservation effect, so the payment will finish in four years and a little if the interest is zero.

Namely, the amortization period of a solar energy using device was ten and a few years conventionally, so it was difficult to obtain cost effectiveness. However, according to this embodiment, the amortization period is shortened substantially so that the cost effectiveness is secured. This system generates a subvention, which is used for supporting the system in the next step. In this example, the subvention twice the facility cost is obtained. Even if the interest is taken in account, there is no large difference because the period is short.

This is the largest effect of the sequential energy conservation investment by the supporting system 1 in this embodiment. It is very useful for installing an expensive solar energy using device having no cost effectiveness. In addition, this method is effective in a family considering the device as durable goods though it cannot be effective in a company that needs haste cost reduction effect by recouping the investment.

If the installation is not urgent, it is better to wait the completion of the first step before introducing the second step, so that the total payment amount becomes the minimum with low interest. In this case, the completion of the energy conservation is delayed. There are plural choices as combinations of them for installation timing.

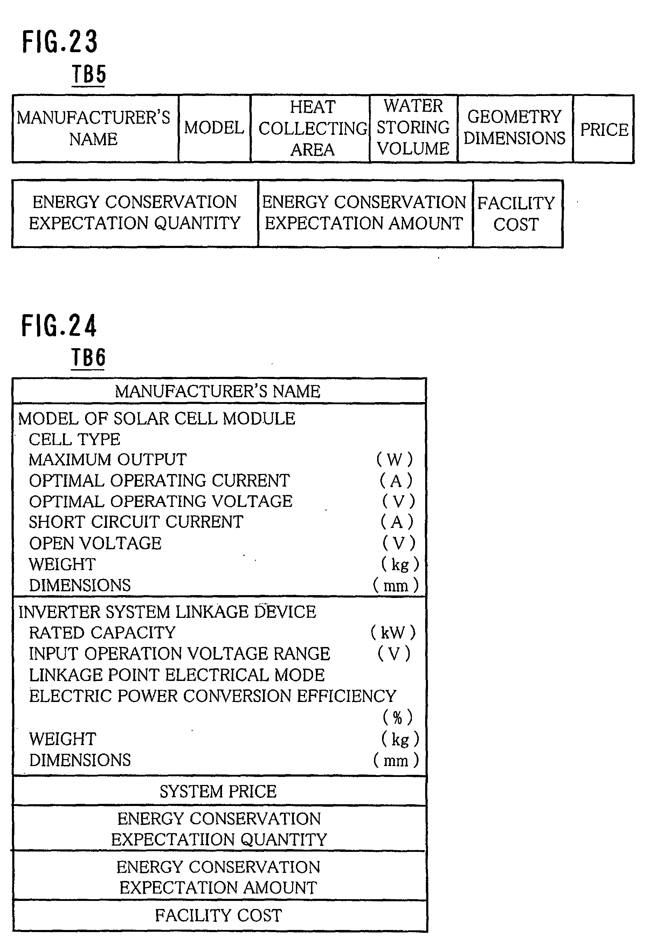

As shown in Fig. 23, the table TB5 includes the record of specification such as manufacturer's name, a model, a heat collecting area, a water storing volume, geometry dimensions and prices, and the energy conservation expectation quantity, the energy conservation expectation amount, the facility cost and the magnification of various solar water heaters.

As shown in Fig. 24, the table TB6 includes the record of specification such as manufacturer's name, a model of the module, the maximum output, the optimal operating current, the optimal operating voltage, the rated capacity of the inverter and data of items such as the system linkage device, electric power conversion efficiency, dimensions and prices, and the energy conservation expectation quantity, the energy conservation expectation amount, the facility cost and the magnification for various solar cells.

The tables TB5 and TB6 are generated in accordance with the latest information obtained from web pages of the manufacturers of the equipment via the Internet.

As shown in Fig. 25, the table TC1 includes the record of average power generation quantity of the solar cell in a month or in a day and the correction coefficient corresponding to the weather condition. The table TC1 shown in Fig. 25 is the case where an amorphous solar cell having the rated output of 1.98 kW are disposed at the south and north surface of the roof so as to be shifted to the west by 10 degrees from the south and at the inclination angle of 24 degrees.

The tables TB and TC are memorized in the hard disk drive 17.

The middle scale solar energy using device is selected so that the reproduced energy quantity is large and the magnification of the energy conservation expectation amount due to the reproduced energy to the facility cost of the equipment is within a predetermined value. In addition, even if the magnification exceeds the cost effectiveness, it can be reduced substantially in the future due to the support of the energy conservation device in the first step.

When the payment of the facility cost of the energy conservation device in the first step finishes, the large energy conservation effect supports the payment so that the solar energy using device having low cost effectiveness can gain good cost effectiveness.

It is decided that the time point when the magnification of the total amount of the facility cost of the solar energy using device and the remained amount of payment for the energy conservation device in the first step to the total energy conservation expectation amount of both the equipment becomes lower than a predetermined value is the installation timing of the solar energy using device.

In the third step, a large scale solar energy using device is installed with no initial investment being supported by the supporting system 1 in the state where the energy conservation support devices installed in the first step and the second step are working.

In this way, expecting the energy conservation effect of the equipment and the energy conservation effort of the user or the family, expensive equipment or facility can be installed without any initial investment under the promise of paying by the energy conservation effect.

The price of the solar cell that is a large scale solar energy using device is expected to be lowered by mass production.

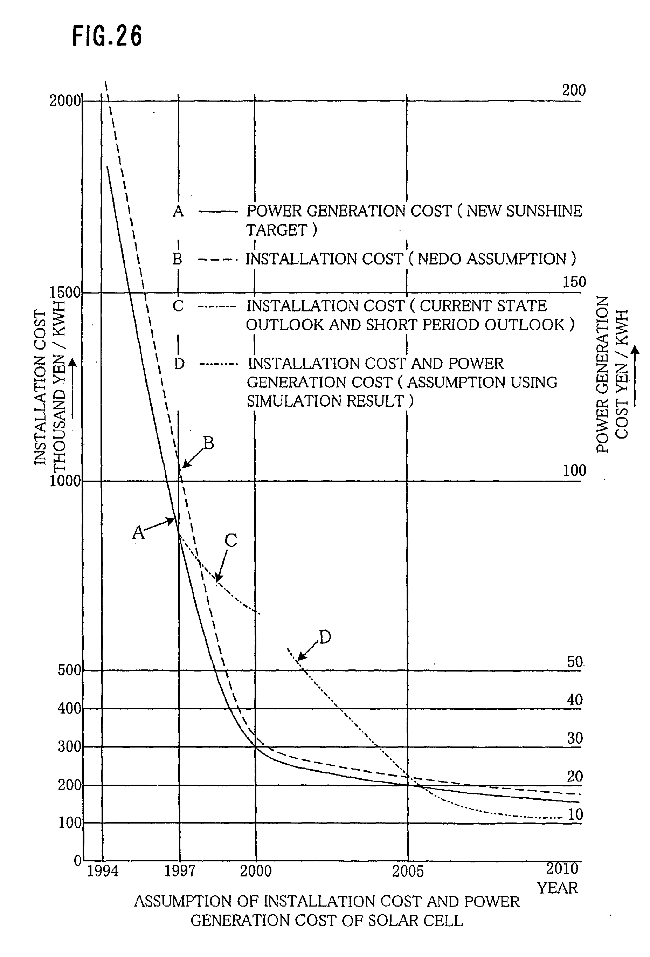

Namely, in the new sunshine project as shown in Fig. 26, the cost for generating electric power, which is three through four times the current commercial cost at ¥25/kWh, will become less than ¥10/kW in 2006-2007, and is further lowered to ¥6-7/kW. This rapid cost reduction is said to be 20-30% as the cumulative installation scale of the device is doubled, according to the classic rule of economy.

According to the energy conservation supporting system of this embodiment, the progress is accelerated since the family's expenses is not required, so it is expected that the price will drop rapidly when the number of cumulative installation increases by double in a few years after the installation. It is expected that the price drops to a fraction in four or five years after the installation of the system to the installation in the third step. Thus, the solar cell can be installed inexpensively in the third step, so that the system has large economic efficiency.

In addition, similarly to the above-mentioned second step, there is a payment supporting effect of the previous step. Supposing that the scale of the solar cell is 3 kW, electricity of annual power 3,000 kWh is generated, and the current purchase electric power price is ¥25, then the total energy conservation effect in the first step and the second step is ¥72,000 annually, while the energy conservation effect in the third step is approximately ¥75,000 annually. Namely, after finishing payment of the equipment cost in the second step, the supporting effect becomes approximately one to one, i.e., the supporting system generates the subvention that is substantially the same as the installation cost of the equipment. The effect is very large when taking the effect due to the drop of the equipment price into account.

For example, it is supposed that the supporting system 1 of this embodiment is installed in 2002, and the third step is introduced four years later in 2006 for installing a solar cell. The scale of the solar cell is 3 kW, the price is ¥250,000 per kW (the power generating cost is approximately a hundred millionth thereof), the total price is ¥750,000 with a half subvention and the net power generating price is ¥12-13/kW. Such reproduction electric power is paid by the energy conservation effect (¥147,000) of 60% and a little annually. With support of the first step and the second step, the payment will finish in five years and a little after the installation (around 2011).

Next, various examples will be explained.

[Example 1]

A small home computer and automatic input means of integrating meters such as electric power, gas and water supply are provided. The consumption by usage (such as air conditioning, hot water supply or lighting and power) is estimated in accordance with the consumption record of each energy type in one or more years in the past. The energy conservation device is selected and is installed for each usage. The predicted energy conservation effect of each energy type is subtracted from the consumption measured value, and the consumption target value is calculated. In addition, the variation of the weather is corrected from the weather forecast to be the consumption target value of each day, which is compared with the consumption measured value entered from the integrating meter so that the energy conservation effect is grabbed. In accordance with the effect, the energy conservation control including various energy conservation action guide instructions and forced operations is performed, so that the energy conservation is achieved.

Under the contract that the amount corresponding to the utility fee payment of each month in the past is paid out of the energy conservation effect, all the equipment that are necessary for this system and are installed in a house without any initial investment are used.

The lighting/heating cost is calculated from the composed quantity of the electricity and heating expense approximation in which a value multiplied by the average price within the variation range of the consumption of the energy in a month is added to the target value or the measured value of each energy type. The consumption or the conservation of energy such as electric power gas and water supply is summed, and means for indicating and representing the energy consumption in a family are provided.

In every periodical measurement once a month, the consumption measured value of the month is compared with the consumption in the past, so as to calculate the energy conservation effect. Effect distribution calculation means are provided, which distribute the amount corresponding to the energy conservation effect into a target norm portion for payment of the price of the above-mentioned equipment including interest and an excess achievement portion for paying back to the family.

Equipment price payment means are provided, which issue the payment instruction from a predetermined account or a card of a family member opened in a bank in advance to an account of the distributor online every periodical measurement or meter reading.

Thus, the supporting system for the first step for large energy conservation is constituted with zero initial investment.

The most energy conservation effect is obtained by the energy conservation support device. However, 20% of the energy conservation effect in average can be obtained by the energy conservation effort. Therefore, it is considered that there is little possibility of failing to reach the target, and most cases will be excess achievement. However, even if the case of failing to reach the target, the family has to bare the payment more than the result by paying the target norm as the equipment cost in accordance with the above-mentioned contract. The periodical measurement once a month is preferably set at the end of a month in contrast to the conventional metering day.

[Example 2]

In the system explained in Example 1, if a roof of a house can be used freely, energy conservation effect recording means are provided, which have a record of data of energy conservation ratio or energy conservation quantity indicating the extent of the effect of plural types of the middle scale solar energy using device memorized in advance and data of the facility cost the equipment. The above-mentioned tables TB1, TB3, TB5 and TB6 are concrete examples of the energy conservation effect recording means.

First selection logic means are provided, which calculate the reproduced energy quantity that is generated when the solar energy using device entered in advance is adopted to a family and support the selection of the model to be installed in accordance with the conservation quantity, i.e., the energy conservation quantity that is replaced with the consumption measured value of the alternative energy in the past in the family memorized in the computer and the magnification indicating the ratio of the facility cost of the equipment to the energy conservation expectation amount calculated from the energy conservation quantity.

As the energy conservation is progressed along with the passing time, the remained debt of the price of the energy conservation device in the first step decreases. The magnification is calculated, which is the ratio of the total sum of the facility cost of the solar energy using device and the debt to the energy conservation expectation amount calculated from the total energy conservation effect of the energy conservation device in the first step and the solar energy using device. From the magnification, the selection of the timing for installing the solar energy using device is supported. Such second selection logic means are provided.

Under the support of the first and the second selection logic means, a solar energy using device is selected and is installed with zero initial investment. By the energy conservation effect recording means, the model name and the effect data are entered.

The system is provided with means for measuring and cumulating the effective usage quantity of the reproduced energy generated by the solar energy using device so as to enter it in the computer automatically.

The system is provided with means for operating and grabbing the energy consumption by summing the effective usage quantity of the reproduced energy with the energy replaced with the reproduced energy, for evaluating the lighting/heating cost as equivalent to the energy replaced with the reproduced energy, for calculating the target value and the measured value, and for displaying them on the screen.

After the installation of the energy conservation support device in the second step, each energy conservation support device in the first step and the second step shares the payment of the facility cost by the energy conservation effect. As time passes and after the remained debt of the energy conservation device in the first step is paid completely, the energy conservation effect of the energy conservation device in the first step support the payment for the solar energy using device strongly. Such facility cost payment means are provided.

Thus, the supporting system for the second step is constituted, in which with zero initial investment, the middle scale solar energy using device is installed so that much energy conservation is achieved.

In the second step, the energy conservation support device to be candidate of installation is as follows.

(a) Solar water heater:

The size is 2-4, and usage is for hot water supply.

(b) Solar cell (Solar-electric power generator):

The output is 1-1.5 kW, and the usage is for general electric power source in home.
Normal output is 3-4 kW, and in a special case the two-time installation is adopted.

(c) Air heat collector:

The usage is for heating.

In the case where the solar water heater is installed in the second step, the effective usage ratio of the reproduced energy affects the energy conservation ratio largely. There are many usage of heat in winter, while the heat except for bath is excessive in the other seasons (hot water can be used for utility water if possible). The scale is determined automatically, i.e., 2-4 $m^2$ of solar water heater, or the effective usage quantity of the reproduced energy at 1,000-1,500 Mcal/year (when the collecting efficiency of solar heat is 50%, the effective usage ratio is 80%, and the effective usage ratio of the system is 0.4).

In the second step, the solar water heater is used generally, while the solar cell is for the step investment. Namely, if the bath is used every other day or in less frequency, or if the area of the roof is not sufficiently large, or if a heavy solar water heater is not desired to be placed on the roof, the solar cell is selected instead of the solar water heater. The air heat collector is limited to the special case where heat is demanded in seasons except winter. Model Selection Logic

The energy conservation ratio is approximately equal to or less than that in the first step, and 10-20% of the measured value in the past can be expected from the lighting/heating cost.

In addition, the magnification of the facility cost to the energy conservation expectation amount is set to a value less than ten times considering the support of the energy conservation effect in the first step for payment. However, in a special case such as the case where the energy conservation effect in the second step is much smaller than the first step, it is set to a value up to 20 times.

Timing Selection Logic

Since the energy conservation effect by the energy conservation support device in the first step and in the second step is summed, the total energy conservation ratio becomes 20-40%. On the other hand, concerning the magnification of the total facility cost, the payment in the first step is progressed as time passes so that the remained debt decreases. Thus, the total sum of the facility cost and the remained debt decreases. Therefore, the magnification of the total energy conservation expectation amount decreases. However, the magnification is set to a value less than 10 times considering the common sense of the above-mentioned cost effectiveness, and the timing when the magnification becomes less than 5-6 times is preferably set as the installation timing.

In the case where the reproduced energy is electric power, the excessive portion is usually used effectively and automatically by the system linkage. However, in the case of using heat, the effective usage ratio affects the energy conservation effect largely as explained above, so it is necessary to make effort of affective usage actively.

Therefore, a flowmeter with temperature correction and a thermometer are provided at the root conduit of the conduit in which the reproduced energy is used as hot water, and the effective usage quantity is measured and grabbed so as to be entered in the computer. The effective usage quantity is summed with the replacing energy, while maintaining the energy conservation in the entire family, so as to contribute the improvement of the effective usage ratio.

[Example 3]

In the system shown in Example 2, the energy conservation effect recording means are provided, which have a record of data of energy conservation ratio or energy conservation quantity indicating the extent of the effect of the plural models of the large scale solar energy using device entered via a network in advance and data of facility cost of the equipment.

The first selection logic means are provided, which support the selection of the model to be installed in accordance with the energy conservation ratio of the reproduced energy generated by the large scale solar energy using device contributes the energy conservation of the family and the magnification of the facility cost to the energy conservation expectation amount.

In accordance with the total energy conservation ratio of the energy conservation support devices in the first step and in the second step and the solar energy using device and with the magnification of the energy conservation expectation amount of all the energy conservation support device to the total expense of the facility cost of the solar energy using device and the above-mentioned remained debt when the remained debt of the energy conservation support device in the first step and the second step decreases as time passes, the timing when the solar energy using device should be installed is selected. Such second selection logic means are provided.

With the support of the first and the second selection logic means, the large scale solar energy using device is selected. The solar energy using device is installed with zero initial expense, and the model name and the effect data are entered via the energy conservation effect recording means.

The system is provided with means for measuring and calculating the effective usage quantity of the reproduced energy generated by the solar energy using device so as to enter it in the computer automatically.

Similarly to Example 2, means for calculating the target value and the measured value and for displaying them on the screen are provided.

After the installation of the solar energy using device in the third step, each energy conservation support device in the first step, in the second step and in the third step shares the payment of the facility cost by the energy conservation effect. As time passes and after finishing the payment of the remained debt of the energy conservation device in the first step, the energy conservation effect of the energy conservation support device in the first step supports the payment for the energy conservation support device in the second step. After finishing the payment of the remained debt of the energy conservation support device in the second step, the total energy conservation effect of the energy conservation support devices in the first step and in the second step supports the payment for the energy conservation support device in the third step strongly. Such facility cost payment means are provided.

Thus, the supporting system for the third step is constituted, in which with zero initial investment, a large scale solar energy using device is installed and large scale energy conservation is achieved.

As the large scale solar energy using device, a solar cell of 3-4 kW that can supply electric power for family substantially is assumed first. Next, a solar heat air conditioning system is assumed.

Concerning the solar cell, excessively generated electric power is bought by the electric power company via the system linkage at the current price. The facility cost is approximately ¥500,000/kW thanks to the government subvention, and the magnification to the energy conservation expectation amount is 20 times. In the future, it is expected that the price will be lowered by 20-30% whenever the cumulative number of installation becomes doubled.

Model Selection Logic

The energy conservation ratio is set with a guide of total energy conservation ratio of the energy conservation support devices in the first step and in the second step to approximately 20-40% of the measured value of the lighting/heating cost in the past. The installation space is also considered.

An allowable magnification of the facility cost to the energy conservation expectation amount is 10 times or less as a rule from the cost effectiveness, but the magnification excess to a certain extent should be allowed.

Timing Selection Logic

Concerning the total energy conservation ratio of the energy conservation support device in the first step, in the second step and the large scale solar energy using device in the third step, the energy conservation ratio (the lighting/heating cost) to the measured value in the past is 50-80%. Similarly to the second step, the remained debt of the energy conservation support device of the first step and the second step decreases as time passes, so that the total amount of the facility cost of the solar energy using device in the third step and the remained debt decreases. As a result, the magnification to the energy conservation expectation amount drops. From the common sense of the cost effectiveness, the time point when the magnification becomes 5-6 times or less is set to the timing for installation. However, the installation timing is determined considering transitions of the price of the equipment, the price of electric power or the price of city gas.

Significance of the second step and the third step is as follows.

(a) Since a price of a new product decreases year by year while the demand thereof increases, the benefit of the price decrease can be obtained easily by the sequential investment.

(b) Since the payment of interest is inevitable in the progress payments of an energy service company type, the sequential investment is effective for reducing the amount of the interest.

(c) Since energy prices can vary largely, the sequential investment is effective for avoiding a risk.

Furthermore, in the above-mentioned method of sequential investment timing selection logic, the timing is determined simply from the magnification of the total amount of the remained debt and the new investment amount to the energy conservation expectation amount. However, other various methods can be considered. For example, it is possible that when energy conservation of the equipment in each step progresses successfully so that a half of the payment for the equipment finishes, the next investment can be performed. In addition, it is possible to simulate the entire energy conservation and payment so that the payment becomes the shortest.

[Example 4]

In Example 4, a small amount of initial investment is performed so that both the energy conservation and the payment can finish as early as possible.

In the first step the system is introduced with payment, i.e., with an initial investment. At the same time as the introduction of the first step, or just after the short test period for confirming the operation of the first step, the second step is introduced with zero initial investment.

After the introduction of the second step, the total energy conservation effect of the first step and the second step support the payment for the equipment installed in the second step, the energy conservation target in each month is achieved, the remained debt decreases successfully, being supported by the computer about selecting the model and timing of the installation, and the energy conservation support device in the third step can be installed with zero initial investment.

After the installation, the payment period is shortened in the same way as explained above. Thus, the load of family is light, and the energy conservation can be completed in a short period as a whole.

Here, the equipment in the first step is purchased with some investment, e.g., an amount that can be paid by one bonus without difficulty (assuming approximately ¥200,000). The initial investment works effectively for shortening the payment period, so it can be called a shortening step.

In this case, the equipment purchased in the first step supports the payment for the equipment in the second step, so that the payment is performed in the speed three times faster than the speed when the payment is performed by the energy conservation effect of the equipment in the second step. During the payment period, the equipment is installed in the third step. After finishing the payment in the second step, the equipment in the third step pays by its own energy conservation effect. The payment is completed in approximately double speed. However, the installation can be performed when the price of the solar cell is not lowered yet in the third step, so there is a possibility that the period is not shortened largely in the early time when this system appears on the market.

For example, ¥200,000 is invested initially in the first step, so as to install the computer and energy conservation devices by energy usages. Simultaneously, a solar water heater at a cost of ¥300,000 is installed with zero initial investment in the second step. The energy conservation effect becomes ¥72,000 per year. The facility cost of the energy conservation support device in the second step is paid, and the energy conservation support device in the third step is installed when the magnification of the total amount of the remained debt amount and the facility cost of the third step to the total energy conservation effect of the first through the third steps becomes less than a predetermined value.

In this case, after the installation in the second step, the remained debt decreases as time passes, and the price of the solar cell to be installed in the third step decrease. Therefore, the above-mentioned magnification decreases as time passes under the condition that the energy conservation effect of the solar cell is substantially constant. When this magnification is determined, the installation timing is determined automatically.

[Example 5]

In Example 5, the amount of the initial investment is increased compared with Example 4, so that the completion time of the energy conservation is moved up, and the payment period is shortened more.

The equipment of the system for the first and the second steps is installed for payment simultaneously. At the same time as the introduction of the first and the second steps, with a support of the selection logic in the third step, the energy conservation support device in the third step is installed with zero initial expense.

After the installation in the third step, the payment for the energy conservation support device in the third step is performed by the total energy conservation effect in the first, the second and the third step, so that substantial energy conservation can be achieved with little payment by the family.

Namely, the initial investment is performed in the first step and in the second step simultaneously. ¥200,000 for the equipment in the first step and ¥300,000 for the equipment in the second step are paid in cash. It is supposed that the price of the equipment in the third step is approximately ¥2,000,000 (A third of the system price ¥3,000,000 including the engineering cost is paid by the government subvention).

The energy conservation effect is 20% in the first step, 10% in the second step and 30% and a little in the third step. The facility cost is paid by the total energy conservation effect of annual ¥72,000 and ¥75,000. so the payment takes 13.4 years without considering an interest. Therefore, the initial investment is not always effective, but it will be an effective installation method when the price of the solar cell decreases and the solar cell becomes a matured product.

In the above-mentioned case where the price of the solar cell becomes ¥750,000 in 2006 (a cost for generating electric power is approximately ¥25/kW), the payment finishes in 5.1 years, the large energy conservation is achieved in the same time as the system installation, and the initial investment works effectively for both sides of completion of the energy conservation and shortening of the payment period.

[Example 6]

In Examples 2-5, the average power generation quantity or the heat collecting quantity according to the record in the past is used as the reproduction quantity of the solar energy. In contrast, in Example 6, duration of sunshine and the atmospheric temperature information obtained from the weather forecast are used for predicting the reproduction quantity of the solar energy with good degree of accuracy.

Reproduced energy quantity predicting means are provided, which predict the reproduced energy quantity of the solar energy using device in accordance with duration of sunshine and the atmospheric temperature of the weather forecast obtained automatically via the Internet at a predetermined time in the previous day.

The reproduced energy quantity is predicted not from an average value in a year but from the data of duration of sunshine in tomorrow by the weather forecast with good degree of accuracy.

For example, in accordance with duration of sunshine, the power generation quantity generated by the solar cell is predicted. In accordance with duration of sunshine and a temperature, temperature and quantity of hot water generated by the solar water heater are predicted.

Energy conservation action guide means or energy conservation control means are provided, which use the predicted value for minimizing the purchasing energy. For example, in accordance with the predicted value, the quantity of stored hot water in the water heater using midnight electric power is adjusted. In this way, the utilization ratio of the reproduced energy is improved.

The target value of the solar energy using device is calculated as follows.

(A) Calculation of power generation quantity

Using NEDO national sunshine map or others, annual sunshine quantity in the region is calculated. The power generation quantities in a year and in each month are calculated from a cell capacity model of the solar cell, an orientation angle, and an inclination angle. Alternatively, from the record data of the region in NEDO assistance project, the power generation quantities in a year and in each month are estimated.

The annual power generation quantity calculated above and the power generation ratio in each month are entered.

(B) Calculation of power generation quantities in a month and in a day.

The ratio of the month is multiplied on the annual power generation quantity to make the power generation quantity in the month. Then, it is divided by the number of days to make the quantity per day.

(C) Correction of the power generation quantity in accordance with a weather condition.

The power generation quantity varies largely corresponding to the weather condition. An example of the variation is shown in Fig. 25.

As shown in Fig. 25, the coefficient that is multiplied on the average quantity per day of the month is 1.1-1.4 for fine weather, approximately 0.8 for cloudy weather, and approximately 0.6 for rainy weather. The coefficient value is determined from the record data.

Weather forecast information is obtained regularly, and the correction coefficient corresponding to the average power generation quantity per day is selected in accordance with the weather forecast, so as to set the target value of the electric power (purchasing power quantity) while predicting more accurate power generation quantity.

Concerning the solar water heater, similar steps are performed for setting the target value while predicting the reproduction heat quantity.

In order to utilize the predicted value, a heat storing tank or cold storing tank using the midnight electric power as explained above is used. In the house equipped with an air conditioner and a solar water heater utilizing the heat and the cold, the hot water generation quantity of the solar water heater is calculated from the predicted duration of sunshine in the next day in winter, the necessary heat quantity for heating is calculated from the predicted atmospheric temperature, the consumption for bath and kitchen during night is added, a discharging heat loss is taken in account, and the generated heat quantity of the solar water heater is subtracted from the necessary heat quantity to determine the storage heat quantity. In this way, wasteful power consumption can be reduced.

Also for cooling in summer, from the similar predicted duration of sunshine and the predicted atmospheric temperature, the necessary cold quantity and the predicted cold generation quantity are calculated, so that only the necessary cold quantity is stored.

The accurate prediction of the energy quantity that is generated by the solar energy using device is effective in the energy conservation.

[Example 7]

In an apartment or a condominium where the roof cannot be used freely, a fuel cell or a micro turbine is installed. The fuel cell or a micro turbine can be used with a battery so as to form a self-sustained power source. The installation of the equipment may be called a solar energy alternative step or an alternative step.

Concerning a plurality of the equipment, via a network, power generation quantity, heat collecting quantity, fuel consumption, price data, a facility cost and other data are obtained and recorded in the energy conservation effect recording means in advance.

For example, a system price is ¥500,000 (1-3 kW), a power generating efficiency is 35%, and a waste heat collecting efficiency is 40%. A power generation quantity is different substantially between the self sustain and the system linkage. It is supposed that 80% of the necessary electric power is supplied from the home power generation, and 70% of the waste heat collection is used efficiently.

Without the system linkage, the ability of the equipment cannot be used sufficiently. The power generation quantity is much at night. If waste heat is used mainly for a bath, it can be used the next day. Since it is difficult to store the heat, the user may be required to change his or her habit to take a bath just before going to bed. When the heat is used for air conditioning, it can be used efficiently. In this case, another consideration about the midterm usage is necessary.

Under the above-mentioned condition, a trial calculation can be performed as follows.

The fuel cost is 11,000 kilocalorie at a unit price of city gas ¥120.

The power generation quantity is 3,600 kWh a year, and the fuel cost is ¥26.8/kWh.

The fuel cost corresponds to the income by selling the generated electric power or the expense for purchasing electricity substantially, and the portion of the efficient usage of the waste heat collection becomes substantially an income. The payment for the facility cost is additionally required, which will be paid by the total sum of the energy conservation effect in the first step and the saving amount of the purchased electric power. The former is ¥48,000 a year, and the latter is ¥24,000 multiplied by the effective usage ratio of the waste heat collection.

Therefore, the facility cost is recovered in 7.8 years. Since the fuel cost is necessary also after the payment of the facility cost, the expense for purchasing the electric power is nearly ¥100,000 a year more than the case where the solar energy using device is used. It is a necessary choice under the condition where a roof cannot be used, so it is called an alternative step.

As the fuel cell, a polymeric solid type is used that is suitable for home use. This type is under development in the world by automobile manufacturers or others, and some manufacturers did pilot sales of mobile power sources using the type.

The power generation efficiency of a fuel cell is up to 40%, and the efficiency can be raised by using cogeneration method with additional usage of heat. However, since the polymeric solid type cannot be expected to generate so much heat quantity though the operating temperature of 100 °C is easy to handle.

Concerning the micro turbine, a few dozen kilowatt type for a shop is commercialized.

[Example 8]

The system is provided with automatic input means that measure the effective usage quantity of the electric power and heat generated by the energy conservation system using the fuel cell or the micro turbine and transmit the result to the computer for input.

The generated energy effective usage quantity is summed with the energy that is replaced with the energy generated in the alternative step and is calculated as the energy consumption to be displayed. The lighting/heating cost is evaluated as equivalent to the energy replaced with the generated energy, and the target value and the measured value thereof are calculated to be displayed on the screen.

In addition, action guide means and energy conservation control means are provided for following the execution of the energy conservation.

[Example 9]

When the above-mentioned supporting system of the above-mentioned embodiment becomes widespread, prices of various energy conservation support devices, especially the price of the solar cell will drop largely, and the configuration of the equipment in each step will be more flexible, so that various configurations of the equipment will become possible.

After the introduction of the first step, and after the successful operation of the system, with support of the computer, or without the support of the computer, at least one of the energy conservation device, a medium scale solar energy using device, a fuel cell and a micro turbine is installed as the energy conservation support device in the second step with zero initial investment.

In the same way as mentioned above, the energy conservation effect pays for the facility cost. After a period, a large scale energy conservation support device is installed in the third step with zero initial investment. The payment for the facility cost is performed in the same way as explained above, most or all the energy consumption at home is conserved with zero initial investment.

For example, the first step is made of the energy conservation device conventionally, the second step is made of a solar cell of 1.5 kW and the third step is made of a solar cell of 3 kW. The effect will increase particularly in a house where most heating and cooking depend on electricity.

Furthermore, in a house where a radiant heater such as an under-floor heater is used heavily, a large solar water heater having the area of approximately 4 m$^2$ is installed in the second step, and a solar water heater having the similar area is installed in the third step. Most air conditioning and water heating can be produced by using solar energy.

[Example 10]

By the reason same as Example 9, a part of the solar energy using device having cost effectiveness can be used as an energy conservation support device in the first step or a small scale micro turbine can be selected, instead of the energy conservation device in the future.

As the energy conservation support device installed in the first step, instead of the energy conservation device of each usage, is constituted by using one of the medium scale solar energy using device, a fuel cell or a micro turbine, or by using one or more combinations of the energy conservation devices for some usages.

[Example 11]

The widespread use of the supporting system may cause the price decrease of the energy conservation support device, which may increase the flexibility of the system structure. Therefore, the four or more steps are used without being limited to the three steps from the first through the third step. Simultaneously, the configuration of the equipment is diversified substantially.

The entire or a part of the steps are introduced with zero initial investment, so as to obtain a support of the energy conservation effect in the other step. Namely, the scale of each step is downsized and the number of step is increased. If there is some room in the roof area and the purchased energy is remained with some room of reduction, the number of steps is increased. The facilities of all or a part of the steps are installed with zero initial investment, and the energy conservation effect in the other step supports the payment for the facilities.

For example, the energy conservation device is installed with some initial investment in the first step, a solar cell of 1 kW is installed with zero initial investment in the second step, a solar cell of 1 kW is installed with zero initial investment in the third step, and a solar water heater is installed with zero initial investment in the fourth step. Thus, almost of all energy can be obtained as solar energy at early stage, so that the payment can be completed early.

[Example 12]

In every regular measurement of the system under operation once a month, the consumption measured value in the past, the consumption target value and the consumption measured value of the present month, or the consumption target value, the consumption measured value and the target achievement ratio of the present month are transmitted externally online.

In this way, a public organization such as a municipality, a supplier, an equipment distributor, a manufacturer or others can receive the data so as to grab the result of the energy conservation in each house easily.

Thus, the data can be used by the supplier for metering, by the equipment distributor for collecting the money or for doing a maintenance or post-sale support of the equipment, or by the public organization for grabbing the state of the energy conservation or for payment of the subvention with the result.

[Example 13]

The online information of the energy conservation result from each family is received, and the received information is summed and analyzed. Thus, the public organization or others can grab the result or state of the energy conservation of families over a wide area.

[Wrap-up]

The effect of the supporting system 1 will be explained step by step.

(1) The energy consumption can be entered in a computer automatically using existing integrating meters. The data are displayed indoors so as to be understood easily and are cumulated.

(2) The payment data of the utility fee in a few years in the past are entered and are used for calculating the consumption by usage, so that the energy consumption of the family is analyzed. A usage and quantity having possibility of energy conservation are calculated and are used for grabbing the energy conservation effect combining with (1).

(3) The energy conservation effort items suitable for the user are recorded for plural steps in advance. In accordance with the achievement state of target, the instruction is changed and sometimes is controlled. Weather forecast information is obtained regularly. In cold days or in hot days, the set value is adjusted in advance, so that comfort of life will be compatible with the energy conservation.

(4) A plurality of energy conservation support devices (in the first step) are selected from the listed-up energy conservation support devices and are installed. The energy conservation effect thereof pays for its own facility cost. Initial investment is not necessary.

(5) After the first step, a medium scale solar energy using device is installed in the second step. Thus, the energy conservation is accelerated. The payment of the relatively expensive facility cost is supported by the energy conservation effect of the first step.

(6) After the second step, the large scale solar energy using device is installed in the third step. Thus, the energy conservation is accelerated more. The payment of the relatively expensive facility cost is supported by the energy conservation effect of the first and the second steps.

Thus, the energy conservation investment is progressed step by step without putting a load on the family budget, and various energy conservation support devices become popular in families together with the computer (the supporting system) so that the energy conservation is promoted.

As the solar energy using devices are installed, the technology is further developed and the price decreases. In this way, the solar energy using devices are used widely, which can play a key role in preventing the globe from being warm.

The effect is simulated as follows. As the input condition of the simulation, it is supposed that sales of the devices will start in the second half of 2000, the sale is 1,000,000 in the first year, 2,000,000 in the second year, 3000,000 in the third year and levels off after the year. It is supposed that the devices will be manufactured and sold by plural manufacturers that produce solar cells, computers and home appliances.

Here, the use of the solar heat is performed by a simple solar water heater. This device is a matured product and its price is fixed to the current price. It is supposed that only the price of the solar cell will be reduced substantially responding to the cumulative production quantity in the future by mass production. Among the first investments, people living in an apartment or a condominium (40%) cannot progress to the second and the third steps by his or her will, and have to wait the time when the use of the solar energy is progressed by the expecting electric power companies or gas companies. Therefore the second and the subsequent steps are eliminated from the calculation. In other words, it is supposed that 60% of the people who did the first investment will go to the second and the third investment. In addition, it is supposed that 20% of all people did the first investment with cash, and they are to do the second investment in the first year.

The result of this simulation is admirable. The mass production scale of this solar cell will be increased rapidly from one third of the target of the sunshine project at present to reach the target in two years, exceeds much over the target in the third year, and reaches eight times the target of the project in 2005. Then, the price of the solar cell will drop rapidly down to one fifth of the current price in 2005, the power generation cost will decrease down to approximately one fifth of the current cost as a natural result, and will be much lower than the current market price for home use. It will be nearly ¥10 in 2010 and will be lower than ¥10 in 2015 at latest. The solar energy will be not only clean but also the most inexpensive energy. This calculation does not take it in account that the energy companies move into this market. If they move in the market, the cost of the solar power generation will be reduced more, and the shift to the solar energy will be accelerated.

In the above-mentioned various embodiments and examples, the entire or partial structure, shape, size, number, material, contents and order of process or others of the energy conservation support device or the supporting system 1 can be modified in accordance with the scope of the present invention if necessary.

INDUSTRIAL APPLICABILITY

As explained above, the present invention can reduce the energy consumption of electric power, gas, and/or water supply that are used at home. Especially, without putting a load on a family budget, investment for the energy conservation can be performed step by step, so that various energy conservation support devices together with a computer (a supporting system) can be used widely in families.

**Claims**

1. A method for supporting energy conservation by using a computer for the purpose of reducing consumption of energy such as electric power or gas used at home, the method comprising the steps of:

memorizing an energy conservation table including items of energy conservation means effective at reducing the energy consumption and their effects in advance;
entering energy consumption of each month during one or more years in the past;
estimating energy consumption by usage in each month in accordance with the variation of the energy consumption in each month;
selecting a plurality of effective energy conservation means from the energy conservation table in accordance with the energy consumption by usage so as to display the selected energy conservation means;
setting a target value of the energy consumption obtained by subtracting energy conservation prediction quantity by the selected energy conservation means from the energy consumption in the past; and
detecting an energy consumption measured value using means for entering a measured value of the integrating meter for the energy consumption automatically; and
comparing the target value with the measured value for evaluation.

2. A method as recited in claim 1, further comprising the step of classifying the energy conservation means into means for performing the energy conservation by installing an energy conservation device effective at reducing the energy consumption and means for performing the energy conservation by effort of family members without installing an energy conservation device.

3. A method as recited in claim 1, further comprising the steps of calculating the target value of a day from the target value of the present month, and detecting the measured value every day, wherein the comparing step of the target value with the measured value is performed every day.

4. A method as recited in claim 3, further comprising the steps of obtaining weather information regularly via a network, and correcting the target value of a day in accordance with the weather information.

5. A method as recited in claim 3, wherein the comparing step performed every day includes the step of displaying a cumulative value obtained by cumulating the difference between the target value of a day and the measured value detected every day from the first day of the present month.

6. A method as recited in claim 5, further comprising the step of displaying an action guide including means for performing the energy conservation by effort of the family members from the energy conservation table so as to encourage effort of the energy conservation when the cumulative value is negative and the absolute value thereof exceeds a first threshold value.

7. A method as recited in claim 5, further comprising the step of executing forced energy conservation of predetermined equipment when the cumulative value is negative and the absolute value thereof exceeds a second threshold value that is larger than the first threshold value.

8. A method as recited in claim 7, wherein the forced energy conservation executing step is performed only during a predetermined time slot.

9. A method as recited in claim 2, further comprising the steps of calculating energy conservation effect in the present month by comparing the energy consumption measured value in the present month with energy consumption in the same month of the past year, and depositing all or a part of the amount corresponding to the energy conservation effect into a predetermined account online as a fund or an amortization payment for purchasing the energy conservation device or a home energy generator.

10. An apparatus for supporting energy conservation for the purpose of reducing consumption of energy such as electric power or gas used at home, the apparatus comprising:

a storage device for storing energy conservation table including items of energy conservation means effective at reducing the energy consumption and their effects in advance;
an input device for entering energy consumption of each month during one or more years in the past;
a consumption-by-usage estimating portion for estimating energy consumption by usage of each month in accordance with the variation of the energy consumption in each month;
an energy conservation means selecting portion for selecting effective plural energy conservation means from the energy conservation table in accordance with the energy consumption by usage; and
a target value setting portion for setting a consumption target value by usage by subtracting the energy conservation prediction quantity of the selected energy conservation means from the energy consumption by usage.

11. An apparatus as recited in claim 10, further comprising a day target value setting portion for setting a consumption target value of a day from the energy consumption target value by usage of the present month, a consumption detecting device for detecting a day energy consumption measured value, and a comparing portion for comparing the target value with the measured value.

12. An apparatus as recited in claim 11, wherein the consumption detecting device includes an energy consumption detector for detecting total consumption of electric power, gas and water supply by energy type, and an energy consumption detector by equipment for detecting individual energy consumption of equipment that consumes much energy particularly.

13. An apparatus as recited in claim 11, further comprising a communication device for obtaining weather information regularly via a network, and a target value correcting portion for correcting the target value in accordance with the weather information.

14. An apparatus as recited in claim 11, further comprising a forced energy conservation performing device for executing forced energy conservation of predetermined equipment when the cumulative value, which is obtained by cumulating the difference between the target value and the measured value from the first day of the present month, is negative and the absolute value thereof exceeds a predetermined threshold value.

15. An apparatus as recited in claim 14, wherein the forced energy conservation performing device includes a timer and executes the forced energy conservation such as stopping electric power supply only in a predetermined time slot.

16. A computer readable recording medium in which a program of a computer is recorded for the purpose of reducing consumption of energy such as electric power or gas used at home, the program comprising the steps of:

(a) memorizing an energy conservation table including items of energy conservation means effective at reducing the energy consumption and their effects in advance;
(b) entering energy consumption of each month during one or more years in the past;
(c) estimating energy consumption by usage in each month in accordance with the variation of the energy consumption in each month;
(d) selecting a plurality of effective energy conservation means from the energy conservation table in accordance with the energy consumption by usage so as to display the selected energy conservation means;
(e) setting a target value of the energy consumption by usage obtained by subtracting energy conservation prediction quantity by the selected energy conservation means from the energy consumption by usage in the past;
(f) calculating a day consumption target value from an energy consumption target value by usage of the present month and setting the result;
(g) detecting a day energy consumption measured value; and
(h) comparing the target value with the measured value for evaluation.

17. A method for supporting energy conservation by using a computer for the purpose of reducing consumption of plural types of energy such as electric power or gas used at home, the method comprising the steps of:

converting a consumption target value of each energy type into a lighting/heating cost that is a common unit;

calculating a target lighting/heating cost corresponding to a total sum of plural energy consumption target values;

converting a consumption measured value of each energy type into the lighting/heating cost;

calculating a recorded lighting/heating cost corresponding to a total sum of plural energy consumption measured values; and

comparing the target lighting/heating cost with the recorded lighting/heating cost for evaluation.

18. A method as recited in claim 17, further comprising the steps of memorizing an energy conservation action table in advance that includes plural energy conservation action items effective at reducing each energy consumption and their effects converted into the lighting/heating cost, and determining the target lighting/heating cost considering the lighting/heating cost that is an effect of the selected energy conservation action item from the energy conservation action table.

19. A method as recited in claim 17 or 18, further comprising the steps of memorizing an energy conservation forcing table in advance that includes plural energy conservation forcing items for executing forced reduction of each energy consumption and their effect converted into the lighting/heating cost, and determining the target lighting/heating cost considering the lighting/heating cost that is an effect of the selected energy conservation forcing item from the energy conservation forcing table.

20. A method as recited in claim 17, 18 or 19, further comprising the steps of monitoring variation of cumulative energy consumption along time that depends on a life pattern unique to each family during a predetermined number of days, and setting a time in a day when a cumulative value of the recorded lighting/heating cost should be checked and a cumulative value of a target lighting/heating cost at the time.

21. A method as recited in claim 17, 18, 19 and 20, further comprising the steps of obtaining weather information regularly via a network, monitoring correlation between predicted atmospheric temperature included in the weather information and the recorded lighting/heating cost during a predetermined period, and correcting the target lighting/heating cost corresponding to the predicted atmospheric temperature in accordance with the monitor result.

22. A method as recited in any one of claims 17-21, further comprising the steps of using an integrating meter reader for reading a displayed value of an integrating meter of energy for grabbing energy consumption of specific energy consuming equipment, operating the energy consuming equipment while other equipment consuming the energy is maintained in a constant operating/non-operating state, and reading the displayed value of the integrating meter with the integrating meter reader at a predetermined time interval so as to store the read value in a storage device.

23. An apparatus for supporting energy conservation by using a computer for the purpose of reducing consumption of plural types of energy such as electric power or gas used at home, the apparatus comprising:

a target lighting/heating cost calculating portion for converting a consumption target value of each energy type into a lighting/heating cost that is a common unit and for calculating a target lighting/heating cost corresponding to a total sum of plural energy consumption target values;

a recorded lighting/heating cost calculating portion for converting a consumption measured value of each energy type into the lighting/heating cost and for calculating a recorded lighting/heating cost corresponding to a total sum of plural energy consumption measured values; and

a lighting/heating cost comparing portion for comparing the target lighting/heating cost with the recorded lighting/heating cost for evaluation.

24. An apparatus as recited in claim 23, further comprising a life pattern monitoring portion for monitoring variation of cumulative energy consumption along time that depends on a life pattern unique to each family during a predetermined number of days, and a check point setting portion for setting a time in a day when a cumulative value of the recorded lighting/heating cost should be checked and a cumulative value of a target lighting/heating cost at the time.

25. An apparatus as recited in claim 23 or 24, further comprising a weather correlation monitoring portion for obtaining weather information regularly via a network and for monitoring correlation between predicted atmospheric temperature included in the weather information and the recorded lighting/heating cost during a predetermined period, and a target correcting portion for correcting the target lighting/heating cost corresponding to the predicted atmospheric temperature in accordance with the monitor result.

**26.** An apparatus as recited in claim 23, 24 or 25, further comprising an integrating meter reader for reading a displayed value of an integrating meter of energy for grabbing energy consumption of specific energy consuming equipment, and a test mode in which the displayed value of the integrating meter is read with the integrating meter reader at a predetermined time interval when the energy consuming equipment is operated while other equipment consuming the energy is maintained in a constant operating/non-operating state, so as to store the read value in a storage device.

**27.** A computer readable recording medium in which a computer supporting program is recorded for the purpose of reducing consumption of energy such as electric power or gas used at home, the computer supporting program comprising the steps of:

converting a consumption target value of each energy type into a lighting/heating cost that is a common unit;
calculating a target lighting/heating cost corresponding to a total sum of plural energy consumption target values;
converting a consumption measured value of each energy type into the lighting/heating cost;
calculating a recorded lighting/heating cost corresponding to a total sum of plural energy consumption measured values; and
comparing the target lighting/heating cost with the recorded lighting/heating cost for evaluation.

**28.** A method for supporting energy conservation by using a computer for the purpose of reducing consumption of energy such as electric power, gas and/or water supply used at home, the method comprising the steps of:

calculating reduced portion of expenses obtained by energy conservation effect of an energy conservation support device when installing the energy conservation support device having energy conservation effect of reducing energy consumption in a house;
calculating a payment amount of amortization payment for facility cost when the energy conservation support device is installed; and
comparing the reduced portion of the expenses with the payment amount and displaying the comparison result for supporting the decision of whether the energy conservation support device should be installed or not.

**29.** A method for supporting energy conservation by using a computer for the purpose of reducing consumption of energy such as electric power, gas and/or water supply used at home, the method comprising the steps of:

calculating reduced portion of expenses obtained by both energy conservation effect of the installed energy conservation support device and energy conservation effect of an additional energy conservation support device when installing an additional energy conservation support device having energy conservation effect of reducing energy consumption in a house in which the energy conservation support device is already installed;
calculating a payment amount of amortization payment for both facility cost of the installed energy conservation support device and facility cost of the additional energy conservation support device when it is installed; and
comparing the reduced portion of the expenses with the payment amount and displaying the comparison result for supporting the decision of whether the energy conservation support device should be installed or not.

**30.** A method as recited in claim 28 or 29, further comprising the steps of:

memorizing an energy conservation table or a device list including plural energy conservation support device items and their energy conservation effects and facility costs in advance;
entering energy consumption of each month during one or more years in the past;
estimating energy consumption by usage in each month in accordance with variation of the energy consumption in each month; and
selecting an effective energy conservation support device from the energy conservation table in accordance with the energy consumption by usage so as to install the device.

**31.** A method for supporting energy conservation for the purpose of reducing consumption of energy such as electric power, gas and/or water supply used at home, wherein when installing an energy conservation support device having energy conservation effect of reducing energy consumption in a house, the method comprises:

a first step for determining an energy conservation support device that can be expected a predetermined target value as energy conservation effect and for installing the determined energy conservation support device; and
a second step for determining a second target value of energy conservation effect due to both the energy conservation support device installed in the first step and an additional energy conservation support device to be installed, and for installing the additional energy conservation support device at the time point when amortization period of facility cost for the energy conservation support device to be installed becomes a predetermined period or less by reduction of expenses obtained by the energy conservation effect or at the time point determined by support of another time point selection supporting means.

32. A method as recited in claim 31, wherein the method further comprises a third step for determining a third target value of energy conservation effect due to all the energy conservation support devices installed in the first step and the second step and a still additional energy conservation support device to be installed, and for installing the still additional energy conservation support device at the time point when amortization period of the facility cost for the energy conservation support device to be installed becomes a predetermined period or less by reduction of the expenses obtained by the energy conservation effect or at the time point determined by support of another time point selection supporting means.

33. A method as recited in claim 31 or 32, wherein payment of the facility cost of the energy conservation support device is started by amortization payment at the installation timing.

34. A method as recited in claim 33, further comprising the steps of dividing the energy conservation effect into a portion allocated to the payment for the facility cost and a portion allocated to payback to a family budget; and
depositing online the portion allocated to the payment for the facility cost in a predetermined account.

35. A method as recited in any one of claims 31 to 34, wherein the predetermined period is five to seven years.

36. A method as recited in any one of claims 31 to 35, further comprising the steps of obtaining weather information regularly via a network, and correcting the target value in accordance with the weather information.

37. A method as recited in any one of claims 31 to 36, further comprising the step of transmitting data of the energy consumption at home concerning a measured value and a target value or a target achievement ratio externally every month.

38. A system for supporting energy conservation by using a computer for the purpose of reducing consumption of energy such as electric power, gas and/or water supply used at home, the system comprising:

means for calculating reduced portion of expenses obtained by energy conservation effect of an energy conservation support device when installing the energy conservation support device having energy conservation effect of reducing energy consumption in a house;
means for calculating a payment amount of amortization payment for facility cost when the energy conservation support device is installed; and
means for comparing the reduced portion of the expenses with the payment amount and displaying the comparison result for supporting the decision of whether the energy conservation support device should be installed or not.

39. A system as recited in claim 38, further comprising:

a storage device for storing an energy conservation table including plural energy conservation support device items and their energy conservation effect and facility cost;
an input device for entering energy consumption of each month during one or more years in the past;
means for estimating energy consumption by usage in each month in accordance with variation of energy consumption in each month; and
means for selecting an effective energy conservation support device from the energy conservation table in accordance with the energy consumption by usage.

40. A system for supporting energy conservation for the purpose of reducing consumption of energy such as electric power, gas and/or water supply used at home, the system comprising:

first means for selecting an energy consumption device that can be expected a predetermined target value as energy conservation effect when installing an energy conservation support device having energy conservation effect of reducing energy consumption in a house;
second means for determining a second target value of energy conservation effect due to both the energy conservation support device selected by the first means to be installed and an additional energy conservation support device to be installed, and for selecting the additional energy conservation support device to be installed so that amortization period of facility cost of the additional energy conservation support device to be installed becomes a predetermined period or less by reduction of expenses obtained by the energy conservation effect; and display means for displaying the selected energy conservation support device on a display screen.

41. A system as recited in claim 40, further comprising third means for determining a third target value of energy conservation effect due to all the energy conservation support devices selected by the first means and the second means to be installed and a still additional energy conservation support device to be installed, and for selecting the still additional energy conservation support device to be installed so that amortization period of facility cost of the still additional energy conservation support device to be installed becomes a predetermined period or less by reduction of the expenses obtained by the energy conservation effect.

42. A system as recited in claim 40 or 41, further comprising means for instructing payment online that start the payment for the facility cost of the energy conservation support device by the amortization payment from each installation timing.

43. A system as recited in any one of claims 40-42, wherein the predetermined period is five to seven years.

44. A system as recited in any one of claims 40-43, further comprising means for obtaining weather information regularly via a network, and means for correcting the target value in accordance with the weather information.

45. A system as recited in any one of claims 40-44, further comprising transmission means for transmitting data of energy consumption at home concerning a measured value, a target value or a target achievement ratio externally every month.

46. A system as recited in any one of claims 40-42, further comprising means for obtaining weather information regularly via a network, means for predicting generation quantity of energy generated by the energy conservation support device using solar energy in accordance with duration of sunshine and atmospheric temperature included in the weather information.

47. A system for supporting energy conservation for the purpose of reducing consumption of energy such as electric power, gas and/or water supply used at home, the system comprising:

a device installation supporting portion for obtaining and displaying information about a model to be installed and installation timing in accordance with a device list concerning an energy conservation support device having energy conservation effect of reducing energy consumption;

an energy conservation effect managing portion for calculating and displaying energy conservation effect record in accordance with measured value of energy consumption at home after installing the energy conservation support device;

an energy conservation control portion for executing energy conservation control so as to increase energy conservation effect when the energy conservation effect record is lower than a predetermined value; and

a payment process portion for executing a process or issuing an instruction for depositing a payment amount of amortization payment for a facility cost of the installed energy conservation support device in a predetermined account.

48. A computer readable recording medium in which a program of a computer is recorded for realizing an energy conservation supporting system for reducing consumption of energy such as electric power, gas and/or water supply used at home, the program comprising:

a first process for selecting an energy conservation support device that can be expected a predetermined target value as energy conservation effect when installing an energy conservation support device having energy conservation effect of reducing energy consumption in a house;

a second process for determining a second target value of energy conservation effect due to both the energy conservation support device selected and installed in the first process, and for selecting an additional energy conservation support device to be installed so that an amortization period of a facility cost of the additional energy conservation support device to be installed becomes a predetermined period or less by reduction of expenses obtained by the energy conservation effect; and

a display process for displaying the selected energy conservation support device on a display screen.

49. A recording medium as recited in claim 48, wherein the program further comprises a third process for determining a third target value of energy conservation effect due to all the energy conservation support devices selected and installed in the first process and the second process and a still additional energy conservation support device to be installed, and for selecting the still additional energy conservation support device to be installed so that an amortization period of a facility cost of the still additional energy conservation support device to be installed becomes a predetermined period or less by reduction of expenses obtained by the energy conservation effect.

# FIG.1

## FIG.2

1

| 11 | DISPLAY DEVICE | | 14 | PRINTER |
| 12 | KEYBOARD | | 15 | PROCESSOR |
| 13 | MOUSE | | 16 | MAIN MEMORY |
| 20 | ENERGY CONSUMPTION DETECTOR BY ENERGY TYPE | | 17 | HARD DISK DRIVE |
| 21 | ENERGY CONSUMPTION DETECTOR BY EQUIPMENT | | 18 | REMOVABLE DISK DRIVE | 23 |
| 22 | FORCED ENERGY CONSERVATION PERFORMING DEVICE | | 19 | COMMUNICATION DEVICE |

## FIG.3

```
              ┌─────────────┐
              │    START    │
              └─────────────┘
                     │
SP1    ┌──────────────────────────────┐
       │         FIRST STEP           │
       └──────────────────────────────┘
                     │
SP2    ┌──────────────────────────────┐
       │         SECOND STEP          │
       └──────────────────────────────┘
                     │
SP3    ┌──────────────────────────────┐
       │         THIRD STEP           │
       └──────────────────────────────┘
                     │
              ┌─────────────┐
              │     END     │
              └─────────────┘
```

## FIG.4

1

```
KN1 ──┐  ┌──────────────────────────────┐
      └──│    DEVICE INSTALLATION       │
         │      SUPPORT FUNCTION        │
         └──────────────────────────────┘

KN2 ──┐  ┌──────────────────────────────┐
      └──│ ENERGY CONSERVATION EFFECT   │
         │      MANAGEMENT FUNCTION     │
         └──────────────────────────────┘

KN3 ──┐  ┌──────────────────────────────┐
      └──│    ENERGY CONSERVATION       │
         │      CONTROL FUNCTION        │
         └──────────────────────────────┘

KN4 ──┐  ┌──────────────────────────────┐
      └──│   PAYMENT PROCESS FUNCTION   │
         └──────────────────────────────┘
```

# FIG.5

INSTALLATION SUPPORT

#11 ENTER AND GRAB RECORD IN THE PAST

#12 GRAB CONSUMPTION RECORD BY USAGE AND TARGET OF REDUCTION

#13 REFER DEVICE TYPE LIST

#14 CALCULATE ENERGY CONSERVATION EFFECT

#15 ENTER FACILITY COST

#16 COMPARE

#17 DISPLAY COMPARISON RESULT

END

FIG.6

```
            ( EFFECT MANAGEMENT )
                      |
#21      +------------------------+
         |       CALCULATE        |
         |  CONSUMPTION TARGET    |
         |         VALUE          |
         +------------------------+
                      |
#22            / CORRECTION IS \        NO
              <    REQUIRED?     >-------+
               \               /         |
                  YES                    |
#23      +------------------------+      |
         |        CORRECT         |      |
         +------------------------+      |
                      |<----------------+
#24      +------------------------+
         |     ENTER MEASURED     |
         |         VALUE          |
         +------------------------+
                      |
#25      +------------------------+
         |       CALCULATE        |
         |      CONSUMPTION        |
         |    MEASURED VALUE      |
         +------------------------+
                      |
#26      +------------------------+
         |     CALCULATE AND      |
         |  DISPLAY CUMULATIVE    |
         |         VALUE          |
         +------------------------+
                      |
                ( END )
```

43

**FIG.7**

```
        ┌──────────────────────┐
        │ ENERGY CONSERVATION  │
        │      CONTROL         │
        └──────────────────────┘
                   │
#31          ╱──────────────╲
            ╱    ENERGY       ╲        NO
           ╱ CONSERVATION EFFECT ╲──────────────┐
           ╲  IS INSUFFICIENT?  ╱               │
            ╲──────────────────╱                │
                   │ YES                         │
#32      ┌──────────────────────┐               │
         │  DISPLAY ACTION GUIDE │               │
         └──────────────────────┘               │
                   │                             │
#33          ╱──────────────╲                   │
            ╱    ENERGY       ╲       NO          │
           ╱ CONSERVATION EFFECT ╲───────────►   │
           ╲ IS VERY INSUFFICIENT? ╱             │
            ╲──────────────────╱                 │
                   │ YES                          │
#34      ┌──────────────────────┐                │
         │   EXECUTE FORCEDLY    │               │
         └──────────────────────┘               │
                   │◄────────────────────────────┘
           ┌──────────────┐
           │      END      │
           └──────────────┘
```

**FIG.8**

```
           ┌──────────────────┐
           │ PAYMENT PROCESS  │
           └──────────────────┘
                   │
#41    ┌──────────────────────┐
       │ TRANSMIT AMORTIZATION │
       │   PAYMENT AMOUNT      │
       └──────────────────────┘
                   │
#42    ┌──────────────────────┐
       │ ADD EXCESS AMOUNT TO  │
       │   ACCOUNT OF FAMILY   │
       │  BUDGET AS PAYBACK    │
       └──────────────────────┘
                   │
           ┌──────────────┐
           │      END      │
           └──────────────┘
```

# FIG.9A

SUPPOSING THAT AN AVERAGE ANNUAL MEASURED VALUE OF DOMESTIC ELECTRICITY AND HEATING EXPENSE IS 240 THOUSANDS YEN, A VALUE OF ANNUAL ENERGY CONSERVATION AMOUNT $\eta$ IS SHOWN IN PARENTHESES.

| | FACILITY COST | ENERGY CONSERVATION EFFECT ( CONVERSION OF ANNUAL ENERGY CONSERVATION AMOUNT ) | PERIOD |
|---|---|---|---|
| FIRST STEP | COMPUTER + ENERGY CONSERVATION DEVICE $P_1 = 200$ THOUSANDS YEN | ENERGY CONSERVATION DEVICE BY USAGE APPROXIMATELY 20% OF ENERGY CONSERVATION ANNUAL ENERGY CONSERVATION AMOUNT $\eta_1$ ( 48,000 YEN ) | PAYMENT PERIOD $T_1 = P_1 / \eta_1$ REMAINED DEBT AMOUNT $P_{z1} = P_1 \times ( T_1 - t_1 ) / T_1$ $t_1$ : SECOND STEP INSTALLATION TIMING DECIDE SECOND STEP INSTALLATION TIMING t1 SATISFYING WITH THE FOLLOWING EQUATION IS DECIDED. $( P_2 + P_{z1} ) / ( \eta_1 + \eta_2 ) \leqq$ 5 THROUGH 6 YEARS |
| SECOND STEP | SOLAR WATER HEATER $3m^2$ ( SOLAR ) $P_2 = 300$ THOUSANDS YEN | SOLAR WATER HEATER APPROXIMATELY 10% OF ENERGY CONSERVATION ANNUAL ENERGY CONSERVATION AMOUNT $\eta_2$ ( 24,000 YEN ) | PAYMENT PERIOD $T_2 = ( P_2 + P_{z1} ) / ( \eta_1 + \eta_2 )$ REMAINED DEBT AMOUNT $P_{z2} = ( P_2 + P_{z1} ) \times ( T_2 - t_2 ) / T_2$ DECIDE THIRD STEP INSTALLATION TIMING $t_2$ SATISFYING WITH THE FOLLOWING EQUATION IS DECIDED. $( P_3 + P_{z2} ) / ( \eta_1 + \eta_2 + \eta_3 ) \leqq$ 5 THROUGH 6 YEARS |
| THIRD STEP | SOLAR CELL GENERATING DEVICE 3kW $P_3 = 2$ MILLION YEN $P_3$ WILL BECOME 750 THOUSANDS YEN AFTER FIVE YEARS DUE TO A MASS PRODUCTION EFFECT. | SOLAR CELL GENERATING DEVICE GENERATE ELECTRICITY APPROXIMATELY 3MWh ANNUALLY APPOROXIMATELY 30% OF ENERGY CONSERVATION ANNUAL ENERGY CONSERVATION AMOUNT $\eta_3$ ( 72,000YEN ) | PAYMENT PERIOD $T_3 = ( P_3 + P_{z2} ) / ( \eta_1 + \eta_2 + \eta_3 )$ |

EP 1 271 366 A1

## FIG.9B

46

## FIG.10A

AVERAGE MEASURED VALUE IN THE PAST
¥20,000 / MONTH , ¥240,000 / YEAR

FIRST STEP 20% OF ENERGY CONSERVATION
SECOND STEP 30% OF ENERGY CONSERVATION
THIRD STEP 70% OF ENERGY CONSERVATION

RATIO TO PAST RECORD 80%
70%
30%

TOTAL SUM OF LIGHTING / HEATING COST ENERGY CONSUMPTION %

ZERO YEAR     FIVE YEARS     TEN YEARS

## FIG.10B

PAYMENT FOR DEVICE THOUSAND YEN / MONTH

¥4,000 / MONTH
¥6,000 / MONTH
¥14,000 / MONTH

ZERO YEAR     FIVE YEARS     TEN YEARS

## FIG.10C

FIRST STEP ¥200,000
COMPUTER + PLURAL ENERGY CONSERVATION
FACILITIES
SECOND STEP ¥300,000
MEDIUM SCALE SOLAR ENERGY USING DEVICE
THIRD STEP ¥800,000
LARGE SCALE SOLAR ENERGY USING DEVICE
( SOLAR CELL GENERATING DEVICE )

# FIG.11

TOTAL SUM OF LIGHTING / HEATING COST ENERGY CONSUMPTION %

MEASURED VALUE IN THE PAST

RATIO TO PAST RECORD 70%

30%

ZERO YEAR    FIVE YEARS    TEN YEARS

REMAINED DEBT AMOUNT OF INVESTMENT

TEN THOUSAND YEN

ONLY FIRST STEP ¥200,000 WITH CASH

SECOND STEP SOLER ¥300,000

THIRD STEP SOLAR-ELECTRIC POWER GENERATOR ¥900,000

90

20

30

ZERO YEAR    FIVE YEARS    TEN YEARS

INTRODUCTION OF FIRST STEP

INTRODUCTION OF SECOND STEP

INTRODUCTION OF THIRD STEP
COMPLETION OF ENERGY CONSERVATION

COMPLETION OF PAYMENT

**FIG. 12**      ( DEVICES INSTALLED WITH ZERO INITIAL INVESTMENT ARE SHOWN IN **BOLD LINE FRAMES.** )

FIRST STEP $\xrightarrow{\text{2-3 YEARS}}$ SECOND STEP $\xrightarrow{\text{2-3 YEARS}}$ THIRD STEP

| FAMILY MEETING FOR IMPROVEMENT IN ENVIROMENT CONSCIOUSNESS | PAYBACK TO FAMILY BUDGET | | PAYBACK TO FAMILY BUDGET | 70~80% AFTER COMPLETION OF PAYMENT, TOTAL AMOUNT IS PAID BACK TO FAMILY BUDGET. | PAYBACK TO FAMILY BUDGET |

ENERGY CONSERVATION SUPPORTING SYSTEM

INTEGRATING METER AUTOMATIC INPUT DEVICE

ENERGY CONSERVATION DEVICES BY USAGE

ENERGY CONSERVATION EFFORT 20%   10~20%

30~40%

ENERGY CONSERVATION EFFECT OF 20% USING DEVICE   20%

MEDIUM SCALE SOLAR ENERGY USING DEVICE

EX. SOLAR

10~20%

40~50%

ENERGY CONSERVATION EFFECT OF ADDITIONAL 10 % USING DEVICE   30%

LARGE SCALE SOLAR ENERGY USING DEVICE

EX. SOLAR CELL GENERATING DEVICE SOLAR SYSTEM

10~20%

ENERGY CONSERVATION EFFECT OF ADDITIONAL 30% USING DEVICE   60%

PAYMENT FOR DEVICE

REMAINED DEBT   PAYMENT FOR DEVICE

REMAINED DEBT   PAYMENT FOR DEVICE

EP 1 271 366 A1

FIG.13

START

#101 ENTER ENERGY CONSUMPTION IN THE PAST

#102 ESTIMATE ENERGY CONSUMPTION BY USAGE IN EACH MONTH

a

#103 ENERGY CONSERVATION DEVICE IS INSTALLED? — NO

YES

#104′ SET TARGET OF EFFORT

#104 SELECT ENERGY CONSERVATION DEVICE

#105 PREDICT ENERGY CONSERVATION EFFECT

#105′ EFFECT IS SUFFICIENT? — NO

YES

#106 SET CONSUMPTION TARGET VALUE OF THE PRESENT MONTH

b

#107 SET CONSUMPTION TARGET VALUE OF THE DAY

#108 CORRECTION IS REQUIRED? — NO

YES

#109 CORRECT TARGET VALUE

#110 DETECT CONSUMPTION MEASURED VALUE

c

# FIG.14

( c )

#111 | COMPARE TARGET VALUE WITH MEASURED VALUE

#112 | DISPLAY ACTION GUIDE

#113 — URGENT STATE FOR ENERGY CONSERVATION? — NO

YES

#114 | EXECUTE ENERGY CONSERVATION FORCEDLY

( b )

#115 — ONE MONTH HAS PASSED? — NO

YES

#116 | CALCULATE ENERGY CONSERVATION EFFECT

#117 | CONVERT INTO AMOUNT

( a )

#118 | DEPOSIT ONLINE

FIG.15

EP 1 271 366 A1

53

## FIG.16

# FIG.17

## TA1

| MONTH | 1 | 2 | 3 | 4 | 5 | 6 | 7 | 8 | 9 | 10 | 11 | 12 |
|---|---|---|---|---|---|---|---|---|---|---|---|---|
| WATER TEMPERATURE | 8 | 7 | 9 | 12 | 16 | 20 | 22 | 24 | 23 | 18 | 15 | 11 |
| k | 1.42 | 1.46 | 1.38 | 1.25 | 1.08 | 0.92 | 0.83 | 0.75 | 0.79 | 1.00 | 1.12 | 1.29 |

# FIG.18

### TB1

| ITEM | TARGET | USAGE | ANNUAL ENERGY CONSERVATION EXPECTATION QUANTITY | ANNUAL ENERGY CONSERVATION EXPECTATION AMOUNT | FACILITY COST ( MAGNIFICATION ) |
|---|---|---|---|---|---|
| ENERGY CONSERVATION WATER-SAVING BATHTUB STEP | GAS | HOT WATER SUPPLY | 658 Mcal | 10.2 THOUSANDS YEN | 8 THOUSANDS YEN ( 1.0 OR LESS ) |
| | WATER SUPPLY | BATHING | 21.8 m³ | 3.3 THOUSANDS YEN | |
| DEVICE FOR UTILIZING HOT WATER IN BATHTUB AFTER TAKING BATH | GAS OR ELECTRIC POWER | HEATER | 363 Mcal | 5.7 THOUSANDS YEN | 30–60 THOUSANDS YEN ( 5.3–10.5 ) |
| | WATER SUPPLY | TOILET | 26.0 m³ | 4.0 THOUSANDS YEN | 30 THOUSANDS YEN |
| DOUBLE-GLAZED WINDOW | GAS OR ELECTRIC POWER | AIR CONDITIONER | 756 Mcal | 11.8 THOUSANDS YEN | 50– THOUSANDS YEN |
| RADIANT HEATER | GAS OR ELECTRIC POWER | HEATER | 360–720 Mcal | 5.6–11.2 THOUSANDS YEN | 300– THOUSANDS YEN |
| DEVICE FOR CUTTING POWER CONSUMPTION IN DORMANT STATE | ELECTRIC POWER | GENERAL | 720 kWH | 17.4 THOUSANDS YEN | 30 THOUSANDS YEN ( 1.7 ) |

EP 1 271 366 A1

# FIG.19

## TB2

| ITEM | TARGET | USAGE | ANNUAL ENERGY CONSERVATION EXPECTATION QUANTITY | ANNUAL ENERGY CONSERVATION EXPECTATION AMOUNT |
|---|---|---|---|---|
| WASHING IN TUB USING STORED WATER | WATER SUPPLY | UTILITY WATER | 55 m$^3$ | 10.5 THOUSANDS YEN |
| | GAS | HOT WATER SUPPLY | 675 Mcal | 8.2 THOUSANDS YEN |
| POWER SAVING OF WASTEFUL LIGHTING | ELECTRIC POWER | GENERAL | 755 kWH | 18.5 THOUSANDS YEN |

FIG.20

EP 1 271 366 A1

## FIG.21

### TB3

| ITEM | TARGET | USAGE | ANNUAL ENERGY CONSERVATION EXPECTATION QUANTITY | ANNUAL ENERGY CONSERVATION EXPECTATION AMOUNT | FACILITY COST ( MAGNIFICATION ) |
|---|---|---|---|---|---|
| REINFORCEMENT OF WINDOW INSULATION | ELECTRIC POWER | | 206 Mcal | 2.2 THOUSANDS YEN | 12 THOUSANDS YEN ( 5.5 ) |
| DITTO | DITTO | | 37.8 | 0.4 THOUSANDS YEN | 6 THOUSANDS YEN ( 15 ) |
| EQUIPMENT FOR CUTTING POWER CONSUMPTION IN DORMANT STATE | ELECTRIC POWER | GENERAL | 30–60 kW | 0.75–1.5 THOUSANDS YEN | 5–7 THOUSANDS YEN ( 4.7–7.7 ) |
| POWER SAVING DEVICE ( VOLTAGE REGULATION ) | ELECTRIC POWER | GENERAL | 210 kWh | 5.25 THOUSANDS YEN | 40 (7.6) |
| SHOWER HAVING ENERGY CONSERVATION EFFECT | GAS WATER SUPPLY | | – | – | 5–7 |
| TAP FOR SAVING WATER | WATER SUPPLY | UTILITY WATER | – | – | |

EP 1 271 366 A1

# FIG.22

## TB4

| TYPE | DEVICE | ENERGY CONSERVATION ACTION GUIDE | ANNUAL CONSERVATION QUANTITY | A | B |
|---|---|---|---|---|---|
| ELECTRIC POWER | REFRIGERATOR | KEEP CONTENTS APPROPRIATELY ( ONE THIRD OF INNER VOLUME ) | 6kWh | ◯ | |
| | | KEEP OPTIMAL TEMPERATURE | | ◯ | |
| | | SHORTEN TIME FOR OPENING DOOR | | ◯ | |
| | TV | SHORTEN WATCHING TIME ( SHORTEN 2HOURS / DAY ) | 110kWh | ◯ | |
| | | CUT OFF MAIN POWER SOURCE ( WITH REMOTE CONTROLLER 10HOURS / DAY ) | 11kWh | ◯ | |
| | AIR CONDITIONER | SHORTEN OPERATING TIME ( OPERATE 1HOUR / DAY , 70DAYS / YEAR ) | 49kWh | | ◯ |
| | | INCREASE TEMPERATURE OF 1℃ FOR COOLING | 27kWh | | ◯ |
| | | DECRESE TEMPERATURE OF 1℃ FOR HEATING | 205kWh | | ◯ |
| | LIGHTING | REPLACE INCANDESCENT LIGHT WITH FLUORESCENT LAMP ( FROM 60W TO 30W ) | 81kWh | ◯ | |
| GAS | HOT WATER SUPPLY | STOP LEAVING PILOT FLAME ON | 15??? | ◯ | |
| | BATH | BATHE WITHOUT TIME INTERVAL | | ◯ | |
| | | REHEAT BATH ON THE SECOND DAY | | | ◯ |
| WATER SUPPLY | WASHING MACHINE | USE REMAINED HOT WATER IN BATHTUB ( 10 TIMES / MONTH ) | 10800L | | ◯ |
| | TOILET | SINK BOTTLE CONTAINING WATER IN TANK ( 8 TIMES / DAY ) | 40L | ◯ | |
| | WASHING DISH | USE STORED WATER IN TUB | 67500L | ◯ | |
| | TEETH BRUSHING | STOP WATER TAP DURING BRUSHING ( 10L PER ONCE / 3 PEOPLE ) | 21900L | ◯ | |
| | SHAMPOO | USE SHOWER-HEAD ( WATER SAVING OF 40-60% ) ( 3 PEOPLE × ONCE / 2DAYS ) | 8736-13104L | ◯ | |

A : COMFORT IS KEPT WITHOUT DIFFICULTY.
B : COMFORT IS DETERIORATED TO SOME EXTENT.

## FIG.23

### TB5

| MANUFACTURER'S NAME | MODEL | HEAT COLLECTING AREA | WATER STORING VOLUME | GEOMETRY DIMENSIONS | PRICE |
|---|---|---|---|---|---|

| ENERGY CONSERVATION EXPECTATION QUANTITY | ENERGY CONSERVATION EXPECTATION AMOUNT | FACILITY COST |
|---|---|---|

## FIG.24

### TB6

| MANUFACTURER'S NAME |  |
|---|---|
| MODEL OF SOLAR CELL MODULE<br>CELL TYPE<br>MAXIMUM OUTPUT<br>OPTIMAL OPERATING CURRENT<br>OPTIMAL OPERATING VOLTAGE<br>SHORT CIRCUIT CURRENT<br>OPEN VOLTAGE<br>WEIGHT<br>DIMENSIONS | <br><br>( W )<br>( A )<br>( V )<br>( A )<br>( V )<br>( kg )<br>( mm ) |
| INVERTER SYSTEM LINKAGE DEVICE<br>RATED CAPACITY<br>INPUT OPERATION VOLTAGE RANGE<br>LINKAGE POINT ELECTRICAL MODE<br>ELECTRIC POWER CONVERSION EFFICIENCY<br><br>WEIGHT<br>DIMENSIONS | <br>( kW )<br>( V )<br><br><br>( % )<br>( kg )<br>( mm ) |
| SYSTEM PRICE | |
| ENERGY CONSERVATION EXPECTATIION QUANTITY | |
| ENERGY CONSERVATION EXPECTATION AMOUNT | |
| FACILITY COST | |

# FIG.25

## TC1

| ITEMS \ MONTH | | 1 | 2 | 3 | 4 | 5 | 6 | 7 | 8 | 9 | 10 | 11 | 12 | TOTAL SUM |
|---|---|---|---|---|---|---|---|---|---|---|---|---|---|---|
| POWER GENERATION QUANTITY / MONTH | | 104 | 123 | 160 | 216 | 225 | 161 | 238 | 220 | 160 | 132 | 97 | 113 | 1949 kWh |
| RATIO OF YEAR | | 5.3 | 6.3 | 8.2 | 11.1 | 11.5 | 8.2 | 12.2 | 11.3 | 8.2 | 6.8 | 5.0 | 5.8 | 1 |
| | | | | | | | | | | | | | | |
| THE NUMBER OF DAYS OF FINE WEATHER | | | 19 | 16 | 19 | 13 | 5 | 17 | 12 | 14 | 12 | 15 | 26 | |
| POWER GENERATION QUANTITY | FINE WEATHER | | 5 | 6–7 | 8–9 | 9–11 | 9 | 10–11 | 7–10 | 6–8 | 5–6 | 4–5 | 3–4 | kWh/DAY |
| DITTO | CLOUDY WEATHER | | 4 | 4 | 7 | 4–6 | 5 | 5–6 | 5–6 | 4–5 | 3–4 | 3 | 3 | kWh/DAY |
| DITTO | RAINY WEATHER | | 2–4 | 2–3 | 3–6 | 5–6 | 2–4 | 3 | 3–4 | 2–3 | 2 | 2 | 2 | kWh/DAY |
| | | | | | | | | | | | | | | |
| AVERAGE POWER GENERATION QUANTITY / DAY | | 3.35 | 4.40 | 5.16 | 7.20 | 7.26 | 5.37 | 7.68 | 7.10 | 5.33 | 4.26 | 3.23 | 3.65 | kWh/DAY |
| VARIATION OF POWER GENERATION QUANTITY DUE TO WEATHER CONDITION | FINE WEATHER | | 1.14 | 1.26 | 1.25 | 1.31 | 1.67 | 1.37 | 1.39 | 1.31 | 1.29 | 1.39 | 0.96 | COEFFICIENT MULTIPLIED BY AVERAGE POWER GENERATION QUANTITY |
| | CLOUDY WEATHER | | 0.9 | 0.78 | 0.97 | 0.69 | 0.93 | 0.72 | 0.79 | 0.84 | 0.82 | 0.92 | 0.82 | |
| | RAINY WEATHER | | 0.68 | 0.48 | 0.62 | 0.75 | 0.56 | 0.39 | 0.49 | 0.47 | 0.47 | 0.62 | 0.55 | |
| | | | | | | | | | | | | | | |
| APPROXIMATE COEFFICIENT | FINE WEATHER k1 | 1.10 | 1.10 | 1.25 | 1.25 | 1.25 | 1.60 | 1.40 | 1.40 | 1.30 | 1.30 | 1.30 | 1.10 | DITTO ( DETERMINE TARGET OF POWER GENERATION QUANTITY ) |
| | CLOUDY WEATHER k2 | 0.8 | 0.8 | 0.8 | 0.8 | 0.8 | 0.9 | 0.8 | 0.8 | 0.8 | 0.8 | 0.8 | 0.8 | |
| | RAINY WEATHER k3 | 0.6 | 0.6 | 0.6 | 0.6 | 0.6 | 0.5 | 0.5 | 0.5 | 0.5 | –.5 | 0.6 | 0.6 | |

EP 1 271 366 A1

## FIG.26

ASSUMPTION OF INSTALLATION COST AND POWER
GENERATION COST OF SOLAR CELL

EP 1 271 366 A1

# FIG.27

| USAGE / ENERGY TYPE | | AIR CONDITIONER | HOT WATER SUPPLY | LIGHTING MOTIVITY etc. |
|---|---|---|---|---|
| ELECTRIC POWER | NONUSE OF MIDNIGHT ELECTRIC POWER | YES | | ·YES |
| | USE OF MIDNIGHT ELECTRIC POWER | | GRAB INDEPENDENTLY WITH ELECTRIC POWER METER | |
| GAS | | YES | YES | |
| WATER SUPPLY | | YES | | |

64

**FIG.28**

```
        ┌──────────┐
        │  START   │
        └──────────┘
              │
#141  ┌─────────────────────┐
      │ SET CONSUMPTION TARGET │
      │  VALUE BY ENERGY TYPE  │
      └─────────────────────┘
              │
#142  ┌─────────────────────┐
      │ CONVERT INTO LIGHTING /│
      │    HEATING COST        │
      └─────────────────────┘
              │
#143  ┌─────────────────────┐
      │ SET TARGET LIGHTING /  │
      │ HEATING COST ( TOTAL SUM )│
      └─────────────────────┘
              │
#144  ┌─────────────────────┐
      │  MEASURE CONSUMPTION   │
      │   MEASURED VALUE       │
      │   BY ENERGY TYPE       │
      └─────────────────────┘
              │
#145  ┌─────────────────────┐
      │ CONVERT INTO LIGHTING /│
      │    HEATING COST        │
      └─────────────────────┘
              │
#146  ┌─────────────────────┐
      │  CALCULATE RECORDED    │
      │ LIGHTING / HEATING COST│
      │    ( TOTAL SUM )       │
      └─────────────────────┘
              │
#147  ┌─────────────────────┐
      │ COMPARE TARGET LIGHTING /│
      │ HEATING COST WITH RECORDED│
      │  LIGHTING / HEATING COST │
      └─────────────────────┘
              │
#148  ┌─────────────────────┐
      │   DISPLAY ENERGY       │
      │ CONSERVATION ACTION GUIDE│
      └─────────────────────┘
              │
#149         ◇
        URGENT STATE FOR      NO
       ENERGY CONSERVATION? ──────┐
             │ YES               │
#150  ┌─────────────────────┐    │
      │   EXECUTE ENERGY       │   │
      │ CONSERVATION FORCEDLY  │   │
      └─────────────────────┘    │
              │◄─────────────────┘
        ┌──────────┐
        │   END    │
        └──────────┘
```

## FIG.29

```
                    ┌──────────────┐
                    │    START     │
                    └──────────────┘
                           │
#201        ┌─────────────────────────────┐
            │   ENTER CONSUMPTION         │
            │     BY ENERGY TYPE          │
            │      IN THE PAST            │
            └─────────────────────────────┘
                           │
#202        ┌─────────────────────────────┐
            │      CALCULATE              │
            │    CONSUMPTION OF           │
            │     EACH MONTH              │
            │    BY ENERGY TYPE           │
            └─────────────────────────────┘
                           │
#203        ┌─────────────────────────────┐
            │    CONVERT INTO             │
            │  LIGHTING / HEATING         │
            │        COST                 │
            └─────────────────────────────┘
                           │
#204             ENERGY CONSERVATION        NO
                 DEVICE SHOULD BE ──────────────┐
                    INSTALLED?                   │
                       │ YES                 #206 │
#205        ┌─────────────────────┐    ┌──────────────────┐
            │   SELECT ENERGY     │    │  SET TARGET OF   │
            │ CONSERVATION DEVICE │    │     EFFORT       │
            └─────────────────────┘    └──────────────────┘
                       │
#207        ┌─────────────────────┐
            │   PREDICT ENERGY    │
            │   CONSERVATION      │
            │     EFFECT          │
            └─────────────────────┘
                       │
#208        EFFECT IS SUFFICIENT?   NO
                       │ YES
#209        ┌─────────────────────┐
            │  SET TARGET VALUE OF│
            │  LIGHTING / HEATING │
            │   COST BY ENERGY    │
            │    TYPE OF THE      │
            │   PRESENT MONTH     │
            └─────────────────────┘
                       │
#210        ┌─────────────────────┐
            │  SET TARGET LIGHTING│
            │ / HEATING COST OF   │
            │ THE PRESENT MONTH   │
            │   ( TOTAL SUM )     │
            └─────────────────────┘
                       │
                      (1)
```

```
                      (1)
                       │
#211        ┌─────────────────────┐
            │  SET TARGET LIGHTING│
            │ / HEATING COST OF   │
            │      THE DAY        │
            └─────────────────────┘
                       │
#212           CORRECTION IS      NO
               REQUIRED? ──────────────┐
                       │ YES           │
#213        ┌─────────────────────┐    │
            │   CORRECT TARGET    │    │
            │  LIGHTING / HEATING │    │
            │       COST          │    │
            └─────────────────────┘    │
                       │◄──────────────┘
                 ┌──────────────┐
                 │     END      │
                 └──────────────┘
```

66

FIG.30

ENERGY CONSUMPTION

PREDICTED TEMPERATURE
( ATMOSPHERIC TEMPERATURE )

# FIG.31

EP 1 271 366 A1

# FIG.32

69

# FIG.33

```
                    ┌─────────────────┐
                    │      START      │
                    └─────────────────┘
                             │
                             ▼
#301        ┌─────────────────────────────┐
            │    OPERATE EQUIPMENT        │
            │     TO BE MEASURED          │
            └─────────────────────────────┘
                             │
                             ▼◄──────────────────┐
#302               ╱◇╲                           │
                ╱       ╲                         │
            ╱   MEASURMENT PERIOD  ╲     NO       │
            ╲     HAS PASSED?      ╱─────────────►│
                ╲       ╱                         │
                   ╲◇╱                            │
                  │ YES                           │
                  ▼                               │
#303        ┌─────────────────────────────┐      │
            │    READ INTEGRATING METER   │      │
            └─────────────────────────────┘      │
                  │                               │
                  ▼                               │
#304        ┌─────────────────────────────┐      │
            │         STORE DATA          │      │
            └─────────────────────────────┘      │
                  │                               │
                  ▼                               │
#305               ╱◇╲                           │
                ╱       ╲                         │
            ╱     TEST MODE IS    ╲     NO        │
            ╲      FINISHED?      ╱───────────────┘
                ╲       ╱
                   ╲◇╱
                  │ YES
                  ▼
            ┌─────────────────┐
            │       END       │
            └─────────────────┘
```

70

## INTERNATIONAL SEARCH REPORT

| International application No. |
|---|
| PCT/JP00/05500 |

**A. CLASSIFICATION OF SUBJECT MATTER**
Int.Cl⁷  G06F17/60

According to International Patent Classification (IPC) or to both national classification and IPC

**B. FIELDS SEARCHED**

Minimum documentation searched (classification system followed by classification symbols)
Int.Cl⁷  G06F17/60, G06F19/00

Documentation searched other than minimum documentation to the extent that such documents are included in the fields searched
Jitsuyo Shinan Koho        1926-1996    Jitsuyo Shinan Toroku Koho  1996-2000
Kokai Jitsuyo Shinan Koho  1971-2000    Toroku Jitsuyo Shinan Koho  1994-2000

Electronic data base consulted during the international search (name of data base and, where practicable, search terms used)
JICST FILE(JOIS)
INSPEC(DIALOG)

**C. DOCUMENTS CONSIDERED TO BE RELEVANT**

| Category* | Citation of document, with indication, where appropriate, of the relevant passages | Relevant to claim No. |
|---|---|---|
| Y | JP, 11-66175, A (Hitachi, Ltd.), 09 March, 1999 (09.03.99), Full text; Figs. 1 to 14   (Family: none) | 1-30,38-49 |
| Y | JP, 8-50501, A (TAKENAKA CORPORATION, Yamatake Honeywell Co., Ltd.), 20 February, 1996 (20.02.96), Full text; Figs. 1 to 6   (Family: none) | 1-30,38-49 |
| Y | JP, 5-18995, A (The Tokyo Electric Power Company, Incorporated), 26 January, 1993 (26.01.93), Full text; Figs. 1 to 4   (Family: none) | 4,21,44,46 |
| Y | JP, 11-119846, A (OMRON CORPORATION), 30 April, 1999 (30.04.99), Par. No. [0032]   (Family: none) | 6 |
| Y | JP, 9-22432, A (Hitachi, Ltd.), 21 January, 1997 (21.01.97), Full text; Figs. 1 to 11   (Family: none) | 28-30,38-49 |
| Y | JP, 10-49552, A (SHIMIZU CORPORATION), 20 February, 1998 (20.02.98), | 45 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 October, 2000 (16.10.00) | 24 October, 2000 (24.10.00)+ |

| Name and mailing address of the ISA/ | Authorized officer |
|---|---|
| Japanese Patent Office | |
| Facsimile No. | Telephone No. |

Form PCT/ISA/210 (second sheet) (July 1992)

INTERNATIONAL SEARCH REPORT

| International application No. |
| --- |
| PCT/JP00/05500 |

C (Continuation).   DOCUMENTS CONSIDERED TO BE RELEVANT

| Category* | Citation of document, with indication, where appropriate, of the relevant passages | Relevant to claim No. |
| --- | --- | --- |
| | Full text; Figs. 1 to 18   (Family: none) | |
| A | JP, 9-259203, A (Fujitsu Limited), 03 October, 1997 (03.10.97), Full text; Figs. 1 to 21   (Family: none) | 9,42 |
| A | JP, 2-270062, A (Shigeru GOTO, Takehiro TANAKA, Yamatake Honeywell Co., Ltd.), 05 November, 1990 (05.11.90), Full text; Figs. 1 to 4   (Family: none) | 28-30,38-49 |
| PX | JP, 11-328152, A (Toshiba Corporation), 30 November, 1999 (30.11.99), Full text; Figs. 1 to 8   (Family: none) | 1,3,10,11,16 |

Form PCT/ISA/210 (continuation of second sheet) (July 1992)

**INTERNATIONAL SEARCH REPORT**

| International application No. |
| --- |
| PCT/JP00/05500 |

**Box I    Observations where certain claims were found unsearchable (Continuation of item 1 of first sheet)**

This international search report has not been established in respect of certain claims under Article 17(2)(a) for the following reasons:

1. ☒ Claims Nos.: 31-37
   because they relate to subject matter not required to be searched by this Authority, namely:

   The inventions of claims 31-37 relate to a procedure including steps of performing energy saving in a household by a person, and consequently relate merely to a man-made prescript to perform energy saving in a household as a whole.  Therefore they relate to schemes, rules, or methods of doing business, purely mental acts, or playing games.

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

   The inventions of claims 1-27 relate to the idea of comparing the target value with the measured value of energy consumption to specifically grasp the energy consumption in a household.

   The inventions of claims 28-30, 38-49 relate to the idea of comparing the reduction of economic burden achieved by the energy-saving effect with the time payment of the facility expense when energy-saving equipment is introduced into a household.

   The inventions of claims 28-30, 38-49 do not involve the same or corresponding special technical features as those of claims 1-27, and therefore these inventions are not united into one invention nor so linked as to form a single general inventive concept.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.
                         ☐    No protest accompanied the payment of additional search fees.

Form PCT/ISA/210 (continuation of first sheet (1)) (July 1992)